# EUROPEAN PATENT APPLICATION

(11) **EP 1 688 851 A2**
(43) Date of publication of application: **09.08.2006**
(21) Application number: 06007712.0
(22) Date of filing: 01.08.1997
(51) Int. Cl.: G06F 17/30

(54) **Data retrieval system and method**

(30) Priority: 02.08.1996 US 691263; 03.02.1997 US 794782; 28.03.1997 US 827263
(62) Divisional of application: 00203029.4
(71) Applicant: SYMBOL TECHNOLOGIES, INC., Holtsville, New York 11742-1300 (US)
(72) Inventor: Klein, John, Morgan Hill California 95037 (US); Herrod, Allan, Farmingville New York 11738 (US); Woloschin, Steve, Smithtown New York 11787 (US); Mulla, Altaf, Merrick New York 11566 (US); Sanders, Robert, Bayport New York 11705 (US); Lert, John, Westport CT 06880 (US); Katz, Joseph, Stony Brook New York 11790 (US); Tan, Chinh, Centereach New York 11720 (US); Patel, Mehul, Commack New York 11725 (US); Swartz, Jerome, Old Field New York 11733 (US); Barkan, Edward, Miller Place New York 11764 (US); Sheppard, Howard, Great River New York 11739 (US); Swift, Philip, Winchester Massachusetts 01890 (US); Jwo, Chin-Hung, Mount Sinai New York 11766 (US)
(74) Representative: Maiwald Patentanwalts GmbH

(57) **Abstract**

Various problems arise In accessing the internet For example, internet files have complex file addresses which are prone to incorrect entry by a user, giving rise to access of unwanted files. In one aspect the invention solves this problem by encoding the file address in a bar code symbol, decoding the bar code symbol and accessing the relevant file automatically.

## Description

### BACKGROUND OF THE INVENTION

### Field of the Invention

The invention relates to improvements in data retrieval.

### Description of the Related Art

Various readers and optical scanning systems have been developed for reading printed indicia such as bar code symbols appearing on a label or the surface of an article and providing information concerning the article such as the price or nature of the article. The bar code symbol itself is a coded pattern of indicia comprised of, for example, a series of bars of various widths spaced apart from one another to form spaces of various widths, the bars and spaces having different light reflecting characteristics. The readers electro-optically transform the graphic indicia into electrical signals which are decoded into alpha-numeric characters that are intended to be descriptive of the article or a characteristic thereof. Such characters typically are represented in digital form, and utilized as an input to a data processing system for applications in point of sale processing, inventory control and the like.

Known scanning systems comprise a light source for generating a light beam incident on a bar code symbol and a light receiver for receiving the reflected light and decoding the information contained in the bar code symbol accordingly. The readers may comprise a flying spot scanning system wherein the light beam is scanned rapidly across a bar code symbol to be read or a fixed field of view reading system wherein the bar code symbol to be read is illuminated as a whole and a CCD (Charge Coupled Device) array is provided for detecting the light reflected from the bar code symbol.

Known hand-held optical readers are often in the shape of a gun having a handle portion and a barrel portion. The reading window through which the light beam passes is generally located at the end face of the barrel portion, and the reader is aimed at the indicia to be read by the operator holding the handle portion. A trigger is situated in the region of the junction between the handle portion and the barrel portion for operation by the user to actuate the optical reader.

In addition there are known portable hand-held computers for collecting data and down-loading the data to a central or peripheral device. The down-loaded data may be raw data or data that has been processed within the hand-held computer. Data collection can be carried out by entering information to the hand-held computer via a keypad, or by incorporating in the computer an optical reader for example for reading bar code symbols, or incorporating a reader for reading a magnetic card strip. For example when information about various products is required during inventorying, those products may bear bar code symbols or magnetic strips, or have associated magnetic strip cards which are read by the hand-held computer. The data collected can be transferred from the hand-held computer to a central or peripheral device by known means such as radio frequency radio links, wired connections, infra-red communications or other known transmission arrangements.

Often, more than one data capture system is required for a given application. The manufacture of a customized system for a specific application is expensive and difficult to modify if it is subsequently desired to incorporate further data capture options than those originally provided in the customized device.

In addition, traditional electronic mail or message delivery services provided on conventional operating environments (for example BSD Unix, SCO Unix) have employed a simple mail box scheme where each user receives messages in a specific mail box or directory. Each machine or host runs its own copy of the mail delivery service and each user therefore receives messages on a particular machine as a result of which each machine is required to provide local storage and data duplications occur frequently. To mitigate this problem a proposed solution within computer networks having a static configuration has been to offer network file systems providing a unified access mechanism to storage space across the network regardless of a particular machine. Because the relevant files are retained at a single location, the system provides users a unified access to mail boxes and prevents user data duplication on individual machines.

With the advent of portable hand-held computer devices which communicate with a central computer, or host by wireless communication a problem has arisen. Generally the device communicates with an access point which is in direct communication with the host. As the device is physically moved, it must re-associate with access points to the host as it moves outside the range of one access point and into the range of another. The problem is further exacerbated when the device is moved from one basic service area to another in which case a permanent network mail system cannot be guaranteed either physically or logically.

Currently known electronic mail delivery services include at most two independent "tasks": mail user agent and mail transfer agent. Mail user agent provides user interface to the service and mail transfer agent deals with the reception and storage of messages in user mail boxes. The tasks generally operate independently, mail user agent being unaware of mail transfer agent status and simply having access to information about mail box details for each user. As discussed above, although the scheme is appropriate when mail boxes are permanently placed or mounted in a file system and accessible by all machines of a network, when a portable wireless hand-held system roams the local area and moves from one basic service area (file system) to another basic service area, the scheme does not operate reliably.

Typical examples of known mail delivery systems are discussed in, for example Sunexpert Magazine of April 1994 in an article entitled "Sendmail" by Peter Collinson. A message is input to mail user agent and dealt with by mail transfer agent. On large networks the various tasks are carried out by a mail hub machine to which all mail on a network is sent for processing. The system can be enhanced by introducing the possibility of expanding mailing lists, running mail through programs and automatic transfer of mail between certain users. A system becomes progressively more complex as it moves from local mail to mail on the Internet to mail between networks.

Further limitations are imposed because of the limited storage capability of hand-held computers (often known as personal digital assistants) as a result of which simple-store-and-forward, multi-user electronic message systems are generally impractical.

To operate on a wireless network, mobile units (MUs) must have a domain in order for them to associate with the access points (APs) in an access point group (APG). An APG is a group of one or more access points connected on the same router on the same network. All access points in the same APG are identified by the same domain. This allows the access points in one APG to communicate over the network without conflicting with other APGs on the same network.

The disadvantage of prior art domain assignment protocols is that some MUs may be used on multiple APGs, and possibly on multiple networks. Use of a mobile unit on multiple APGs would require changing the domain of the MU to allow it to communicate via the appropriate APG at the appropriate time. Use of a mobile unit on multiple networks might also require changing the domain, since the APGs on the new network might be in a different domain.

Further, when a TCP/IP stack is used (transmission control protocol/internet protocol), each network node must have a unique IP address for that network. The set of TCP/IP protocols typically encompasses media access, packet transport, session communications, file transfer, electronic mail, and terminal emulation. IP addresses for different networks need not be unique. If multiple networks are connected and nodes communicate across all networks, then the nodes require IP addresses that are unique across the expanded network.

In summary, each access point on a network must have a unique IP address for that network. Each mobile unit on a network, despite the domain it is using, must have a unique IP address for that network. Mobile units can be used on multiple networks. Use on multiple networks generally requires changing the IP address of the MU since the IP address currently in use by the MU might be in use by another MU on the new network or might not conform to the IP address conventions used by the new network.

Consequently, a system is required for assigning domains and IP addresses to mobile units to cover a variety of configurations and many different types of mobile units. Specifically, a system is required to allow for the assignment of domains and IP addresses to mobile units in ways that are sufficiently flexible to support installations where MUs are fixed to specific APGs on specific networks and where MUs travel among different APGs, and possibly among different networks, such as Spectrum One and Spectrum24 (Trademarks of Symbol Technologies Inc.) networks.

According to another aspect it has previously been proposed to implement a bar code scanner resident on a control machine running a COMPONENT OBJECT MODEL (COM) object. It is desired to increase the scope of such applications to be compatible with a wide range of models and in particular to introduce a bar code scanner remote from the machine and controlled through a wireless interface.

Pending European patent application 485,996 discloses, inter alia, a system for the replacement of depleted inventory using a system in which the replacement inventory items are labelled with bar coded ultimate-destination information, and packed into a container for shipment to a receiving/distribution centre.

It is known in general to make use of a two-dimensional bar code symbol, on the exterior of a container, to indicate what is inside: see Material Handling Engineering, October 1992, article entitled "New Dense Code Symbology Transports Data File".

The Internet computer network is gaining ever increasing significance in the world of science, technology, information and commerce amongst many others. The Internet will be well known to the skilled reader but, in brief summary, comprises a network of computers practically worldwide and accessible from any access point suitably linked to retrieve information contained in the Internet. Various sub-networks exist within the Intemet, one of the best known of which is the worldwide web.

Information is commonly stored on the Internet in the form of "pages" often comprising a "home page" relating to a general site and providing guidance and access to the contents at that site, the contents being contained in "sub-pages". A site includes a unique Internet Protocol address or Universe Resource Locator (URL). The site can thus be accessed from any access point to the Internet by entering the relevant address and displaying the site held at that address. The user accesses the Internet via a client computer, for example a PC linked to the Internet. The link will typically be via a modem and telephone line and a service provider or server acts as intermediary, the client accessing the Internet via the server. In addition, the server allows the user to set up an Internet site. It will be appreciated that the server generally comprises a fixed station. Such an arrangement can give rise to an unnecessary level of inflexibility. In particular it is often time consuming and unnecessarily complex to have to access the fixed station server to set up or access an Internet site.

Various developments to Internet related systems have been disclosed in US patents. For example US 5,550,984 relates to a security system for connecting computer networks, US 5,544,162 relates to a bridge for connecting parallel processors to the external environment, US 5,517,494 relates to a routing protocol for multicast messages across the Intemet, US 5,416,842 relates to message transmission between firewall servers, US 5,410,754 relates to an interface between a wire line carrier and a remote host on a Local Area Network (LAN), US 5,400,335 relates to an Integrated Services Digital Network (ISDN) - LAN connection terminal, US 5,353,283 relates to packet transmission across a series of modes in a network, US 5,351,237 relates to a network of LAN's connected to an ISDN including a plurality of routers/ sub-routers. US 5,309,437 relates to a bridge-type device for coupling segments of an extended LAN, US 5,289,468 relates to a terminal adapter for connecting a LAN and a Wide Area Network (WAN) using an Internet Standard Protocol, US 5,276,789 relates to graphically displaying computer network topology, US 5,229,988 relates to a system for classifying duplicate source address replies, US 5,185,860 relates to a system for determining the nodes connected to a computer network and US 5,166,931 relates to a system for an inter-network arranged to simplify the network addressing system. US 5,442,633 relates to a method for routing a data packet between a mobile host and a destination host via a wireless link between the mobile host and a base station. The base station acts as a physical location of the mobile host and is linked to the network via a LAN subnetwork.

The mechanism of file name translation across a distributed network are known, for example, from US 5,483,652, incorporated herewith by reference.

A range of products have been developed by Spyglass Inc. enhancing the Internet connectivity of existing devices. In particular these products are designed to connect electronic products to the worldwide web such as cellular phones, cable T.V. set-top boxes, televisions, personal digital assistants and pagers, providing the infrastructure, applications and services to allow these devices browsing capability across the Internet. One such product is available under the trade mark REMOTE MOSAIC which converts browsing into a client service operation in which lightweight "viewers" are custom-integrated into devices which connect to a 'proxy browser' on a remote server. The proxy browser handles applications demanding excessive process or memory capabilities such as caching and connects the device to other servers.

In another aspect there are numerous situations in which an instantaneous image of a scene or object is of considerable use and importance, for example in insurance claims documentation where it is vital to document as accurately and completely as possible the circumstances against which the insurance claim is made. Conventionally details are documented either in writing or by taking photographs using a film camera. This information is then subsequently entered with all other information relating to the insurance claim. Such a system is time consuming and error-prone, in particular because of the subsequent re-entry of information and transfer of the physical photograph to the relevant file. Similar problems arise, for example, in news coverage of an incident, police or other authorities' incident reports and so forth.

US 5,583,994 relates to a multimedia information delivery network system. A wide area transmitter transmits the multimedia programs which are received by a plurality of network servers for re-transmission to downstream network servers or a user. The programs are cached at the network servers as determined by a scheduler for efficient delivery of the multimedia program to each user.

In another aspect, data terminals connected to the Internet are conventionally required to download applets in an appropriate agent implementation language from a host which is a complex and slow process.

There are several different types of bar code readers. A first type, a wand 8, contains an emitter 10 and a detector 12, and the user manually moves the wand across the bar code. The detector 12 senses the light reflected from a spot scanned by the wand 8 across the bar code 2, and produces an electrical signal representing the encoded information to processor means 14. Wands have been disclosed, for example in U.S. Patent Nos. 4,654,482, 4, 907,264 and 4,937,853.

A document of particular relevance is US Patent No. 4,471,218 which discloses a data wand and a data well, and is incorporated herein by reference. According to the specification a wand-type data entry terminal is entirely self-contained and cordless, and includes reading and storage circuitry. The terminal further allows down-loading of the interface using an optically coupled link. Preferably the stored data is output using a pulsed beam from the reading beam light source. The output beam is detected by an optical detector and decoded appropriately.

The discloses of the above mentioned references are incorporated herein by reference. The general features of construction and operation of a wand type reader will be apparent to the skilled reader.

According to another system described in US Application Serial No. 08/691,263, filed August 2, 1996, commonly assigned herewith, a hand-held optical reader terminal is provided having an ergonomic design. According to that system there is provided, inter alia, a hand-held optical reader arranged to fit in the hand of a user and including a reader component and a down-loading component. The device can include a display screen and a display screen for displaying control messages or video images, a keypad for inputting control or other data and a wireless communication link for down-loading data read by the reader component to an external device. The system can further include a plurality of interchangeable data collection modules connectable to the main body of the device, each module fulfilling a different function such as image/video capture, audio capture and so forth. As a result a simple mufti-media module is provided.

It is desired, however, to arrive at a light weight hand-held data reader having a yet wider range of capabilities.

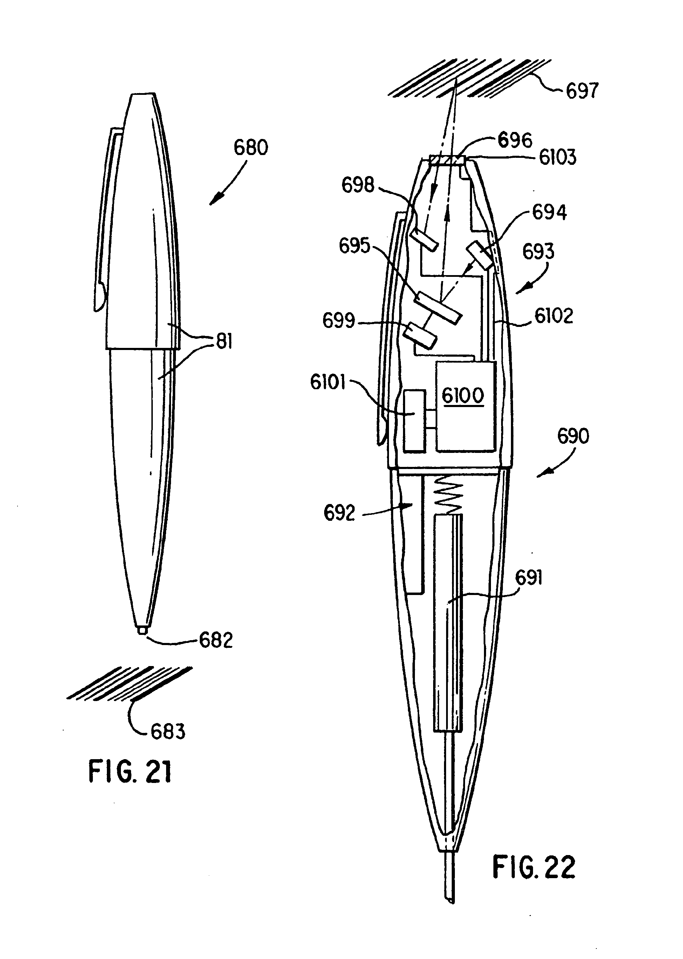

In view of the relative simplicity, availability and adaptability of information systems including bar code symbol data storage capability, it is desirable to develop systems particularly suitable for consumer applications. A wand-type optical reader which has many consumer applications is shown in Fig. 21. The arrangement, generally designated as 680 comprises a pen-shaped main body 681 having at its writing end an optical scanner element light emitter and detector 682 for reading a bar code symbol illustrated schematically as 683. The pen may also include actual writing capability, for example by having the writing nib adjacent the optical element 682 or, indeed, having the writing element and the optical element 682 at opposing ends. It is desired to increase the range of applications for such a product. The data processing capabilities of such a system 680 are limited by its physical size and power supply potential consequently limiting the range of applications of the arrangement. In addition various problems arise in actual operation of such a system, in particular in regulating the varying speeds at which consumers scan a given bar code symbol 683.

Conventional portable data terminals comprise a data display, data input means such as a keyboard and data storage and processing means. A wide range of applications are now available on such terminals including word-processing, spread-sheeting, data base applications and so forth. Much of the development work in known portable data terminals is centred on increasing the data storage and processing capabilities. This has led to increases in cost and size/weight (and the corresponding need to subsequently miniaturise components) together with increased complexity leading to increased potential for defect or breakdown.

In another aspect, US 5410326 relates to a programmable remote control device for interacting with a plurality of remotely controlled devices. The remote control device is configured to control a variety of devices and carries pictorial icons representing the different functions for selection by the user. The device is further configured to receive and display advertising messages, and operate various other functions such as electronic mail and order-out meal delivery. The system is, however, complex and cumbersome and of limited adaptability.

US 5,521,370 relates to a hand-held portable data capture terminal for example for warehousing, which is mountable in a terminal mount for data communication with a host computer and/or battery recharging. The specification is directed to a data interface between the terminal and the terminal mount comprising abutting electrical contact pads. The terminal is arranged only to communicate with the terminal mount when it is docked therein. The terminal carries a processor and memory system serving as a communication controller and can be arranged to act as network controllers when docked. A difficulty with such a system is that a considerable processing and memory capability is included in the hand-held terminal and that data is only downloaded when the terminal is docked in terminal mount.

US 5,280,621 relates to a control system for a personal computer. In conventional personal computers a system control processor provided an interface between the host processor and peripheral such as a keyboard. System performance was limited because of the slow communication rate between the system control processor and the keyboard, and was further degraded when the system control processor handled additional control burdens such as battery power management, external bus expansion control and so forth. According to US 5,280,621 it is proposed to introduce microcontrollers to provide communication between respective peripheral devices and the system control processor, freeing the system control processor to do other tasks improving the overall system performance.

The question of power management in portable devices has been addressed in various manners conventionally. US 5,027,294 relates to monitoring the voltage discharge of a battery power supply in which the user is issued warnings at various depletion levels allowing memory back-up, avoidance of over-depletion and so forth. US 5,504,413 recites a battery charging system including feedback input allowing minimisation of overhead voltage levels, and connection of a recharging device to a peripheral device via a port at the recharger US 5,487,181 refers to power minimisation providing a main processor and a lower power processor which allows the main processor to "sleep" except when required. The lower power processor carries out various minor functions allowing the main processor to sleep as far as possible whilst being awoken as soon as required. US 5,511,205 relates power management in a portable pen-based notebook computer. The system has a plurality of independently controllable power planes selectively powerable to ensure that a particular task is performed with minimum power consumption. In addition separate CPU's operate synchronously in relation to one another reducing the amount of processing time the main CPU is required to dedicate to the power management function.

### SUMMARY OF THE INVENTION

### Objects of the Invention

It is an object of the present invention to provide an arrangement comprising a further improvement over the prior art.

### Features of the Present Invention

In one aspect a reader is provided having a housing and an information display may be situated on the upper face of the housing.

A keypad may be provided on the upper face of the housing, allowing information concerning the operator's identity mode of operation and so forth to be entered. An acoustic modem may be provided for up-loading and/or down-loading information read by the reader, and/or an interface connector may be provided for connecting the reader to a central computer for up-loading or down-loading information, and/or a radio transmitter may be provided for transmitting information to a remote receiver, and/or a radio receiver may be provided for receiving information from a remote transmitter. In any case, information may be transferred to a central storage device allowing space reductions on the reader itself.

The reading arrangement may be a "flying spot" optical scanner or a "field of view" optical reader.

The reader may be configured for connection with the Internet. In particular, the reader may be arranged to read and decode a bar code symbol representing a network site address, for example a worldwide web URL. Access to such sites is thus simplified for the user.

According to the invention there is further provided a portable computer device comprising a main body and at least one data collection/communications module connectable to the main body, the main body including an interface for connection with the module, a processor for processing information received from the module and a communication link for exchanging information with a host. Because of the modular arrangement the device may be easily adapted to different applications without the requirement to manufacture costly customized systems or to modify such systems which would prove expensive and complex.

The main body may include a visual display, for example an LCD display. The main body may also comprise a keypad. The modules may comprise an image capture module, a laser scanner module and/or a multi-media module. The modules preferably include digital signal processing sub-systems which may be of a single design and programmable as appropriate. The modules may comprise pre-processors for pre-processing information prior to transfer to the main body to reduce the burden on the processor in the main body. The module may be movably mounted on or relative to the main body, and in particular to the display on the main body - for example it may be hinged pivotally or rotatably mounted.

The device may be configured for connection with the Internet.

According to the invention there is further provided an electronic mail delivery system comprising a server portion and a client portion, the client portion comprising at least one user interface terminal wherein the client portion is arranged, on receipt of a query by a specific user, to interrogate the server portion for messages stored by the user portion addressed to the specific user. The system is thus suitable for use even in systems where the client portion is moved physically between basic service areas.

The client portion and the server portion may communicate by wireless communication. The client portion may comprise one or more portable computer devices.

The client portion may be arranged to receive messages input by a specific user and to communicate those messages to the server portion for storage at the server portion.

The client portion may be arranged to play-back a message and to determine whether the message is a visual message or an audio message and to play back the message accordingly. The system may form part of, or be configured for connection with the Internet.

Preferably the server portion and the client portion are provided on a local network arranged to communicate with other local networks including a server portion and a client portion via server-server communication, the mail delivery system being distributed between the local networks.

According to the invention there is further provided a method of operation of an electronic mail delivery system including a server portion and a client portion, the client portion and server portion being in communication, in which a user inputs a query to the client portion, the client portion interrogates the server portion, the server portion transmits to the client portion any messages stored in the server portion specific to the user and the client portion plays back the messages.

The user may input a message to the client portion for storage by the server portion, the client portion may communicate the message to the server portion and the server portion may store the message.

The client portion may display user options for selection by the user including the options of storing a message, retrieving a message, selecting the manner of display of the options and selecting the manner of playback. The options may be retrieved from the server portion by the client portion upon initialization of the client portion.

According to the invention there is provided a communication system for a bar code scanner comprising a control host, a scanning control object working therein and a remote client associated with the bar code scanner wherein the scanning control object communicates with the remote client to control the bar code scanner and the scanning control object is implemented as an OLE control. Accordingly there is provided a system capable of seamless communication between the scanning control and the remote client.

The host and the scanning object control may communicate and integrate via interfaces. The scanning control object may create separate threads of execution for controlling communication with the remote client. The separate threads of execution may include send, receive and synchronize bar code scanner transaction commands.

The scanning control object may be arranged to communicate with the remote client over an Internet or Intranet link and/or by wireless communication.

According to the invention there is further provided:
1. A method of reading a high density bar code symbol containing information comprising data and data interpreting information, comprising the steps of receiving a signal representative of the information contained in the bar code symbol, identifying the data and the data interpreting information, processing the data interpreting information and interpreting the data according to the processed interpreting information.
2. A method as in 1 in which the data interpreting information comprises a program script, wherein the method comprises the steps of processing the programmed script to create an interface for interpreting the data.
3. An information retrieval system comprising a high density bar code symbol and a bar code symbol reader, wherein the bar code symbol contains information comprising data and data interpreting information and the reader includes means for reading the bar code symbol, means for identifying the data interpreting information, means for processing the data interpreting information and means for interpreting the data according to the processed interpreting information.
4. A communication system for a bar code scanner comprising a control host, a scanning control object working therein and a remote client associated with the bar code scanner wherein the scanning control object communicates with the remote client to control the bar code scanner and the scanning object control is implemented as an OLE control.
5. A system as in 4 in which the host and the scanning object control communicate and integrate via interfaces.
6. A system as in 4 in which the scanning control object creates separate threads of execution for controlling communication with the remote client.
7. A system as in 6 in which the separate threads of execution include send, receive and synchronize bar code scanner transaction commands.
8. A system as in claim 4 in which the scanning control object is arranged to communicate with the remote client over an Internet or Intranet link and/or by wireless communication.

According to the present invention there is provided a data terminal connectable to, and remote from, the Internet comprising a data input and an internal server for creating an Internet site representing the input data and having an Internet Protocol address, the terminal further comprising a network link cooperating with the server to provide access to the site to users elsewhere on the Internet. The system thus provides substantial benefits as regards speed, efficiency and accessibility.

The Internet site may be a web site. The data input may comprise one or more of the group of image recordal means, sound recording means, or text recordal means. The network link may be a wireless network link comprising one of the group of a radio frequency link, an infrared IRDA standard link or a microwave link over a private wireless local area network, or a cellular telephone network.

According to the present invention there is provided a data terminal connectable to, and remote from, a data network comprising a data input, means for creating a user accessible data site representing the input data and having a site address and a network link arranged to receive access requests from users elsewhere on the network addressed to the site, and provide access to the addressed site.

The network may comprise one of the group of the Intemet, an Intranet or a Local Area Network (LAN), for example the network comprising the Internet and the site address comprising an Internet Protocol address. The site may comprise a Web site.

The data input may comprise one of the group of image recordal means, sound recordal means or text recordal means, or even a chemical "sniffer" which detects the presence of certain chemicals in the air (e.g. natural gas, or other combustible or hazardous fumes). The data site creation and access means may comprise a server internal to the terminal. The network link may be a wireless link comprising one of the group of a radio frequency link, an infrared IRDA standard link or a microwave link.

According to the invention there is provided a mobile image recording unit connectable to the Internet via a wireless link comprising image recordal means, a server for creating an Internet site having an Internet Protocol address and representing the recorded image and a wireless link arranged to provide site access to requests directed to the site address.

The server may create respective sub-pages for respective recorded images and includes a menu setting out the sub-pages on a home page at the site address.

According to the invention there is provided an Internet site creation and access system comprising a mobile unit including a server arranged to record images at a given geographical location and create a site representing the image internal to the terminal, wherein the mobile unit communicates with the Internet via a wireless link and users access the site at the mobile unit via the Internet.

According to the invention there is provided a method of creating a web site in which a mobile unit records data relating to its immediate environment, a server within the mobile unit creates a web site page representing the data and having an Internet Protocol address, and Internet users access the web site at the Internet Protocol address via a wireless link between the mobile unit and the Internet.

According to the invention there is provided an image capture and relay system comprising a remote still image capture device including an encoder for encoding the captured image as an image data signal and a transmitter for transmitting the image data signal, the system further comprising a base station for receiving the image data signal and providing access to the image data. As a result, prompt access to the image is allowed at the base station.

The image capture device may comprise a digital camera and many further include a bar code reader and/or a microphone and/or a user data input device and/or include a printer, preferably arranged to print bar code symbols or a hard copy version of the captured image.

The image capture device may include a visual display screen and, advantageously means for altering an image displayed on the visual display screen.

The invention further relates to in preferred form:
9. A system further comprising global positioning system capability.
10. A system in which the image capture device includes a body portion and a user grip portion projecting from the body portion.
11. A system as in 10 in which a trigger is provided associated with the grip portion and arranged to actuate image capture.
12. A system as in 10 in which a variable control is provided associated with the grip portion for controlling image zoom.
13. A system as in 12 in which the variable control comprises a thumb wheel.
14. A system in which the image capture device further includes hazard detector means for location in a hazard zone.
15. A system as in 14 in which the hazard detector means comprises one of the group of a smoke detector, heat detector, fume detector, motion detector.
16. A system as in 14 in which on detection of a hazard an image of the hazard zone is captured and transmitted to the relevant hazard control authority for review.
17. A system in which the image data signal is transmitted along a cost-optimised transmission route.
18. A system as in 17 in which the communication route is determined selecting the lowest cost communication links.
19. A data network including a first transmission point, a second reception point, a plurality of intermediate transfer points, communications link having an associated cost factor linking respective pairs of points, in which the transmission is routed from the first point to the second point via one or more transfer points selected to minimise the cost of the associated communication links.
20. A data terminal comprising a reader for reading machine readable indicia, wherein the reader is arranged to read indicia encoding machine-executable instructions and a data processor arranged to decode and execute the instructions.
21. A terminal as in 20 connective to a computer network via a network interface.
22. A terminal as in 20 in which the machine readable indicia comprises a bar code symbol.
23. A terminal as in 20 in which the machine readable instructions are expressed in an agent implementation language.
24. A terminal as in 20 in which the terminal includes a terminal housing and an Internet interface, data processor and reader are provided within the terminal housing.
25. A data terminal as in 20 in which the reader is connected to the terminal via a physical link.
26. A terminal as in 25 in which the reader comprises one of the group of a "flying spot" optical scanner or a "field of view" optical reader.
27. A terminal as in 20 in which the terminal comprises a remote terminal arranged to connect with a computer network via a wireless link.

According to the invention there is further provided a still image capture device comprising a digital camera, an encoder for encoding the still image as an image data signal, and a transmitter for transmitting the image data signal by wireless transmission to a remote base station.

According to the invention there is further provided a method of capturing and relaying an image comprising the steps of capturing the image using a remote image capture device, encoding the captured image as an image data signal and transmitting the image data signal, the encoder and transmitter being provided in the remote image capture device, and receiving the transmitted image data signal in a base station for distributing the image. The image captured may relate to a given incident and the base station may transfer the received image to an insurance database relating to the incident.

The image captured may relate to the condition of goods prior to delivery and the received image may be transferred from the base station to a delivery point for comparison with the received goods.

The image captured may relate to the condition of goods to be delivered, the image data signal may be encoded as a bar code symbol applied to the goods to be delivered, and the bar code symbol may be decoded at the point of delivery for comparison of the captured image with the condition of the goods as received.

According to the invention there is provided a product information retrieval system for use in conjunction with the Internet computer network, wherein product information relating to a selected product is accessible at an Internet site having an Internet Protocol site address, wherein the site address is directly or indirectly represented by a machine-readable printed indicia, and wherein a hand-held reader is provided for reading the indicia, storing the site address represented thereby and down-loading the site address to a client processor for accessing the product information at the site address. The product may comprise a commercial product. The commercial product may be displayed on printed matter, the machine-readable indicia being printed in association therewith. Alternatively the commercial product may be displayed at a retail outlet and the machine readable indicia may be printed on the product or product packaging.

The machine-readable printed indicia may comprise a bar code symbol. The hand-held reader may comprise a bar code reader, for example a field of view optical reader, such as a "wand" type optical reader.

The bar code symbol may be printed in one of the group of formats comprising: UPC, EAN.

The data in the bar code symbol may represent the a site address, or may simply be a product code which can be utilized to look up a corresponding site address in a table, and the site address may be converted into a URL at the client processor.

According to the invention there is further provided a "wand" type hand-held optical reader comprising reading means for reading a printed indicia and data storage means for storing the data represented by the printed indicia, arranged to read the printed indicia associated with a selected product, the reader further having a down-loading port for down-loading the stored data to a client processor to retrieve additional data relating to the product.

In its preferred form the invention further includes:
28. A reader comprising a bar code reader.
29. A reader in which the reader downloads the stored data to an access point to the client processor.
30. A reader in which the data represented by the printed indicia relates to a selected product and the retrieved data comprises additional information concerning the product.
31. A reader in which the access point comprises an interface to a personal computer.
32. A reader as in 31 in which the access point comprises a dedicated down-loading port.
33. A reader in which the stored data is transferred via a touch memory interface.
34. A reader in which the identification information is transferred via an optical interface via an IRDA standard link.
35. A reader in which the reader storage means stores data relating to the reader user, and the reader user information is transferred together with the stored data to the client processor.
36. A reader in which the printed indicia accompanies a representation of a commercial product.

The client processor may be linked to the Internet computer network and the printed indicia may contain an Internet Protocol site address corresponding to an site containing additional information relating to the product. Accordingly the system requires no more than standard address protocols. The reader may comprise a bar code reader.

According to the invention there is further provided a method of retrieving product information wherein the product information is stored at an Internet computer network site having an Internet Protocol site address, and the site address is represented in the form of a machine-readable printed indicia, comprising the steps of reading the printed indicia using a hand-held reader, storing the site address data represented by the indicia in the storage means in the hand-held reader, down-loading the site address data from the hand-held reader to a client processor linked to the Internet and accessing the Internet site identified by the site address.

The product may be a commercial product. The printed indicia may accompany a representation of the product in printed matter or the product may be displayed at a retail outlet, the indicia being printed on the product or its packaging.

According to the invention there is further provided a product information retrieval system for use in conjunction with a closed computer network whereby product information relating to a selected product is accessible at a site on the network having a site address, wherein the site address is represented by a printed indicia, a hand-held reader is provided for reading the indicia, storing the address data represented thereby and down-loading the address data to a client processor on the network for accessing the product information at the site address. The network may comprise an LAN. The network may comprise an Intranet system. The client processor may comprise a network computer.

According to the invention there is further provided a product information retrieval system for use in conjunction with a computer network, whereby product information relating to a selected product is accessible at a network site having a site address, wherein the site address is represented as a printed indicia, a hand-held reader is provided for reading the indicia, storing the site address data represented thereby and down-loading the site address data to a terminal linked to the network, wherein the terminal comprises data input, output and display means and outputs to the site address data to a host computer, and the host computer accesses the network site for input to and display at the terminal.

The terminal may comprise a network computer. The network may comprise the Internet or the network may comprise an Intranet or the network may comprise an LAN.

According to the invention there is further provided a method of retrieving product information stored at a site on a computer network having a site address, wherein the site address is represented as a printed indicia, the printed indicia is read by a hand-held reader, the site address data represented thereby is stored in the hand-held reader and down-loaded to a terminal linked to the computer network, the terminal comprising data input, output and display means, and wherein the site address data is output from the terminal to a host computer, and the host computer accesses and inputs to the terminal the corresponding network site, the terminal displaying the product information contained at the site address.

The data terminal may comprise only a display means, data input/output means and data transfer means. The network may comprise an Intranet network. The network may comprise a local area network

According to the invention there is further provided a method of retrieving data comprising reading identification information stored as printed indicia using a stand-alone reader, storing the identification information in a data storage device provided in the reader, transferring the stored identification information from the data storage device to an access point to a data storage and retrieval system, and retrieving stored data from the system identified by the identification information.

In the preferred embodiments the identification information is used to access an Internet site relating to the product. In that case, for example, a product in a magazine carries an accompanying bar code symbol, the bar code symbol containing the Internet Protocol site address at which further information concerning the product can be found. The Internet site can be a web site. The user stores the site address and down-loads it to a PC or other access point subsequently, allowing the Internet site home page or sub-page to be called up and additional product information accessed. In addition, as discussed in more detail below, the product can be purchased, or the user can be directed to related products.

As a result, information can be stored when the user does not have access to the data storage and retrieval system itself. The stored data can act as a reminder or prompt to the user. A particular application is where the identification information relates to a product represented in printed matter in which case further details can be retrieved subsequently and in many cases a direct transaction carried out interacting only with the data storage and retrieval system.

The stand-alone reader may be a hand-held reader. The printed indicia may comprise a bar code symbol and the stand-alone reader may comprise a wand-type bar code reader. The identification information may relate to a selected product and the retrieved data may comprise additional information concerning the product. The access point may comprise an interface to a personal computer or a dedicated down-loading port. The latter allows use of the invention even where the user does not have access to a PC.

The identification information may be transferred via a touch memory interface. The data storage and retrieval system may comprise the, the identification information may comprise a web site address and the retrieved data may be held at the web site. Alternatively the data storage and retrieval system may comprise a closed computer network such as an Intranet or LAN. In that case the identification information may comprise an appropriate site or database location address conforming with the protocol adopted by the Intranet or LAN. The reader data storage device may store data relating to the reader user, and the reader user information may be transferred together with the stored identification information to the data storage and retrieval system. This assists in further transactions such as purchase and allows a customer profile to be assembled.

According to the one aspect the invention relates to a data processing system comprising a portable terminal and a terminal mount wherein the mount includes a terminal interface and processor capability for processing data received from the terminal and the terminal includes a user interface, a mount interface and processor capability sufficient only to relay user input to the mount for processing and data from the mount to the user interface. Thus an ultra thin client is provided at the terminal, the mount carrying out the majority of the computing functions.

In another aspect the invention relates toa a data processing system comprising a stand-alone data terminal, docking means for docking the terminal and a host network, the terminal including a user input and docking means interface arranged to relay user input to the mount and the mount including a terminal interface and a host interface arranged to relay the user input to the host, for processing and a method of relaying data between a portable terminal and a base station comprising the steps of inputting data to the terminal, relaying the data to the base station with minimal processing and processing the data at the base station. Optionally, therefore, the majority of the processing power can be maintained at the host, allowing a thin docking means or cradle.

Preferred features further comprise:
37. A method in which the terminal and base station communicate via wireless communication.
38. A method in which the information input to the terminal comprises inventorying information.
39. A method in which the information input to the terminal comprises retail related information.
40. A method in which the information input to the terminal comprises stock exchange related information.
41. A method further including the step of physically connecting the terminal to the base station at intervals for data downloading and/or battery recharging.

According to another aspect the invention provides a product information retrieval system comprising a portable terminal arranged to receive data from one or more data output points in a product access zone in which the terminal is arranged to display an image of a product to be accessed in response to data received from the data output point and a method of retrieving product information in which a portable terminal is provided in a product access zone and receives data from one or more data output points, and in which the terminal displays an image of a product to be accessed in response to data received from a data output point, and a portable data terminal for operation in an operation zone having one or more physical items located at predetermined positions in the zone wherein the data terminal comprises a communications receiver and/or transmitter and a display arranged to display icon's representative of the physical item and/or its position in the operation zone. This icon based system allows a highly useririendly, efficient and human-error free file system to be implemented.

Yet further preferred features comprise:
42. A system in which the terminal receives data from the data output point by wireless communication.
43. A system in which the product image corresponds to a product in a vicinity of the terminal.
44. A system in which a plurality of data output points are provided and the product image is selected from products in the vicinity of the data output point from which the terminal is receiving data.
45. A system in which the terminal includes a positioning system and the product image corresponds to a product in the vicinity of the detected position of the terminal.
46. A system in which the terminal is arranged to display a map of the product access zone.
47. A system in which the terminal is further arranged to indicate the position of the terminal on the map.
48. A system in which the product access zone comprises a retail outlet.
49. A system in which the terminal is arranged to display an image of a product on offer.
50. A system in which a terminal user inputs identification information to the system.
51. A system in which the terminal is arranged to display an image of a product related to user preference derived from the user identification information.
52. A system in which the terminal further comprises one or more of the group of an optical reader or a data pen.
53. A system in which the terminal further includes an audio speaker.
54. A system in which the terminal further includes a voice synthesizer for relaying product or other information.
55. A system in which the terminal includes a range alarm arranged to activate if the terminal leaves the product access zone or a zone defined related to the product access zone.
56. A product information retrieval system further comprising a terminal docking point arranged to receive the terminal for battery charging and/or data relay.
57. A system in which the terminal is arranged to display an image of a product to be relocated together with relocation information.
58. A system in which the product access zone comprises a storage zone and a terminal is arranged to display an image of a product to be relocated together with relocation information.
59. A method of retrieving product information in which a portable terminal is provided in a product access zone and receives data from one or more data output points, and in which the terminal displays an image of a product to be accessed in response to data received from a data output point.
60. A portable data terminal for operation in an operation zone having one or more physical items located at predetermined positions in the zone wherein the data terminal comprises a communications receiver and a display arranged to display icon's representative of the physical item and/or its position in the operation zone.
61. A data transfer apparatus comprising a portable data terminal and a base arranged to receive the terminal, the base and terminal including means for mutual wireless communication, the terminal comprising data input and display means and minimum front end processing capability and the base comprising back end processing capability for processing data from the terminal.
62. An apparatus in which the terminal further includes one of the group of a broadcast radio receiver and a television receiver.
63. An apparatus in which the terminal further includes an optical reader portion, the optical reader portion being detachably connected to the terminal.
64. An apparatus in which the terminal further includes a motion/orientation sensor, and means for controlling operation of the terminal dependent on the motion/orientation sensed.

According to another aspect there is provided a terminal mount for mounting a portable data terminal, the mount being adapted for wireless communication with the data terminal, wherein the mount is arranged to receive or derive display format information for a terminal to be mounted thereon and configure data to be displayed at the terminal according to the display format.

Further preferred features comprise:
65. A mount in which the mount configures data for display according to one of a predetermined set of format options.
66. A mount arranged to adapt data for display based on the number of characters per horizontal line in the data display format.
67. A mount arranged to scale the display size of data to match the available display format.

According to another aspect there is provided a data communications system comprising a portable data communication device and a device mount arranged to releasably receive the device, in which the device mount includes a user identification information input and a device lock arranged to release the device on input of approved user identification information and a method of monitoring access to a portable data communication device wherein the portable data communication device is releasably received in a device mount, a user inputs user identification information to the mount, the mount releases the device if the identification information is approved and, simultaneously, commences the timer, the timer is stopped when the terminal is reinserted on the mount and the identified user is billed for the timed period between release and reinsertion of the device. This arrangement is particularly suitable for rental in a public place such as an airport or retail outlet ("self shopper").

Further preferred features include:
68. A system in which the portable data communication device comprises a cellular telephone.
69. A system in which, upon release of the device, a timer is started, and upon reinsertion of the device the time stops to allow billing to the identified user.
70. A system in which the mount is configured to carry out a status test on a device inserted therein.
71. A method in which the device mount carries out a status check of the device when it is reinserted.

The invention further relates to a data communication device including wireless communication means for communicating with one or more access points to a local computer network, the device further comprising cellular telephone means for conventional telephone communication when the device is out of range of the access points to local computer network, a goods transport tracking system comprising a communication device for a transport vehicle arranged to log receipt and/or delivery of goods and including means for wireless communication with a communication network and means for creating a data file accessible via the communication network to provide receipt/delivery information, a goods transport tracking network comprising a physical network of transfer points comprising transport vehicles and intermediate stations and a communications network, in which an interface to the communications network is provided at each transfer point and in which the passage of goods is logged at each transfer point allowing transport information to be accessed at the communications network, a rechargeable battery pack for an electrically powered device arranged to be received in a battery charger for recharging, in which the battery pack has predetermined recharging requirements and includes recharging control circuitry for controlling the recharge operation to meet the predetermined requirements and a battery recharger for receiving and recharging a rechargeable battery pack having predetermined recharging requirements and responsive to recharging control means on the battery pack to control recharge operation to meet the predetermined recharging requirements.

Further preferred features include:
72. A system in which the communication device comprises a communication base locatable on a vehicle and a portable data device arranged for wireless communication with the base and including means for logging receipt and delivery of goods.
73. A system in which the receipt/delivery information comprises one or more of goods received, goods delivered, goods attempted delivered.
74. A system in which the data file further provides current transport vehicle location information.
75. A system in which the data file creation means comprises a server arranged to create a network file.
76. A network in which a routing table is developed at the communication network for goods to be tracked.
77. A network in which each interface comprises a base station and a portable data terminal in mutual wireless communication.
78. A rechargeable battery pack in which a recharging requirement comprises the charging rate.
79. A battery recharger comprising a plurality of battery pack receiving and recharging points.

The invention further provides a data device arranged to communicate with a communication network including an adapter module interface and an adapter module in which the adapter module carries network communication capability and an adapter module for a data device communicating with a communication network in which the adapter module carries network communication capability for the device. As a result transparent networkfile access is achieved.

Further preferred features include:
80. A device in which the adapter module comprises an adapter card.
81. A device in which the network communication capability includes at least one protocol stack and at least one network file system client.
82. A device in which the protocol stack and network file system client run on a processor in the adapter module.
83. A portable data communication device comprising data capture means, an adapter module interface and an adapter module, wherein the adapter module includes an internal server for creating an internet site and communication means for communicating with an access point to the Internet.
84. A terminal in which the adapter module comprises an adapter card.
85. An adapter card for a portable communication device, the adapter card comprising a device interface, an internal server for creating a network file for data captured by the device and a network interface.
86. A power pack for cooperation with a device to power the device, the power pack comprising rechargeable cells, charging circuitry and a connector for connecting to a power supply to recharge the cells.
87. A power pack in which the charging circuitry comprises one or more of the group of: AC/DC conventor, charge electronics, gas gage.
88. A power pack in which the rechargeable cells are replaceable.
89. An adapter for a battery charging system including a battery pack and a recharger in which the adapter includes a battery pack interface, a recharger interface and charging control circuitry.
90. An adapter further including a power input for direct recharging.
91. An adapter further including one or more indicators for indicating charging status.
92. A rechargeable power pack for a device, the power pack being rechargeable by a recharger unit and including charging circuitry and power cells in which the power cells are replaceable.

### BRIEF DESCRIPTION OF THE DRAWINGS

The foregoing objects and advantages of the present invention may be more readily understood by one skilled in the art with reference being had to the following detailed description of several preferred embodiments thereof, taken in conjunction with the accompanying drawings wherein like elements are designated by identical reference numerals throughout several views, and in which:
Fig. 1 is a perspective view of an optical reader from above and the rear;
Fig. 2a shows a terminal according to the present invention arranged to link with the Internet;
Fig. 2b shows a block diagram of the connection system shown at Fig. 2a;
Fig. 2c shows an alternative configuration according to the present invention;
Fig. 2d is a flow diagram representing operation of the present invention;
Fig. 3a is a perspective view of a data terminal according to the present invention;
Fig. 3b shows an implementation of the data terminal according to the present invention;
Fig. 4 is a block diagram showing components of the data terminal of Fig. 3a;
Fig. 5 shows a hand-held data terminal;
Fig. 6 is a detail of a data terminal according to the present invention having highlighting capabilities;
Fig. 7 shows a data terminal according to another aspect of the invention;
Fig. 8 shows an alternative configuration for the terminal of Fig. 5;
Fig. 9 shows a portable computer device according to another aspect of the invention;
Fig. 10 is a block diagram of an image capture module for the device of Fig. 9;
Fig. 11 is a block diagram of a multi-media module for the device of Fig. 9;
Fig. 12 is a perspective view of a variation of the device of Fig. 9;
Fig. 13 is a block diagram showing the components of a distributed mail delivery service according to another aspect of the invention;
Fig. 14 is a flow chart showing operation of a client portion of the service of Fig. 13;
Fig. 15 is a flow chart showing operation of a server portion of the service of Fig. 13;
Fig. 16 illustrates a block diagram of a conventional wireless communication system with a terminal emulation program installed on the mobile units;
Fig. 17 illustrates a flow chart illustrating an access point's action upon receiving a packet from a mobile unit according to the prior art;
Fig. 18 is a block diagram of a general purpose interface reader application according to another aspect of the invention;
Fig. 19 shows the interface between a scanning control and a control container according to a further aspect of the invention; and
Fig. 20 shows multiple threads of execution maintained by the control of Fig. 18.
Fig. 21 shows a hand-held pen-type optical reader;
Fig. 22 shows the principal components of a pen-type optical reader;
Fig. 23a demonstrates a use of the pen-type optical reader according to one embodiment of the invention;
Fig. 23b demonstrates a use of the pen-type optical reader according to an alternative embodiment of the invention;
Fig. 24a shows an alternative version of the pen-type optical reader;
Fig. 24b shows in more detail the principal components of the pen-type optical reader shown in Fig. 24a;
Fig. 25a shows a further alternative pen-type optical reader;
Fig. 25b shows in more detail the principal components of the pen-type optical reader of Fig. 25a;
Fig. 25c is a view of the pen-type optical reader of Fig. 25a from a different angle;
Fig. 26a is a sectional view of an alternative pen-type optical reader;
Fig. 26b is a perspective view of the pen-type optical reader of Fig. 6a;
Fig. 27a shows one method of down-loading information from a pen-type optical reader according to the present
invention;
Fig. 27b shows an alternative method of down-loading information from the pen-type optical reader according to the present invention;
Fig. 28 shows a dedicated down-loading port from the pen-type optical reader according to the present invention;
Fig 29 is a section view of the down-loading port shown in Fig. 28;
Fig. 30a shows an alternative configuration for a pen-type optical reader;
Fig. 30b shows the reader of Fig. 30a in operation;
Fig. 30c is a partial cross-sectional view of a pen-type reader of the type shown in Fig. 30a and 30b;
Fig. 31 shows a terminal and cradle according to the present invention;
Fig. 32a is a block diagram of a terminal/cradle arrangement;
Fig. 32b is a schematic diagram of a terminal/cradle arrangement;
Fig. 33 is a block diagram of a "thin client" terminal/cradle arrangement;
Fig. 34a is a view of a further embodiment of a terminal;
Fig. 34b is a plan view of an alternative terminal;
Fig. 34c is a side view of the terminal of Fig. 34b;
Fig. 34d is a rear view of the terminal of Fig. 34b;
Fig. 34e is another side view of the terminal of Fig. 34b;
Fig. 34f is a further side view of the terminal of Fig. 34b;
Fig. 35 shows a schematic representation of one possible use of a terminal according to the present invention;
Fig. 36 shows a first ICON display on the terminal;
Fig. 37 shows an alternative ICON display on the terminal;
Fig. 38a shows a further alternative ICON display on the terminal;
Fig. 38b shows a flow diagram representing operation of the terminal;
Fig. 39 shows a battery pack and battery charger for the terminal;
Fig. 40 is a block diagram of an alternative terminal configuration;
Fig. 41 is a schematic view of an alternative terminal configuration;
Fig. 42 is a schematic representation of a further application of the terminal of the present invention;
Fig. 43a is a schematic representation of yet a further application of the terminal of the present invention;
Fig. 43b shows a pendant-type terminal;
Fig. 44 shows a wireless network configuration;
Fig. 45 shows a detail of a wireless network configuration;
Fig. 46 shows a further detail of a wireless network configuration;
Fig. 47 is a block diagram of an alternative terminal configuration;
Fig. 48 is a block diagram of an alternative cradle configuration;
Fig. 49 is a block diagram of yet a further alternative cradle configuration;
Fig. 50 shows software data and control flow in the terminal;
Fig. 51 shows software data and control flow in a cradle;
Fig. 52 is a block diagram showing components of an embedded storage device;
Fig. 53 is a block diagram showing a configuration of an alternative storage device;
Fig. 54 is a block diagram showing the configuration of yet a further alternative storage device;
Fig. 55 is a block diagram showing operation of a standard Client Device and File Access Card;
Fig. 56 is a block hardware diagram of an alternative Client Device and File Access Card system;
Fig. 57 is a software block diagram of the alternative File Access Card system;
Fig. 58 shows a hardware model for a web-enabled terminal;
Fig. 59 shows a task structure for the arrangement of Fig. 58;
Fig. 60a shows a transparent web server;
Fig. 60b shows a transparent web server card;
Fig. 61a shows browsing in relation to the transparent web server;
Fig. 61b shows another aspect of browsing in relation to the transparent web server;
Fig. 62 shows an alternative inventive battery pack;
Fig. 63a shows an improved battery pack arrangement; and
Fig. 63b shows an alternative improved battery pack to that shown in Fig. 63a, in cut-away form.

### Detailed Description of the Preferred Embodiments

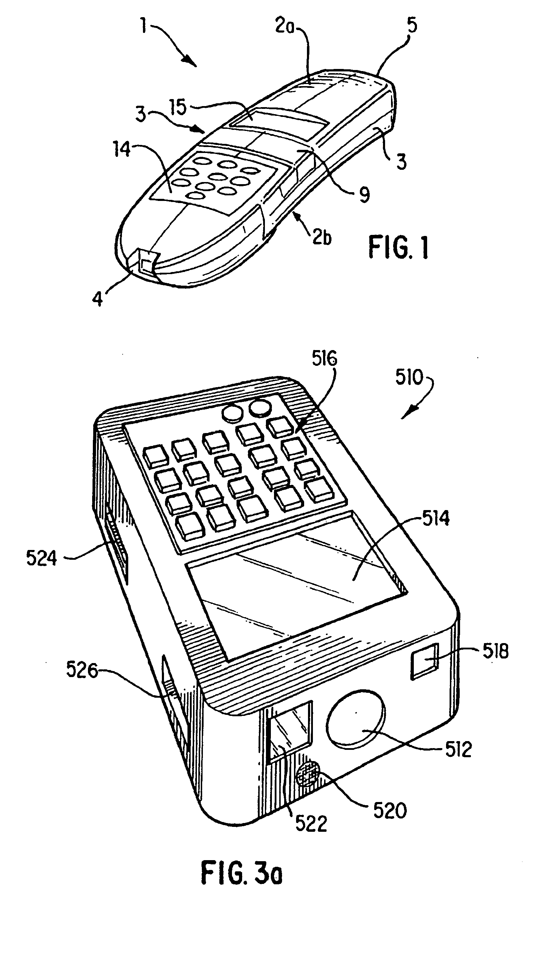

Throughout the description of the optical reader the terms "front", "rear", "upper", "above", "lower" and "below" are used consistently Referring, for example, to Fig. 1 an optical reader has a rear end 4 and a generally planar front end 5, an upper face 2a and opposed to that a lower face 2b.

Referring to Fig. 1 in more detail the optical reader includes a generally bar-shaped elongate housing indicated generally by the reference numeral 1, having two generally opposed long broad upper and lower faces 2a, 2b, two generally opposed long, shallow side faces 3, a rear end 4 and a front end 5.

A reading arrangement is mounted within the housing. The reading arrangement may be any known conventional arrangement, for example a "flying spot" optical scanner or a "field of view" optical reader. Generally the arrangement will include a light generating source such as a laser diode, a beam focusing or directing arrangement and a light receiving device. Where the reading arrangement is an optical scanner a rapidly oscillatable scan component, such as a mirror is provided to scan the light beam across an indicia to be read. Alternatively, the laser diode itself can be oscillated. Where the reader is a field of view optical reader a charge coupled device (CCD) array, or a photodetector arrangement is provided to detect the reflected light beam.

In order to actuate the reading arrangement a scan trigger 9 is provided on the upper surface 2a of the housing 1. The trigger 9 is activated by depression and is positioned along the housing 1 such that it is easily actuable by the operator when the reader is held in the operator's hand. The trigger mechanism itself may be of any known arrangement; for example the trigger may be spring-loaded and have contacts which form a circuit with contacts within the housing when the trigger is depressed to actuate the reading arrangement.

A scanning window 10 is positioned on the front face 5 of the reader. Light generated by the reading arrangement passes through the window 10 and is reflected and scattered back through the window 10 by a bar code symbol 11. Accordingly the reader can be easily and accurately aimed at a bar code symbol 11 to be read.

Also provided on the upper face of the reader are a keypad 14 and a display 15. The keypad 14 may be used to initialize the reading arrangement such that identification information concerning the user is entered into the system. Alternatively, the keypad 14 may be used to enter predetermined codes or information concerning modes of operation of the reader or to carry out cancellation or manipulation operations on information provided by the reader. The display 15 may display information relating to the mode of operation of the reader, or display check information relating to the item carrying the bar code symbol being read together with background information such as the time, date, and confirmation of the operator's identity. Preferably the display 15 is a liquid crystal display (LCD).

The reading arrangement can process information derived from the bar code symbols directly or can send raw data to an external processing device which can then process the information accordingly In addition, information derived by the reader from bar code symbols can be transferred to a memory device in order that a database of information can be built up. For example where the reader is used at a point of sale, buying patterns can be stored and analyzed. Alternatively, if the reader is being used for inventorying purposes then the inventory information can be stored. The optical reader can transmit information in a variety of manners. In the embodiments shown various different transmitting devices are provided; in practice only one or more of the devices need be provided depending on the particular use to which the reader is to be put. For example the information may be transmitted by an acoustic modem 16. In that case, information can be stored in a buffer memory within the reader and then down-loaded by the acoustic modem 16 at predetermined intervals. The display 15 could indicate when information was to be down-loaded. Alteratively an interface connector, for example an RS41 connector is designated by reference numeral 6 and provided at the rear of the reader. Suitable cabling can be inserted into the connector 6 to down-load information or alternatively to load data into the reader for example relating to the mode of operation. Once again, the display 15 could provide an indication of the functioning of the connector. The cable could be permanently connected to the reader as the connector 6 is provided at the rear of the reader and hence would not be obscured by the user's hand. Alternatively, the connector 6 could be connected to a cable for loading or down-loading of information when required and, for example, when indicated by display 15. In addition, a radio 17 or other transmitting device can be provided within the housing 1 to allow real time data communication. An advantage of that arrangement is that the operator may use the reader in a "cordless" or "wireless" configuration allowing increased mobility. Once again the radio 17 could comprise a transmitter and a receiver in order that information can be sent to and from a remote processor. The radio link could be replaced by an infra-red communication link or other wireless link of known type. Because the reader is of ergonomic design, the transfer of information is easily carried out while the reader is actually in use, if required.

As a further option the reader may be configured for connection to a telecommunications network or computer network, for example the "Internet".

One example of where the reader may be of particular use is in relation to the worldwide web. When it is desired to access a web site it is necessary to enter the address of the site, known as the universal resource locater (URL). Often those URL's are long and complex, and are time consuming to enter and check manually. Furthermore the URL can, despite many checks, still give rise to error. The problem is exacerbated in the case of computer illiterate users. The proposed manner of overcoming this problem is to encode the URL address in a bar code symbol and read the bar code symbol with the reader for automatic access to the corresponding web site, which will be quick and accurate, giving rise to far less margin for error. The reader may be used to interface with a terminal for entry of the URL address or could be used independently.

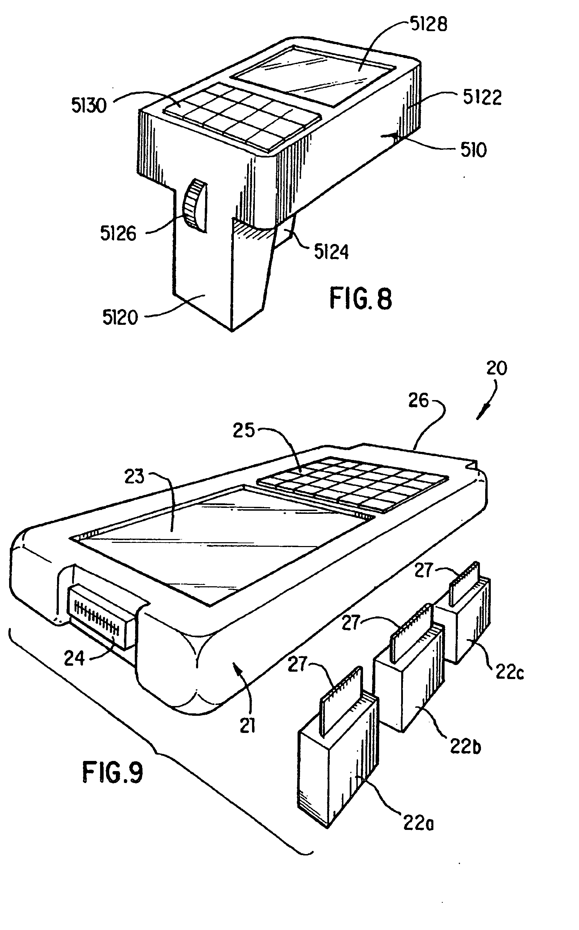

According to another aspect there is shown in Fig. 9 a data collection device comprising an improvement over known arrangements. The device comprises a portable hand-held computer for collecting data and down-loading the raw processed data to a central or peripheral device. The device, designated generally as 20 comprises a main body 21 and interchangeable data collection modules 22a, 22b, 22c.

The main body 21 is provided internally with data processing means (not shown) and also comprises a display screen 23, for example an LCD display screen capable of displaying video images, a data collection module interface 24, an optional input information keypad 25 and a communication link 26 which may comprise radio frequency or infra-red transmitting means or an interface for down-loading information to a central or peripheral device via a physical cable. It will be appreciated that the LCD display 23 and input keypad 25 are optional features. Advantageously, however, they allow the user to configure operation of the device as a whole quickly and simply and monitor the operation. The main body is shown schematically in Fig. 9; in practice it could assume an ergonomic shape such as that shown in Fig. 1 suitable interfaces etc. being positioned as appropriate, for example at respective ends of the module.

It will be appreciated that the device may transfer information to a host via any electronic data transfer scheme - for example the system could also use cellular-based telephone channels.

Alternatively the device could be configured for connection to a telecommunications network or computer network, for example the "Internet".

The data collection modules are interchangeable with one another and may be, for example, CCD (Charge Coupled Device) based image, video and bar code symbol data capture modules, audio transducers for collecting and receiving sound information, laser image scanners or combined multi-media data collection modules.

An image capture module using a CCD could be used for capturing images of objects for storage or use by a processor application carried out by the main body or by a host, such images including for example people, landscapes, homes and vehicles for reference applications. In addition the imager could be used for one dimensional or two dimensional bar code symbols for decoding data capture. A laser optical reader scanning module and decoder would be used generally for bar code data capture and decoding only.

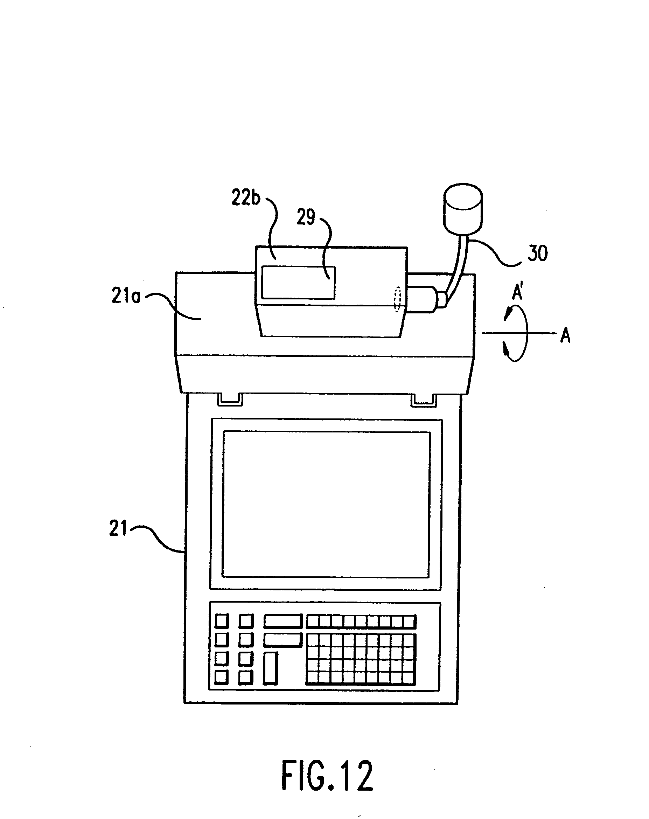

A multi-media module 22 is shown in Fig. 11 and discussed in more detail with reference to that figure below. Such a module could contain a circuitry for image/video capture, audio capture and playback and a cellular telephony sub-system. Such a module would be of particular use in tele-conferencing and live video communications over cellular networks from the portable unit.

The desired data collection module 22a,b,c is connected to the main body 21 by the interface 24 on the main body which mates with an interface 27 on the module. Any suitable known interface components can be used but the components should be strong, relatively inflexible, durable and suitable for frequent disconnection and reconnection.

The modules are powered by a power supply within the main body of the portable computing device and may be partially or totally controlled by software drivers within the main body. In order to reduce the burden on the central processing unit of the main body, dedicated signal processing electronics within the modules can be arranged to perform up-front data processing as a result of which a common bus architecture to the main body is shared by all of the modules. As a result their interchangeability is enhanced.

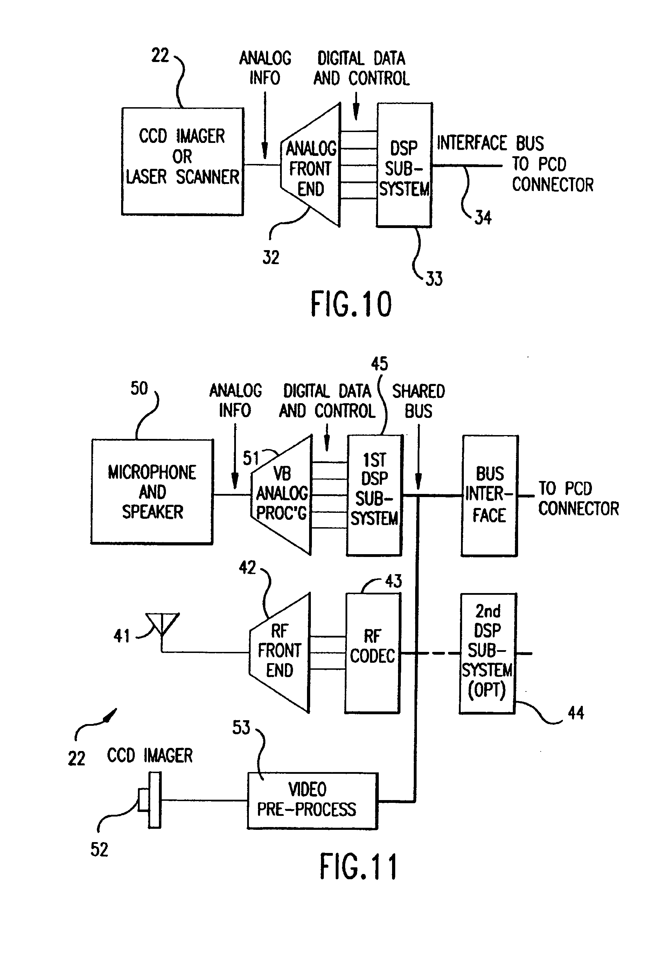

A suitable architecture for an optical media capture module 28 (for example containing a CCD imager or laser scanner) is shown in Fig. 10. Each module may contain only the media capture electronics without any pre-processing capability or, as discussed above, preferably contains dedicated or programmable analog components 32 and digital signal processing (DSP) components 33 to ease the processing load placed on the central processing unit of the main body 21. The digital signal processing sub-system 32,33 in the module may be of a single electronic design common to different modules, and which is either programmed in the factory or customized on purchase or programmable by the user to perform the functions in processors if required by the particular media module. This function programmability is expected to be mainly through software, since the module processing electronics are flexible, and these software components may be one-time or dynamically loaded to the module via the main body central processing unit. Accordingly the range of components that require manufacture is decreased, appropriate dedicated parts of the components being selectable for a desired use, or a portion of the mode of operation being borne by software.

In operation, the module 28 collects information via the CCD imager or laser scanner in analog form which is transferred either serially or by conversion into a parallel format. The analog signal is then processed by the digital signal processing sub-system 32,33 and forwarded to an interface bus 34 from which the information is transferred to the main body of the portable computing device. As mentioned above, the signal processing electronics preferably perform up-front data processing such that a common bus architecture to the portable computing device 21 can be achieved.

Referring now to Fig. 11 the multi-media module 22 includes circuitry for image/video capture, audio capture and playback and a cellular telephony sub-system.

The module is arranged to receive and transmit video information independently of the main body of the portable computing device (although the video information may also be accessed by the main body of the portable computing device in order to monitor or review the information). Accordingly a radio frequency antenna 41 is provided in the module for reception and transmission of radio frequency information. A radio frequency front end processor 42 and codec 43 cooperate to perform digital to radio frequency/radio frequency to digital format conversions. Video information received via radio frequency is decompressed by an optional digital signal processing sub-system 44 for presentation, where appropriate, to the CPU of the main body 21 of the portable computing device. A further digital signal processing sub-system 45 is provided for other purposes (discussed in more detail below) and preferably performs partial video processing, the CPU of the personal computing device completing the process for displaying the results. The second digital signal processing sub-system 44 may also be required for the interface to the radio frequency codec 43 of the cellular sub-system; this depends on the amount of processing required for each function. Video information transferred to the main body 21 of the portable computing device is displayed on the LCD display 23. The radio frequency receiving, transmitting and processing apparatus 41,42,43,44 discussed above can optionally reside in a separate component such as a PCMCIA or other type plug-in card for example of the type manufactured by Symbol Technologies, Inc. Preferably, however, the circuit forms an integral part of the mufti-media module to provide a full wireless multi-media solution for the hand-held computing system. As will be appreciated, the wireless link may conform to any desired cellular standard (for example CDMA, GSM, AMPS) that is preferably selected to allow the widest application of the invention.

The multi-media module 22 further includes a microphone/speaker component 50 which receives and transfers input analog information to an analog to digital converter 51,45 comprising an up-front voice-band converter 51 which transfers information either serially or in parallel to the digital signal processing sub-system 45. Similarly, information may be transmitted in the other direction, for example digital information from the main body of the portable computer device is converted to an analog audio signal at converter 45,51 and converted to sound by the speaker component 50. Base-band digital audio data is processed by the digital signal processing sub-system 45 which can be reprogrammed as appropriate to perform appropriate audio codec processing. Voice-band (VB) signals are converted by the converter 45,51 as discussed above.

Video data is captured by a CCD imager 52 compressed by a digital signal processing sub-system 53 and forwarded to the radio frequency codec 43. Once again the main body of the portable computing device need not be involved in this data transfer unless the user decides to monitor the transfer. In that case, a software controlled process may be initiated whereby the video data is sent to the CPU of the main body 21 of the portable computing device for display before compression as well as to the radio frequency codec 43 for transmission allowing the captured image to be viewed while or before transmitting.

The multi-media module 22 is preferably mounted so as to be rotatable through at least 180° when connected with the main body of the portable computing device. This may be achieved by hinging or pivoting or otherwise arranging a portion of the main body or by similarly arranging a portion of the module. This positioning allows capture of the user's image while the user can simultaneously view the LCD screen display for received video data or images. The rotation of the image capture portion of the module permits capture of images of objects in front of the user while the user is looking at the screen.

The microphone and speaker combination may be arranged to face the user in a preferred, standard configuration of the device as a whole. The microphone may further be configured to swing or swivel away from the main body of the portable computer device and from the user holding the device if the desired audio data to be captured emanates from another direction.

An appropriate arrangement including a pivotable module head 22 and a swingable microphone boom 30 is shown in Fig. 12. In the embodiment shown an upper portion 21a of the main body 21 is hinged to the remainder of the main body and rotatable around an axis A as shown by arrow A'. The multi-media module 22 is connected to the upper portion and the upper portion has been swivelled such that a CCD image capture device 29 faces the user. The pivotable microphone boom 30 also extends from the multi-media module 22. It will be appreciated that a number of pivoting orientating arrangements can be provided, for example a hinge or pivot could be provided within the structure of the module 22, and the module could also be arranged to rotate through 180° about an axis transverse to axis A. Similarly, the microphone boom 30 can be pivotally mounted to the module 22 in any known manner.

Accordingly it will be seen that the invention can be used to provide modular programmable mufti-media facilities in the hand-held form factor by portable computing devices such as hand-held terminals or "portable digital assistants". The invention can be used for CCD based bar code decoding (in one or two dimensions at least) by industrial and commercial users, for example for point of sale processing or inventorying; portable, cellular video conferences by travelling business users; and digital photography/image capture for insurance assessors, sales professionals among many other applications that will be apparent to those skilled in the art. It will be appreciated that the portable modules discussed above may be used in cordless scanning implementations for example in point of sale applications. Problems arise where such portable devices are not tethered in some manner as it is possible that they will be lost, removed from the store, or otherwise misappropriated.

To overcome this, it is possible to put surveillance tags of a known type into the scanner such that if the scanner is accidently taken by a customer an alarm will sound at the front of the store as it would if any other product carrying such a surveillance tag was carried out of the store.

Alternatively the scanner can have some form of internal alarm which sounds if the scanner is taken more than a predetermined distance from the base. Where the scanner communicates with the base by wireless communications such as radio communication, the software protocol managing the radio session could control the range finder and alarm.

In order to locate portable scanners that have been misplaced an alarm or "beeper" can be placed in the scanner and triggered by a signal from the base controlled by, for example, a button on the base pressed by the user. Accordingly when the user pressed a button the scanner could be located by following the noise of the sound.

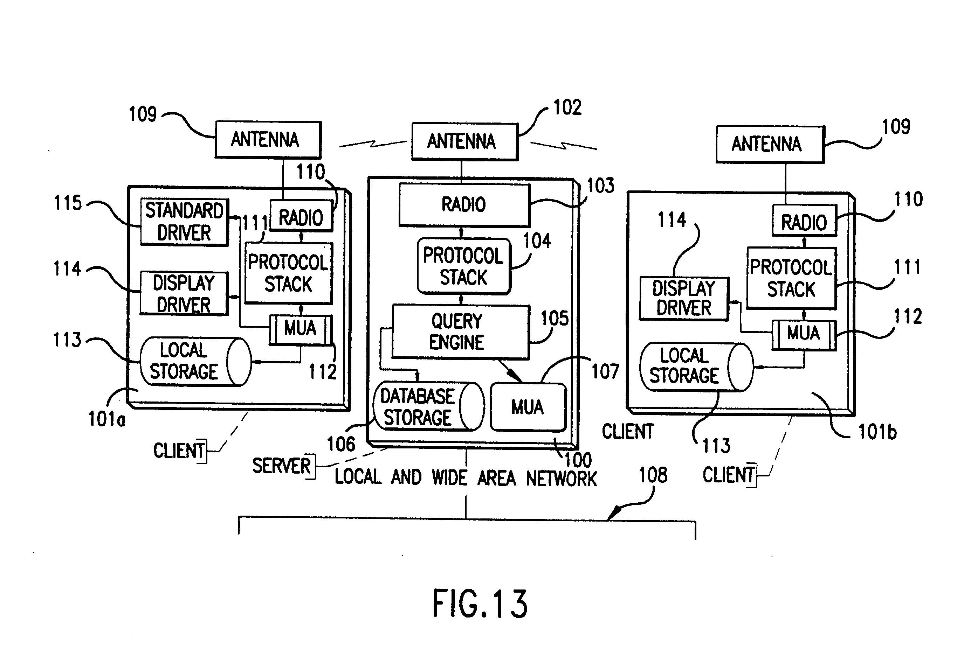

A further use for portable computer devices is the electronic mail box or mail delivery service application. Referring to Figs. 13 to 15 the invention provides an improved architecture for electronic mail box systems including portable computer devices. The improved system uses a distributed message delivery service architecture, based on cooperating processes. Within a network a particular machine is designated as a server and its address becomes public on the local network. The server is responsible for delivery of mail and reception of mail and also provides other machines on the local network with information regarding user message status, for example whether a message has been received for an identified user, in which case the message can be forwarded to the user. The remaining machines on the network are designated the client and carry out a corresponding process, in particular providing a user interface to the distributed mail delivery service. For example the client portion can present various options to the user for example the options of hearing audio messages or viewing text or still images. The options presented will, of course, be based on the resources available to a particular machine, for example whether it has a sound card and/or graphics capabilities.

Referring specifically to Fig. 13 there is provided a server 100 and a plurality (shown as 2 in the figure) of clients 101a,101b. The server 100 includes an antenna 102 for communicating with remote clients 101a,101b (for example portable computer devices), a transmission and reception module 103, a message coder and decoder 104 (protocol stack) and a processing module 105 (query engine) for handling queries from clients 101, for example regarding a particular user message status, accessing any such messages etc. Information is accessed from a memory 106 which may be a data base storage module. The processor 105 also communicates with a mail user agent (MUA) module 107 allowing user interface with the server 100. The server 100 is further in communication via the mail user agent 107 with a local and/or wide area network designated generally as 108.

The service may form part of, or be configured for connection with a telecommunications network or a computer network, for example the "Internet".

Each client 101a,101b includes various modules common with the server together with further modules specific to the needs of the client. The client 101 includes an antenna 109 for communication with the server and a transmitting/receiving module 110 communicating with a message coder and decoder 111. The module 110 will include the hardware necessary for carrying out the transmitting/receiving steps but it will be recognized that at least some of the functions provided by the module will be capable of being provided in software. Indeed, generally, reference to modules need not be to dedicated hardware but extends to programmed or programmable software arranged to emulate hardware performance. The message coder and decoder 111 interacts with the mail user agent 112 providing user interface. In addition the mail user agent 112 communicates with a local data storage device 113 and with optional modules such as a display driver 114 and/or a sound driver 115 (see client 101a).

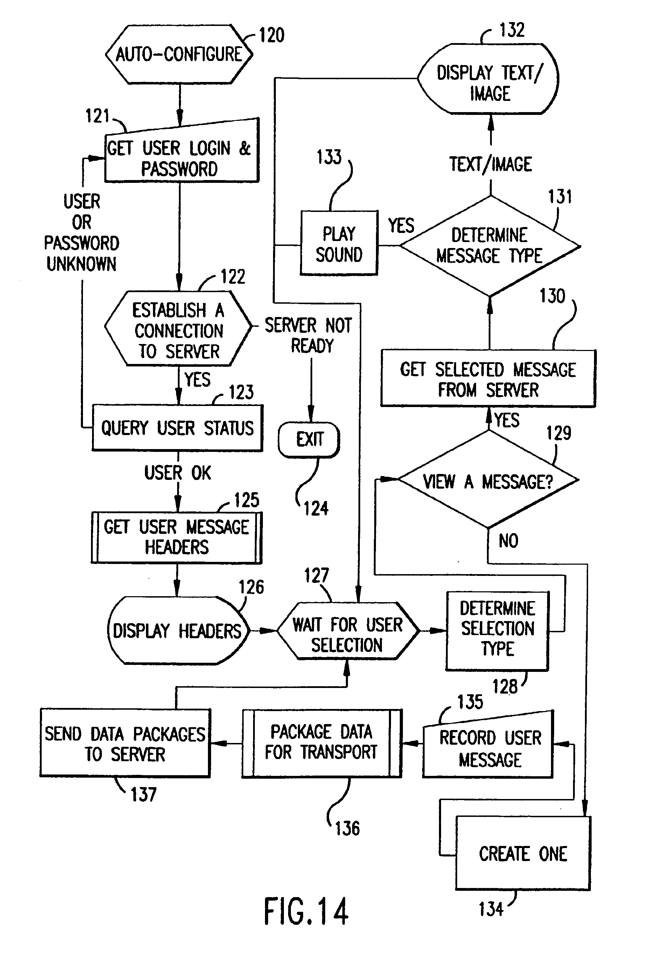

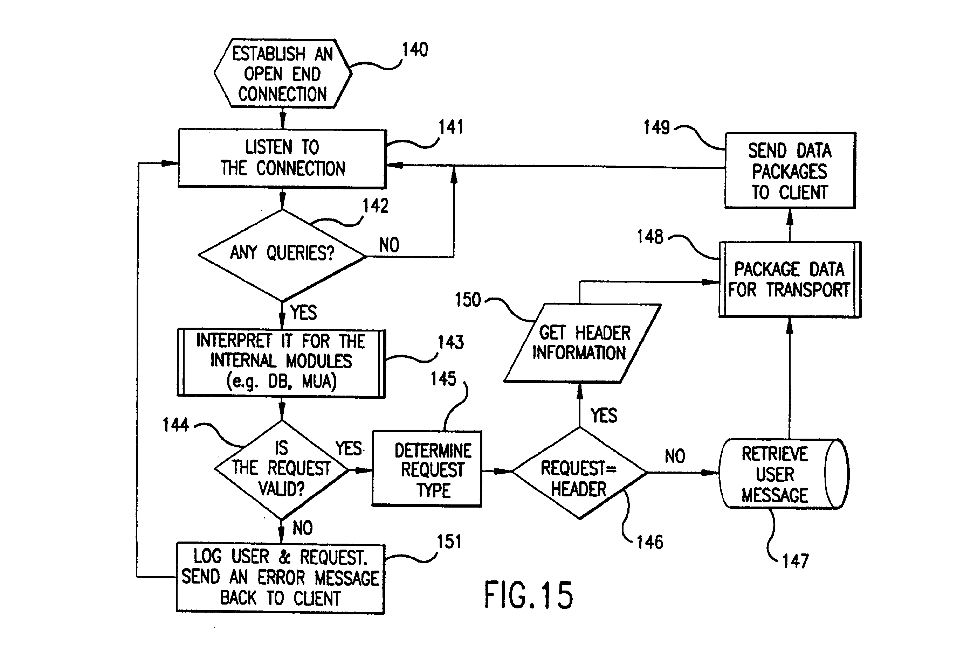

Operation of the distributed mail delivery system may best be understood with reference to Figs. 14 and 15. Fig. 14 displays the steps carried out by the user in a typical 'client process". On commencement of operation the client auto-configures itself based on the resources (for example sound or graphics) available on the machine [step 120]. The user logs in and enters a password [121] and a connection is established between the client and the server [122] at which stage information entered during the log-in and password process is sent to the server for verification [123]. If, however, the server is not ready for communication then the procedure is exited [124] and must be recommenced at step 120 or step 121. After the user status is queried [123], if the user or password is unknown to the server the process returns to step [121] and the log-in and password procedure is re-initiated. Otherwise the options available to the user are retrieved [125] in steps discussed in more detail with reference to Fig. 15 and displayed as headers to the user [126]. The user then enters his selection [127] and the selection type is determined [128].

The client assesses whether the user wishes to view a message [129] and if so retrieves the selected message from the server [130] in a series of steps described in more detail below with reference to Fig. 15. The client then determines the message type, for example audio or visual [131] and dependent on the message type either displays the text [132] or plays the sound [133]. The client then returns to step [127] and awaits a further user selection.

If at step [129] the user indicates that it is not desired to view a message then a message is created [134], recorded [135], the data of the message is packaged appropriately for transport [136], for example by the protocol stack 111 shown in Fig. 13, and is sent to the server [137] by the transmitter 110 and antenna 109. The client then returns to step [127] and awaits a further user selection.

The client machine includes suitable input means, for example a keypad and display means for example an LCD display for the entry of user selection choices, message information and for the display of messages. In addition a speaker and microphone may be provided for the recordal and playback of audio messages. A portable computer device such as that shown in Fig. 9 may, for example, be used as the client 101. In that case, auto-configuration of the client is carried out partially in dependence on the type of module 22 inserted into the main body 21 of the portable computer device 20.

Referring now to Fig. 15 the steps of a typical "server process" are shown. The server operates as a continuous process but, in order to save system resources is mostly in a stand-by mode where it simply listens to the local network. Accordingly in step [140], on initiation, an open end connection is established and the server monitors the connection [141]. If any queries are received [142] the server proceeds to the subsequent steps but otherwise continues to monitor the connection [141]. On reception of a query the server "wakes-up", interprets the query to establish which of the internal modules of the server is designated [143] (for example data base storage 106 or mail user agent 107) and if the request is valid [144] the request type is determined [145]. The request may be a HEADER which is sent to the client to present user message headers (corresponding to steps [125] and [126] shown in Fig. 14); accordingly at the request for a header [146] appropriate information is retrieved [147], is packaged for transport [148] for example at modules 104,103 of the server and is sent to the client [149]. The server then returns to monitoring mode [141] listening to the connection with the remainder of the network.

If at step [146] the request is not for HEADER information then the server retrieves any user messages [147] that are stored in respect of the identified user (for example on the basis of the log-in or password information entered at the client) and the data is packaged and sent as described above in relation to steps [148,149]. The system then returns to monitoring mode [141].

It will be seen that steps [142-147] are carried out by the query engine 105 of the server, user message data being retrieved from the memory device 106 of the server.

Where, at step [144] the request is not valid then the user and request are logged and an error message is sent back to the client [151]. The system then returns to monitoring mode [141].

The system described above requires far less data storage on the client terminavcomputer and thus is particularly (although not exclusively) suitable for hand-held computers with basic network capabilities. The system thus resolves the problem of mail box locations as well as releasing the hand-held host and the data storage and retrieval responsibility by treating the mail delivery service as two cooperative and independent processors that communicate with each other using basic network protocols.

In effect, unlike conventional mail delivery service systems, the distributed mail delivery service uses the underlying network to actively present enquiries to the server regarding the message status relating to a particular user, rather than using a directory structure and relying on a file system. Because all enquiries are directed to one server, multiple connections for a single user can be identified and refused, the server is the only point of connection to external entities, offering a more secure delivery system and the server offers a view of the mail delivery service to the end user which is independent of the actual matter stored by the server.

In addition clients are relieved of the responsibility of storing or directly retrieving any of the actual data. Messages are delivered via the network on a demand basis, that is when required by the user, and the client portion of the distributed mail delivery service simply translates user requests into a series of commands which are forwarded to the server in the form of queries. If the queries are validated the server returns the necessary data to a client in response to the queries. By virtue of the separation of tasks the system designer gains the freedom to modify components of the system independently. For example it may be initially decided that the server should store messages using a simple mail box scheme, but if the capacity or speed or efficiency of the system subsequently needs to be enhanced as a result of the increased burden placed on it by an increasing number of users and messages, the server can revert to using a complete database management system. Any such modifications will, however, remain hidden from the client portion and the client portion can effectively remain unaware of the underlying structures of the server indefinitely.

Similarly, the client portion may be modified for example to move from a character-based user interface to a graphical-type interface in which case the server may remain unaware of the modifications as the basic data query and exchange mechanism is unchanged, the server remaining unconcerned about the manner of data presentation at the client portion.

Accordingly a voice mail delivery system is implemented. The client portion may run on a PC compatible platform although it could be ported very simply to other platforms. The server can operate on UNIX or DOS platforms. The client requires less than 256kbytes of local storage.

It will be seen, therefore, that the proposed delivery system offers multiple advantages over current mail box schemes, providing flexible and independent modules which are simpler to maintain and modify and which offers a generic mechanism by which data transfers can be implemented over data networks. As it is a distributed system it does not require the presence of a network file system and simply relies on local storage.

In particular, because a server is provided on each local network for dealing with the clients within a local network and also for communicating with other servers on other local networks the roaming capabilities of the system are enhanced. The distribution of mail processing between the various local networks is in contrast to the centralized hub system in conventional mail delivery systems and allows simplified and accelerated mail processing and transfer in combination with a roaming portable computer.

Further aspects of the present invention will be discussed in conjunction with Symbol Technologies Inc. spread spectrum wireless networks: Spectrum One (operating at a frequency range of 902 to 928 MHz) and Spectrum24 (operating at a frequency range of 2.4 to 2.5GHz). However, the embodiments discussed are applicable to other wireless communications systems.

### Part 1: "symbol" Terminal Emulator Program (STEP) and pen-based mobile units/terminals.

The "symbol" (a Trade Mark) terminal emulator program (STEP) is a tool used to format applications for pen-based mobile units such as the mobile unit 21 shown in Fig. 9.

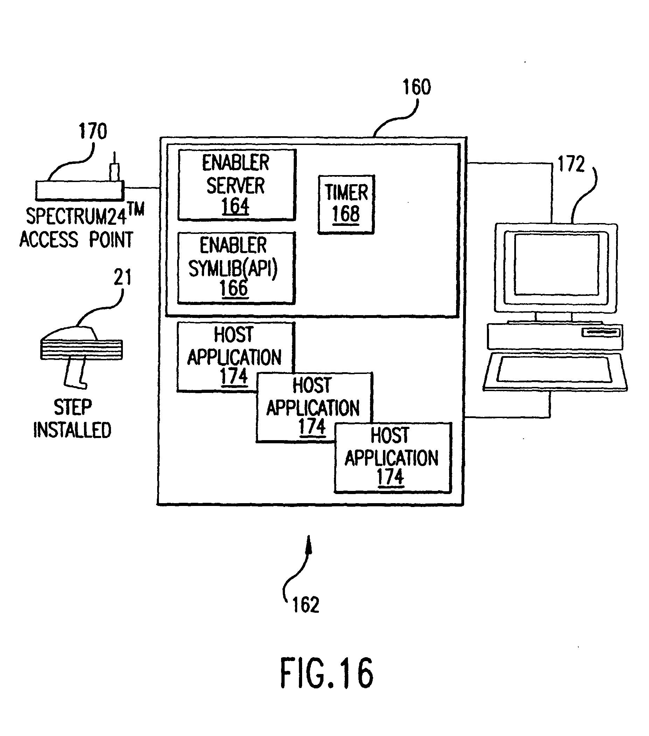

An example of the Spectrum24 system is shown in Fig. 16. The STEP resides in the mobile units 21 and works with an enabler development system 160 on a host computer 162 to execute a predefined set of commands sent from the host computer 162. The enabler development system 160 includes an enabler server 164, an enabler application program interface 166 and a timer 168. The enabler development system 160 receives input from the Spectrum24 access point unit 170. The host computer 162 is controlled by a terminal 172 to run host applications 174.

The STEP provides the mobile units 21 with the interface and logic functions necessary to communicate over the radio network, and controls all input, output and display functions at the mobile unit level, including keyboards, displays, scanners and peripherals, and printer support.

The STEP provides commands that allow the administrator to create a selection of data entry fields fro the mobile unit operator. For example, these commands would permit the operator to: (a) enter data from a keyboard and scan bar codes; (b) send multiple messages to the host in the same transaction; and (c) control the type of data entered and validate entered data. Further, for display purposes STEP allows the administrator to (a) display data at any location on the mobile unit screen; (b) clear the entire mobile unit screen or clear a single line; (c) save and restore the mobile unit screen; and (d) control the backlighting feature to view the screen in the dark.

The STEP acts as a power manager to reduce demands on the batteries in the mobile units 21, enabling them to operate longer between charges and extending their overall life.

By installing STEP on the mobile units 21 forms can be created and displayed on the display screen 23 (shown in Fig. 9). Forms can include messages, prompts and data entry fields. This permits an operator to recall a stored form for execution on the mobile unit 21; repeat the execution of a stored form for on-line batch processing; and erase all stored forms and determine the date and time of the last form definition.

The STEP enabled mobile units 21 allow the host computer 162 to read data files stored in the unit 21; sound the mobile unit's 21 alarm; interrupt mobile unit 21 input activity; and log off the mobile unit 21 from the host computer 162. This allows the operator to use the mobile unit 21 to collect data without being logged on to the host computer 162; set and save system parameters; download files from the host computer 162 to the memory in the mobile unit 21; and perform other maintenance tasks.

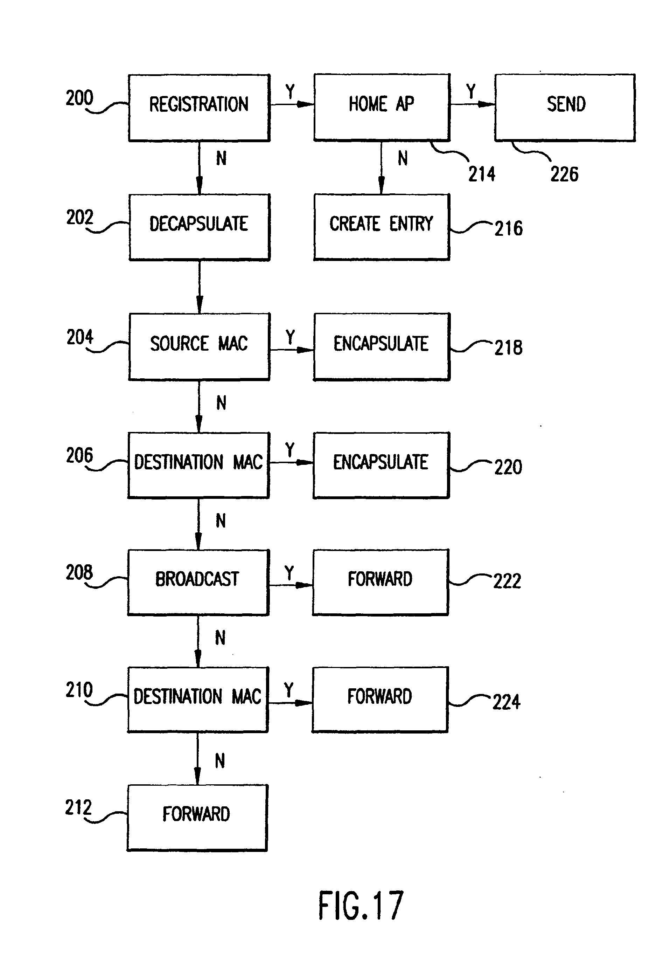

Fig. 17 illustrates a typical conventional flow chart of the actions taken by the access point 170 when it receives a packet of data from he mobile unit 21 on the wireless network. If the packet is a registration packet, determined at step 200, then the access point 170 processes the information carried by the packet at step 214. The type of association is determined by examining the IP address of the mobile unit's 21 home access point and does the control message exchanges accordingly at steps 216 and 226. If the packet is not a registration packet, as determined by step 200, then the packet is decapsulated at step 202.

If the short term address mapping tables (ST-AMT) of the access point 170 has an entry for the packet's source MAC address, determined at step 204, then the packet has originated from the mobile unit 21 that is away from its home stationary data link (SDL) network and processing passes to step 218. At step 218 the access point 170 encapsulates the packet within a UDP packet with the IP destination address set to that of the mobile unit's 21 home access point.

If the long term address mapping tables (LT-AMT) of the access point 170 has an entry for the packet's destination MAC address, determined at step 206 then the packet is meant for a mobile unit that is currently outside its home access point group (APG) and processing proceeds to step 220. At step 220 the access point 170 encapsulates the packet within an UDP packet with the IP destination address set to the destination mobile unit's local access point.

If the packet's destination MAC address is a broadcast address, determined at step 208, then the packet if forwarded at step 222 on its wired and wireless interfaces. If the destination MAC address in the packet appears in the access point's mobile host table (MHT), determined at step 210, then the packet is encapsulated within a wireless link layer packet and forwarded on the wireless interface at step 224. Otherwise, the packet is forwarded on its wired interface at step 212.

### Part 2: Assigning domains and IP addresses to said pen-based mobile units 21.

The following embodiments of the present invention deal with assigning domains and IP addresses to the mobile units 21 to operate in a wireless LAN technology, such as the previously discussed Spectrum One and Spectrum24 systems.

According to an embodiment of the present invention the domains and IP addresses are hard coded. The hard coded embodiment involves setting the domain and IP address of the mobile unit 21 in the configuration files associated with the Spectrum24 drivers and protocol stacks.

The hard coded embodiment provides a relatively simple implementation of domain and IP address assignment for Spectrum24 network installations when only a few mobile units 21 are used that always use the same APG on the same network. In addition, a high degree of security is provided since the ability to detect and assign domain and I P addresses are available only in the configuration area, not in the operational area.

The hard coded configuration of each mobile unit 21 ensures that the domain and IP address information are nonvolatile. This insures that even cold booting the mobile unit 21 will not require reconfiguration. All the access points 170 in the target APG can be configured to use the hard coded domain. The server can be set up to reserve permanently (without any timeout) the hard coded IP addresses for use by each hard coded mobile unit 21.

Another embodiment of the present invention involves the application-selection of domains and IP addresses. This embodiment is suitable for situations where a system administrator manually configures the mobile units 21 before their use by operators by setting the domain and IP address. In particular, when mobile units 21 are the only nodes on the network or when the system administrator set domains and IP addresses by referring to a master list maintained on a network server the application-selection system is advantageous.

For situations where the operator must identify the selections as he moves between APGs or networks a more sophisticated application is provided to allow the system administrator to establish logical names for domains and IP addresses so that operators can pick the appropriate settings by choosing a meaningful name such as truck, warehouse, depot, etc.

The application-selection method allows for the dynamic adjustment of domain and IP addresses under application control across APGs and networks.

A further embodiment of the present invention involves the access points-assignment of domains and server-assignment of IP addresses. This method is suitable when the manual assignment of domains and IP addresses is impractical due to many mobile units 21 or due to the complexity of the network.

AP-assignment of domains requires configuring access points 170 to allow for an automatic configuration. Using the access point 170 access control list (ACL) features, security can be enhanced by giving the access points 170 a list of the MAC-layer addresses of all the mobile units 21 allowed. This list can be larger than the number of mobile units 21 actually being serviced at any given time, allowing the timesharing of the capacity of the access point 170 among a large set of intermittent use mobile units 21.

Server-assignment of IP addresses requires the existence of a mechanism within the protocol stack, supported by services and utilities in both the server and the mobile unit 21, to allow dynamic allocation of IP addresses. BOOTP and DHCP are two common mechanisms for dynamic allocation.

BOOTP works by having a file on the server for each possible mobile unit 21, selected by the mobile unit's 21 unique MAC-layer address, that provides the IP address to be used for that mobile unit 21.

DHCP works by having a database on the server that records the IP addresses that are in use (by MAC-layer address) and the IP addresses that are available for dynamic assignment. When a mobile unit 21 requests an IP address, the database is searched for the MAC-layer address. If an IP address is already allocated to this mobile unit 21, the it is simply returned. If no IP address is allocated to the mobile unit 21, and one is available for dynamic assignment, it is allocated to the mobile unit 21, recorded in the database and assigned to the mobile unit's MAC-layer address, and returned to the mobile unit 21. The DHCP server can set to timeout when a dynamically assigned IP address has not been used for some time and return it to the available list or to keep IP addresses permanently assigned once allocated to a mobile unit 21.

The domains and IP addresses can be stored in volatile storage, but would need to be reentered following a reboot. However, the necessary address information can be stored onboard the flash of the mobile unit 21, or on the Spectrum24 adapter card, or on RAM disks or PCMCIA storage cards.

The AP/server-assignment methods provide the ability to program ACL information via a personal computer attached to the same hardwired router as the access point 170. Further, the AP/server-assignment methods allow for automatic assignment of complying domain and IP addresses as needed, and allow mobility across APGs and networks.

According to another aspect the invention addresses the problem of the necessity of a specialized program for parsing and interpreting high density data records embedded in bar code labels. In accordance with the invention it is proposed to distribute not only the bar code data on a high density label, but also information describing how to create an interface capable of reading the data from the data record label.

Implementation of the invention will be familiar to the skilled man in the operation of the Internet Web Browser suitable for reading, for example, Hyper-Text-Markup-Language (HTML) files. Those files are used to describe an interface to be built by Web Browser. In the present invention the mobile unit includes a reader or Browser for scanning a high density bar code label that contains a program script such as HTML, VB script or a specialized compressed version of either. The script is parsed and interpreted by Browser which constructs a user interface at run time and presents it to the user. The user interacts with the interface by scanning data labels and interacting with any of the program's controls presented to the user to property process the data. According to one aspect a new data or interface level may be printed by the user that can be applied to the object being processed. It will be appreciated that, as bar code label densities increase, the capability of storing the actual interface and the data record in a single bar code label will appear.

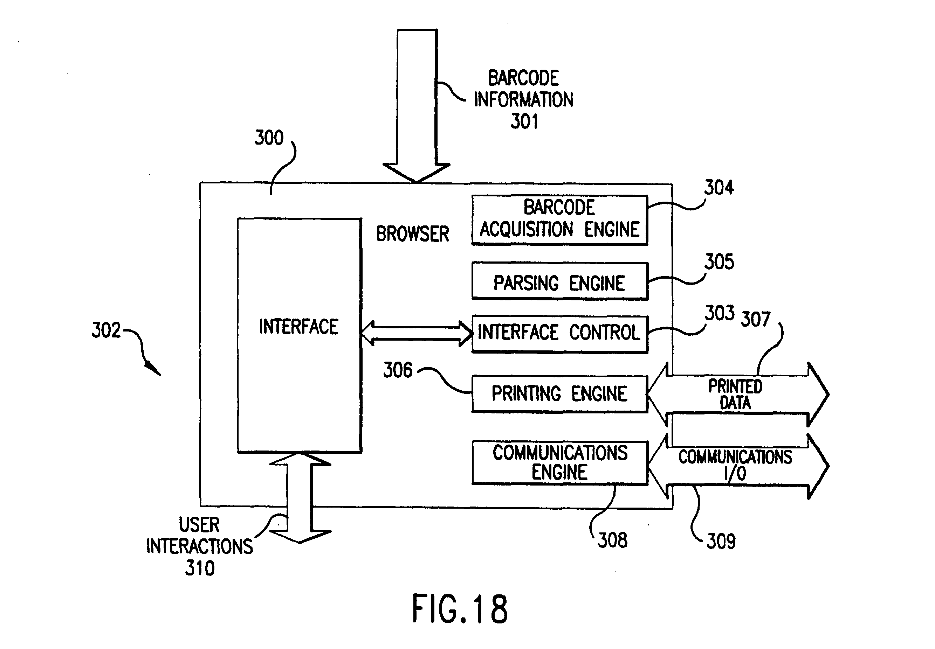

Fig. 18 shows the system of the invention in more detail. The system includes a Browser 300 to which bar code information 301 is input. An interface 302 is constructed at run time and an interface control 303 is provided. The Browser 300 further includes a bar code acquisition engine 304, a parsing engine 305, a printing engine 306 with a printed data interface 307 and a communications engine 308 with a communications input/output interface 309. The user interacts with the interface via a further interface 310.

It will be appreciated that the manner in which the information is encoded in the bar code label will be familiar to the skilled man, and that the software and hardware required will also be familiar to the skilled man.

This system is particularly advantageous with respect to transportation and identification of goods. The shipper of the goods can distribute a program script label with the goods that is read by the receiver's Browser. The program script label shipped with the goods contains the information required to allow the Browser to create an interface at runtime to read and process the data for the container of goods shipped.

Logistical systems benefit greatly from a system such as this, because unidentified materials in the field can quickly be identified and processed by any unit containing the Browser.

The administration of the hardware and software contained in these systems is greatly reduced, because the Browser contained in the Mobile Unit (MU) stays static. Only when new Browser features need to be distributed do the MUs need to be updated. All interfaces are distributed on high density barcode labels. This system of application program distribution truly makes the computer system general purpose. An infinite number of different interfaces can be read in and executed by the Browser. No longer are users limited by secondary storage on their MUs for storing application programs.

Using this new system, any computer system equipped with a general purpose interface reader application (Browser) can create an interface "on-the-fly" that is capable of reading processing information on the accompanying data record labels.

Systems deployed in the field no longer need their application programs updated when changes to the program file is required. Only the program script label need be replaced. The number of different data formats that can be processed by a particular computer system is limited only to the number of program script labels available to the user.

Different users of such a system can freely exchange information because the interface information needed to process the data files is distributed on a label along with the data files themselves. Each user no longer needs a copy of the specialized application program that was previously required to read the data label.

According to another aspect of the invention there is provided a bar code scanning OLE (Object Linking and Embedding) COM (Component Object Model) object for communicating commands and bar code data over a wireless link. As discussed in more detail below the object uses OLE automation to be a "plug-in" development OLE control extension. It thus becomes an in-process OLE automation object. The in-process OLE automation object controls a bar code scanning device over a wireless link on a remote client. The remote device enables a bar code reader and collects the bar code information, returning the data over the wireless link to the OLE automation object.

The general principles of OLE architecture will be well known to the skilled man. In the present embodiment, a scanning object is implemented as an OLE control. OLE controls are re-useable software components designed to work in containers that support OLE 2.0. OLE controls are more powerful and more flexible than previous systems such as VBX Custom Controls in particular as, unlike the VBX Custom Controls that they are replacing OLE controls support 32 bit environments and are not limited to Microsoft Visual Basic (Trade Marks) .

OLE controls are designed to work in any container that supports OLE 2.0 including not only Visual Basic 4.0 and beyond but also OLE-enabled container applications such as Microsoft Office (Trade Mark). Additionally OLE controls work in third-party OLE-enabled applications in development tools.

OLE architecture enables different software objects to communicate to each other using a binary interface mechanism. This allows software objects to be developed separate from each other and bind very late at run time. The software interface is a contract between the container and the control on how the two software objects will interact and exchange information.

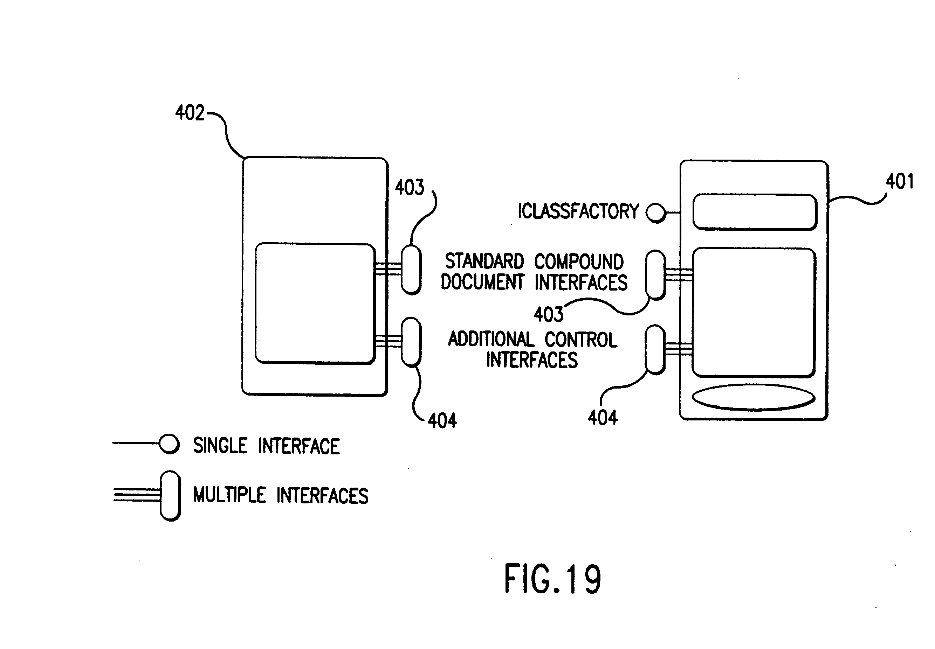

Under the OLE architecture, the scanning object can be placed and activated in any of a variety of containers that support the OLE container interface. Fig. 19 shows the general mechanism between a control 401 and its container 402. As can be seen the mechanism includes standard compound document interfaces 403 and additional control interfaces 404, each comprising multiple interfaces.

In such a system the scanning control appears to become a seamless part of the container's environment. Through the exposed interfaces the two objects communicate and integrate with each other.

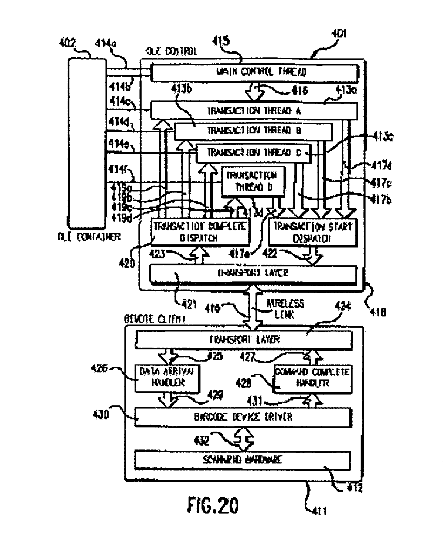

In addition, as shown in Fig. 20, the scanning control 401 communicates over a wireless link 410 with a remote computing client 411 to control the bar code reading device 412. The scanning control 401 sends commands over the wireless link 410 by creating separate threads of execution 413a to 413d that send, receive and synchronize bar code reader transactions over the wireless link. As shown in Fig. 20, the OLE container 402 and control 401 communicate via lines 414a to 414f. The OLE control includes a main control thread 415 which communicates with the OLE container 401 via lines 414a,414b and with a first transaction thread A 413a via a line 416. Each of the transaction threads 413a to 413d communicate along a respective line 414c to 414f with the OLE container 402. Each of the threads also outputs through a respective first line 417a to 417d to a transaction start dispatch function 418 and receives an input via a respective second line 419a to 419d from a transaction complete dispatch function 420. The transaction start dispatch function 418 communicates with a transport layer 421 in the remote client 411 via a line 422 and a transaction complete dispatch function 420 receives input from the transport layer 421 via a line 423. The remote client 411 includes a corresponding transport layer 424 which outputs via a line 425 to a data arrival handler 426 and receives an input via line 427 from a command complete handler 428. The data arrival handler 426 outputs via line 429 to a bar code device driver 430 and the command complete handler receives an input 431 from the bar code device driver 430. The bar code device driver 430 communicates with the scanning hardware such as a bar code reader 412 via a line 432.

As a result users can develop applications using OLE-enabled development tools like Visual Basic 4.0. The user simply inserts a new scanning object into their project, sets required properties, writes necessary code for event notification and the scanning control seamlessly talks to the remote client bar code scanning device over the wireless link. To the application program it appears as if the scanning device is resident on its local hardware. The invention comprises a significant development over previous architectures comprising implementation of a local bar code scanner resident on a machine running a COM object. In particular the architecture of the invention allows control of the scanner through the wireless interface.

By virtue of the present invention there is in addition the capability of supporting future versions to be distributed via the distributed component object model architecture (DCOM). The interfaces between the control container and the control itself are binary and can be implemented by the operating system as Remote Procedure Calls (RPC's). Accordingly the OLE control can be implemented as an Active-X control to control devices over an Internet or Intranet link. This technology allows Web authors and developers to create a new generation of interactive Web pager and applications, for example Microsoft Internet Explorer 3.0 (Trade Mark). This implementation is of particular benefit in proposed systems whereby users will wish to integrate bar code scanning capabilities into their lntranetanternet-enabled applications.

The Intranet arises from the application of Internet technology to provide industrial strength mission critical applications to users within an organisation on an isolated LAN (Local Area Network) rather than for external connection to the global internet. Single function handheld computing terminals can then be built that connects to the LAN and execute predetermined applications to reduce significantly the cost per client when installing a network system. In an Intranet system, mission critical applications reside on the server, eliminating the cost of application deployment and lowering the cost of terminal configuration. The data collected is transmitted and saved on the server so little or no local data storage is needed on the handheld terminal. It will be seen, therefore, that such a system provides an ideal forum for the OLE scanning control object discussed above.

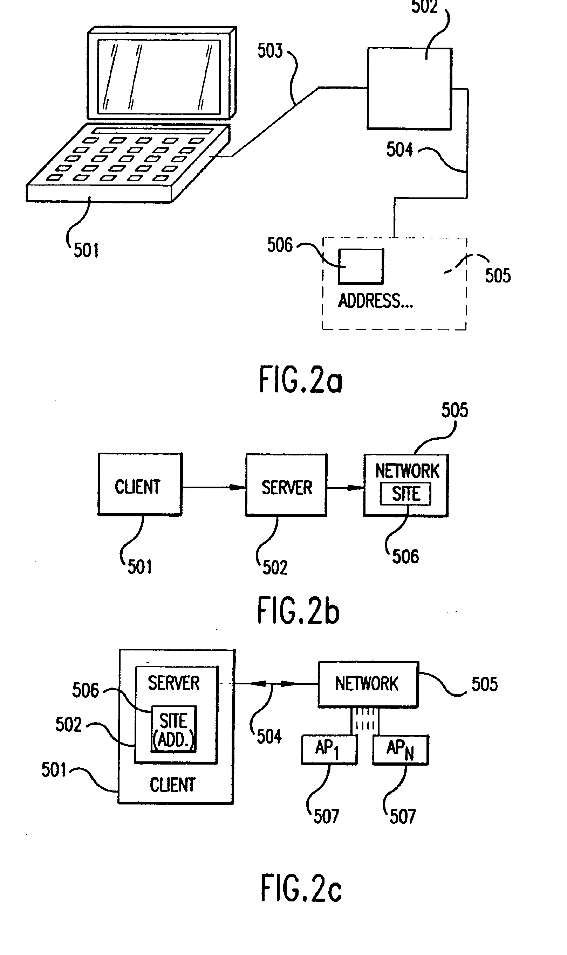

A conventional Internet link is shown referring to the schematic diagram at Fig. 2a, and block diagram of Fig. 2b and includes a remote terminal data device 501 comprising, for example, a lap-top computer, a PC or a mobile unit as discussed in more detail below linked to a server 502 via a suitable link 503 which can be a telephone link, incorporating a suitable modem, a wireless link or a cellular telephone link amongst other possibilities which will be evident to the skilled person. The server 502 is in turn interconnected via line 504 to the Internet shown schematically at 505. When the user wishes to access a web site the web site address is entered at terminal 501 and server 502 brings up the web site 506 at the given address from the Internet 505. Similarly when the user wishes to create a site, the relevant information is entered at terminal 501 and the site is created via server 502.

Whilst the system shown in Fig. 2a allows centralised site access and creation, it will be appreciated in certain circumstances the system is cumbersome, for example where it is desired to create a site very quickly. In addition, whereas in some circumstances a user will simply know what information is sought, and will "browse" through the Internet to find a site containing that information, in some circumstances the user may be entirely aware of the exact site which he wishes to access irrespective of the information contained at the site. In that case the centralised system shown in Fig. 2a can give rise to unnecessary delays.

An improved system according to the present invention is shown as a block diagram in Fig. 2c. Briefly within the client terminal 501 itself suitable server software 502 is retained. Accordingly the client is able to create an Internet site directly, the Internet site 506 being stored at the server again directly at the terminal 501. The client/server then accesses the Internet 505 via a line or wireless link 504. As is well known, the Internet can be accessed generally by access points AP₁ to AP_{N}.

As a result the invention allows a Internet site such as a web site to be set up at the terminal without the requirement of accessing a dedicated server, as appropriate server software is included at the client terminal. When a third party wishes to access the site, they will have or be able to obtain details of the client server address and can thus access the client server via the Internet.

A particular implementation of the invention arises in relation to client/servers provided in remote, mobile terminals communicating with the Internet via an access point with which it is in wireless communication. In that case data is entered at the mobile unit, generally relating to the physical environment at which the mobile unit is presently located such as an image of the surrounding scene. Users wishing to access that data merely need the client/server address. The address is entered at the relevant access point to the Internet and the site is pulled up directly from the client/server. It will be seen that the client/server can include a home page which is actually pulled by the user, the specific sub-pages at the site being accessible via the home page, once the home page has been accessed.

The system can use a data terminal of the type designated generally 510 in Fig. 3a. The central elements to the data terminal 510 comprises a digital camera having a lens 512 and a wireless Internet link 518.

Digital cameras are well known and the detailed structure will be apparent to the skilled man such that a detailed description is not required here. Briefly, however, the digital camera includes a lens system 512 for focusing an image onto a CCD (charge coupled device) array. The image is thus pixelised and encoded, for example as a bit stream. The encoded signal is decoded and displayed on a visual display screen 514 or output as hard copy. A "still" image is obtained in the same manner but by recording an instantaneous image. The majority of the components of the digital camera are not shown in Fig. 3a for the purposes of clarity. A CCD camera is preferable over, say, a laser camera as images can be recorded from a greater distance.

The data terminal 510 further comprises a keyboard 516. In order to record an image the lens 512 of the data terminal 510 is directed at the scene to be recorded. This is preferably displayed on the visual display screen 514. When a desired image is isolated a button, for example on the keyboard 516, is pressed and a still image recorded.

In the embodiment shown, the data terminal 510 further includes various optional and required components. The principal required component is a wireless signal transmitter 518 which, as discussed in more detail below, relays the recorded image to a remote access point for distribution from that point. Optionally the data terminal 510 further includes a microphone 520 for recording, for example, a verbal description of the recorded scene, a bar code reader 522 allowing alternative or complementary operation of the data terminal 510, a physical interface 524 for downloading of information stored in the data terminal 510 to a terminal to which it is connected by cable or other link and a printer output slot for outputting a hard copy of the image, additional information, or as discussed in more detail below, a bar code symbol representative of the stored image. In addition, as discussed above, the terminal further includes server software allowing creation of a web site at the terminal. The web site can contain, for example, recorded images or sounds from the environment of the terminal together with text input at the keyboard and/or the user's recorded verbal commentary. A further feature that can be incorporated into the terminal is a global positioning system (GPS) of a known type. The GPS communicates with GPS satellites via a suitable antenna (not shown). As a result the specific geographical location of the mobile device can be immediately ascertained. This can be provided as additional information broadcast by the device and can also be used by a central tracking system to ascertain where all the devices are at a given time.

Once again specific details of the various individual components will be well known to the skilled reader and, for the purposes of clarity, are not repeated here.

In order to minimise costs the network architecture is designed to minimise the amount of data traffic over the highest cost communication links. This can be done for example by selecting a communication route which utilises the cheapest available lines. Where this can lead to delay a prioritisation system can be introduced ensuring that communications in respect of which delay is unimportant can be sent on a cost optimised basis whereas those signals for which the speed of transmission is important are sent on a urgency basis. For example where wireless communication gives rise to high costs as against physical interface communication, low priority information can be downloaded physically from the terminal to a cradle to reduce the power and processing burden and general cost burden.

An alternative terminal configuration can be based on the arrangement disclosed in US Application Serial No. 08/691,263, filed August 2 1996, assigned herewith. That specification describes a modular type terminal having interchangeable data collection modules, together with a detailed discussion of communications between mobile units and the Internet.

The system can be used for coverage of news events. A journalist holding the terminal can store images of a news event, and record a report on the event. A web site can be instantaneously set up at the terminal via the internal server holding the report and other data. Accordingly a user wishing to find out about the news event merely needs to access the site via the network. The address could be known to the user or could be available from a central site on the Inteet disclosing where various mobile units are located, and providing their site addresses. It will be seen that the technology could further incorporate a pay-per-view type system whereby the user is automatically billed for accessing the site. It will be seen that many other applications can be envisaged. For example a police report of the scene of an incident, or an insurance operative report can be accessed actually on location at the incident rather than relying on transfer to a stand-alone server for creation of a web site at that level.

According to the embodiment any suitable form of wireless communication between the client/server and the Internet can be utilised. Such systems are well known for roaming units, whereby access points to the Internet arranged to receive communications from mobile units are located at various geographical points. Known algorithms can be used for selecting which access point is the most suitable. The communication can itself be by radio waves or an optical link such as an IRDA Standard Protocol. It will be seen that another of the advantages of the system is that the site is stored at the terminal and need only be down-loaded on demand via the wireless link thus reducing the cost that would be incurred by transferring data continuously. Data that is never requested can be transferred over a less costly connection at a later time.

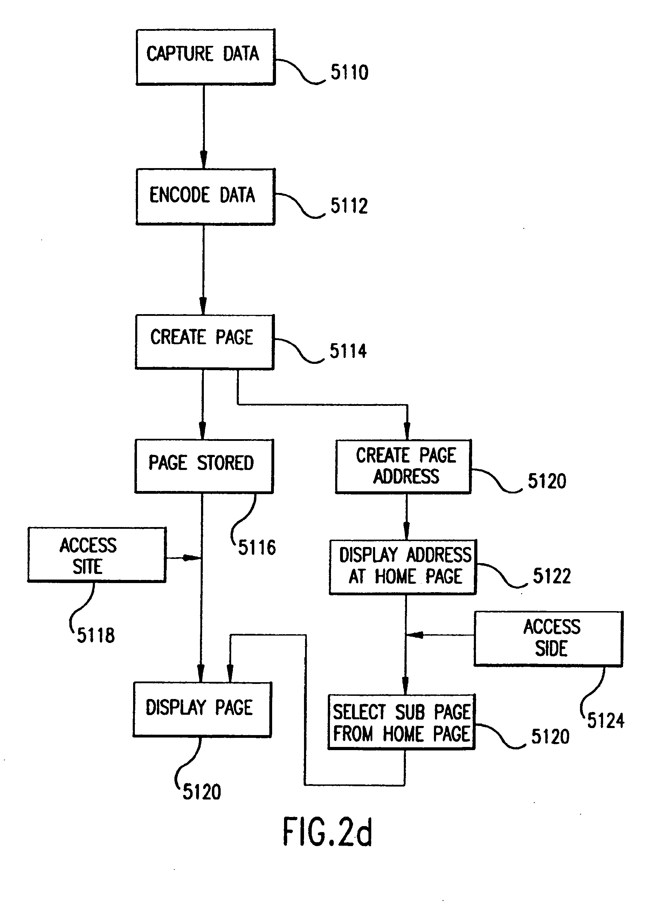

Referring to Fig. 2d a flow chart of the operation of the terminal 501 is shown. At step 5110 the desired data, for example an image or an audio recording is captured. The data is then encoded at step 5112 into a suitable format to be rendered as a web page, for example by creating a bit map. At step 5114 the encoded data is processed to create a suitable web page according to the desired format, as determined by the server software and any user input. The process can then branch to step 5116 where the page is stored at the terminal. When a page access request is received at 5118 by a remote user called up the known address for the terminal the page is displayed at the terminal web site. According to an enhanced system, the process branches at 5114 also allowing a specific page address to be created for the particular data stored in the given process, at step 5120. The address and details of the page stored at the address are displayed on a home page at step 5122. This allows a menu to be created for the terminal such that more than one page is available. Accordingly when the site is accessed at 5124 by a remote user the remote user has the option of selecting the relevant sub-page displayed at the home page at step 5126, allowing display of any desired page, returning to step 5120. The system thus allows quick and easy operation with no programming required and in particular no HTML requirement. An instantaneous web page can be set up using the server software, the image to be displayed being stored simply by pointing the terminal at it and "clicking". Once again, the system can be designed with cost optimization in mind, ensuring that a minimum amount of data traffic occupies high-cost communication links.

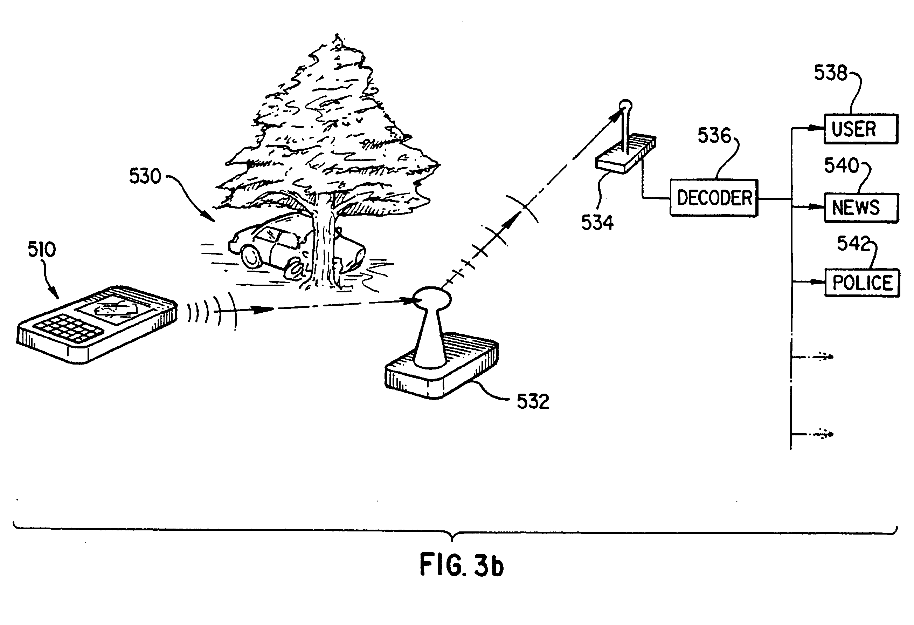

Referring to Fig. 3b one possible implementation of an alternative embodiment of the present invention is shown. Where, for example, the police or other authorities, or an insurance operative wish to record details of a scene shown generally at 530, the image is captured as a still digital camera image by the data terminal 510 in the manner discussed above. The stored image is encoded, for example as a bit stream and the bit stream is transmitted or relayed via the transmitter 518 to a remote point.

In the embodiment shown the image information is relayed from transmitter 518 to an intermediate booster transmitter 532. This can either be one of a network spread across an area or can, for example, be carried in the data terminal user's vehicle or a carrying case. The use of a booster transmitter 532 reduces the broadcast power requirements of the data terminal 510 allowing more space to be dedicated to data storage/processing means or accessories, and increasing the battery life. It will be appreciated that the booster transmitter is, however, optional and in many cases will not be required. Transmission can take place via a RF wireless link microwave or other suitable wireless communication method. Where the vehicle is part of a larger GPS monitored tracking system the arrangement of the present invention can be a module incorporated into the system.

Either the transmitter 518 in the data terminal 510 or the booster transmitter 532 relays the image information to an access point 534 including a receiver for receiving the relayed information signal. The received signal is input to a processor/data storage/decoder device 536. The image can then be transferred to any desired device, for example a central data storage device for the user to access on return to his premises (for example an Intranet or LAN), or a news and information network (such as the Intemet) where it is desired to broadcast the image, or to a police or other authorities' information database where it is desired to record and document the image. The transmitted signal from the data terminal 510 may also include information such as the desired destination of the image, additional information relating to the circumstances, encoded information representative of recordings of any verbal messages or recordings of sound messages further explaining the circumstances as recorded by the microphone 520. Information relating to the circumstances, or the destination of the image can be input via keyboard 516.

Where the web page is created on site at the terminal using a internal server, the transmission system described above can equally be used for third party access to the web page.

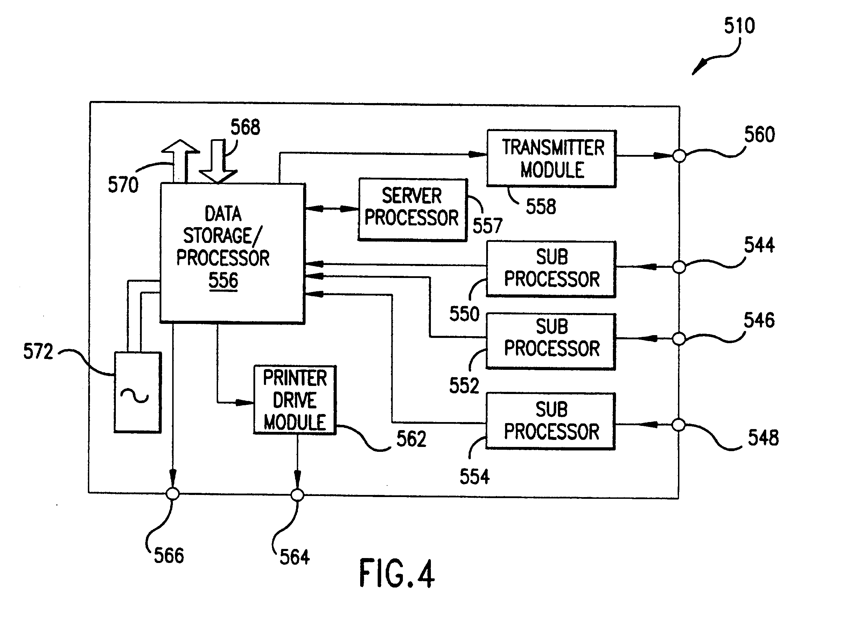

A block diagram showing the components of the data terminal 510 is illustrated in Fig. 4. The data terminal includes various inputs comprising suitable transducers for converting the input signals to electronic signals. The inputs include the digital camera input 544 including a CCD array transducer, an audio signal input 546 including a microphone transducer and a bar code symbol signal input including, for example, a CCD array. Each of the signals is input to an encoding or digitising sub-processor respectively 550,552,554, and the processed signal from each sub-processor is transferred to a data storage and processing device 556. The data is stored, processed and relayed as appropriate to various outputs. Data relating to the image captured by the digital camera 544 and, as appropriate, any bar code data or audio data is transferred to a transmitter module 558 and is transmitted as described above at output 560. A hard copy of the still image, or, as discussed below, a bar code symbol representative thereof is output via printer drive module 562 and output 564. Where it is desired to download stored information via a physical interface this is done at output 566. In addition the data store/processor 556 receives information input to the keyboard 516 via a line 568 and sends the image from the digital camera input 544 to the visual display screen 514 via line 570. The system as a whole is powered by power supply 572, for example a battery. Where the terminal is configured to create a web page on site, a server can be incorporated in hardware (or software or a combination of hardware and software) as shown at 557.

Accordingly it will be seen that in one aspect the image data can be captured automatically and transmitted to a common database accessible to authorised users. The images could be transported and/or accessed via video servers, collaborative work group software and distributed multimedia, and implemented by desktop video teleconferencing. Processing of the image can be carried out on the raw data once it has been transmitted to the main network, allowing a further reduction in the processing requirements and hence the power and space requirements for the data terminal itself.

A particular advantage of using a digital camera is that the image can be stored at high to medium resolution and transmitted electronically with a minimum of intermediate processing.

It will be seen that a wide range of applications are available, in particular relating to industries generally in which photographic (digital) images are regularly taken in the field. An alternative to the insurance claims documentation application discussed above, where bids/estimates were involved the item in respect of which the bid/estimate is provided, documenting for example the work required on the basis of which the bid or estimate was based could be recorded. Similarly where repair work or improvement work was contemplated, an appraisal could be made taking into account stored images. The system could be used as a general aid to documentation of items or circumstances. As discussed above, the system could be implemented in law enforcement. For example the scene of a crime or an accident could be stored and relayed or accessed. Indeed felons could be photographed and the image compared against a suitable database for identification purposes using known image comparison techniques. The system can also be used as a preliminary aid to more exhaustive documentation of circumstances such as proofing and/or test shots. The data is preferably relayed as determined by a network architecture designed to reduce transmission costs by minimising transmissions over high-cost communication links.

As will be seen for all of the above possible applications and all other applications the system includes particular and significant advantages, in particular providing immediate access to images for third parties privy to the image distribution network, providing access to all users simultaneously as desired, expediting processing time (as a result of immediate accessing), improving accuracy and/or efficiency, as a result of the availability of more precise information in particular in high resolution implementations, and associated cost savings in particular resulting from decreased processing time and improved accuracy.

Yet a further possible implementation of the arrangement would be as a remote fire alarm or smoke detector. A terminal including the basic components of a digital camera or other image recordal means and network connectivity can be permanently or detachably mounted at a zone where it is desired to monitor for fire, smoke, poisonous gases or any other such hazard. The terminal further includes a hazard detector of any suitable type such as a smoke detector, a heat detector, a noxious substance detector or other. All these detectors are well known to the skilled man and do not require further description here. In the case, for example, of a fire alarm terminal, when a heat detector detects that the ambient temperature has risen over a preset limit the terminal is activated to capture a still or moving image of the scene. At the same time the terminal notifies the relevant authorities such as the fire services and the image is transmitted in a manner discussed above to an access point at the fire station. Accordingly the scene can be reviewed and it can be assessed whether a true fire risk exists or whether other activity to which the increase in temperature is attributable can be detected such as cooking activity. As a result false alarms can be to a large extent avoided. It will be seen that a similar approach can be adopted for other hazard detectors, where an image of the scene is transmitted to suitable authorities when a potential risk is first detected for further assessment before full mobilisation.

A further implementation for which the system of the present invention according to a further aspect would be particularly suited and which would benefit from the advantages discussed above is in the field of goods transfer, for example parcel delivery. When a damaged parcel is received there is no way to know immediately the condition of the parcel when shipped. The system of the present invention would, however, be able to acquire the image and transmit it to a remote location or create a suitable web page on site. The image could then be accessed at the receiving depot and compared with the actual received parcel to establish whether the condition had changed in any way. An alternative option would be to print the image information in a bar code format, the bar code itself being attached to the parcel itself. The bar code symbol could be decoded at the receiving depot, once again to compare the image with the received parcel. Evidently a high resolution bar code symbol will be required, for example under protocol PDF 417. The reader shown in Fig. 3a includes the capability for such an arrangement including a printer and printer slot 526.

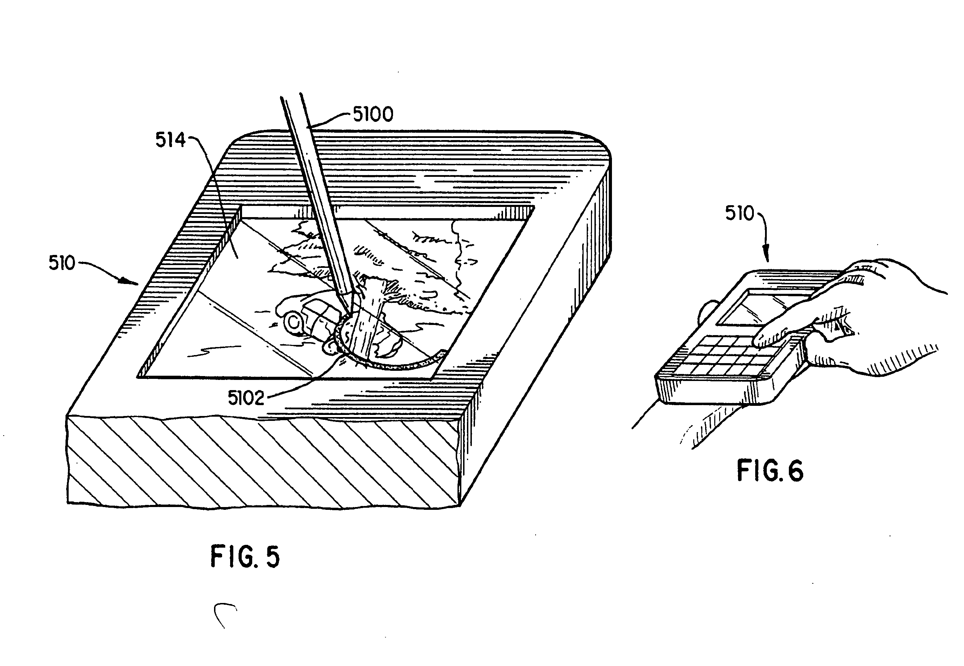

It will be appreciated that the embodiments described above relate to specific possible implementation of the invention, and that the invention embraces a number of alternatives. For example, as shown in Fig. 5 the data terminal 510 is configured with ergonomic considerations in mind, fitting comfortably into the palm of the user's hand. As a result the data terminal 510 can be quickly and accurately directed towards an image to be recorded, using the visual display screen to ensure that the image is as desired. At the same time the keyboard can be manipulated comfortably using the user's other hand to capture the image, input additional information and so forth. Alternatively the terminal may be in the form of a conventional camera, or a video camera, or any other appropriate configuration allowing image capture, and, preferably, data input.

The digital camera preferably includes auto focus capabilities and manual zoom capabilities with a separate button/trigger for zooming, which button/trigger may form part of the keyboard or may be provided separately. The manual zoom feature will assist in taking close-ups of the subject to be imaged. As mentioned above, a printer, for example a low density, low quality printer can be included in the data terminal, or provided as an add-on, so that a hard copy of the image is available in the field. As also discussed above, the image could be printed in PDF 417 format for subsequent decoding.

Fig. 8 shows an alternative configuration for a data terminal. The terminal 510 contains generally all of the components discussed in relation to the other embodiments herein. However the terminal 510 is configured in a 'point and shoot' design and includes a grip portion 5120 and a barrel portion 5122. The grip portion is configured to sit comfortably and easily, with optimum balance, in the user's hand and further carries a trigger 5124 and a thumb wheel 5126. A display 5128 and optional keypad 5130 are provided on the upper face of the barrel portion 5122 to allow easy viewing and input access to the user. The camera lens or other image recordal means are provided on the front face of the barrel portion 5122 (not shown) allowing the user simply to point the terminal 510 in the direction it is desired to record in. When the desired scene is viewed on a display 5128 capture is effected by activation of the trigger 5124. Zoom can be controlled by the thumb wheel 5126 which is preferably located for optimum ease of use by the user's thumb when the grip portion 5120 is held by the user.

The processing speed and storage capabilities of the components of the data terminal can of course be determined according to the eventual cost of the system, for example a slower and hence cheaper microprocessor can be incorporated. For more high-end applications the data terminal could additionally include an SRAM card to store the still images. In addition the visual display screen 514 can, as shown in Fig. 6 include LCD (liquid crystal display) capabilities. Accordingly using a suitable pen 100, the image can be altered for example by ringing or otherwise highlighting areas of interest, the alterations being represented on the LCD display as 5102 in Fig. 6. The alterations can be deleted or revised additionally using the keyboard as appropriate.

The range of implementations, and the speed and efficiency of the system can be further enhanced by also incorporating bar code reader capabilities into, or in conjunction with, the data terminal. The construction and applications of bar code readers will be well known to the skilled man and do not require a detailed description here. Briefly, however, a bar code symbol comprises one or more rows of light and dark regions, typically in the form of rectangles or, for the case of two-dimensional codes, in the form of a two-dimensional array of light and dark spaces. The dimensions of the dark and light regions indicate encoded information to be read. A bar code symbol reader illuminates the symbol using reading beam generating means and senses light reflective on the coded regions using reading beam detecting means to detect the dimensions of the coded regions. A decoder decodes the detected encoded information. Known symbols which include, for example, UPC/EAN, Coder 128, Codabar and Interleaved 2 of 5.

One known type of bar code reader comprises a data wand as disclosed in US Patent No. 4,471,218, incorporated herein by reference.

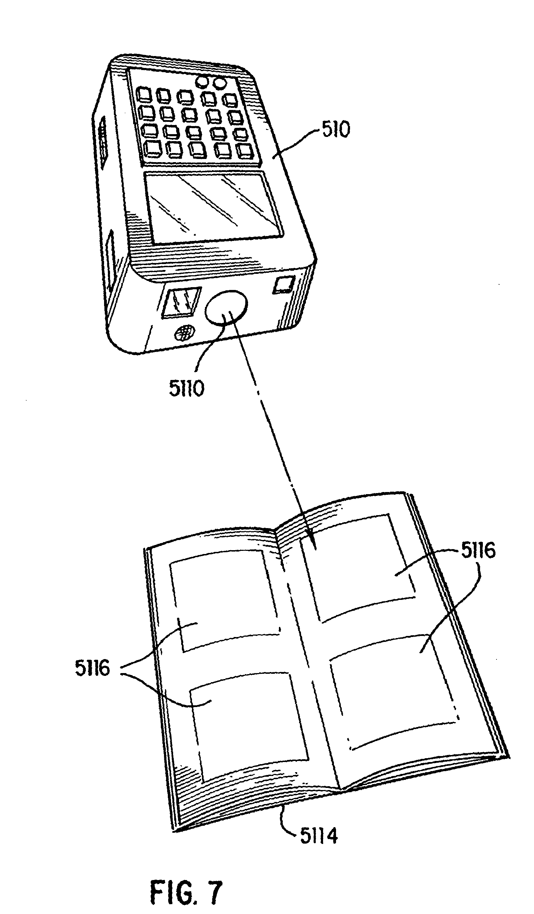

Fig. 7 shows a data terminal 510 of the type described herein above further incorporating an optical reader 5110 incorporated in the data terminal 510. The reader 5110 includes reading beam generating and detecting means and the data terminal 510 includes processing means for decoding the detected encoded information. The reader 5110 may comprise either a "flying-spot" laser scanner including means for scanning the reading beam or a "field of view" optical reader including a CCD array as detector. Both types of reader will be well known to the skilled reader and a full description of the components and operation is not provided here.

It will be appreciated that a wide range of implementations can be envisaged for the data terminal 510 shown in Fig. 7. In particular it may be useful in many circumstances to be able to read information encoded in bar codes to adduce additional information to that retrieved by the data terminal from the external environment.

A particularly advantageous embodiment is shown in Fig. 7. In particular a book or other printer matter 5114 is provided which can be carried by the user including printed bar codes 5116 which are read by the reader 5110 and the information contained therein utilised by the data terminal 510. As discussed in more detail below, the data terminal 510 in fact comprises an Internet server capable of creating a web site at the data terminal carrying, for example, information relating to the external environment around the data terminal for access by users elsewhere on the Internet. In such circumstances the terminal might conventionally wish to download executable code from a host machine using an agent implementation language such as Java (a trade mark). This system can be cumbersome and time consuming in view of the level of communications required between the client and the host. The present invention solves this problem by storing the executable code (applets) in the form of two-dimensional high density bar codes 5116 in the book 5114. Each bar code symbol 5116 is identified by a suitable short title or other identifying information in the book. When it is required to access an applet the user is merely required to read the two-dimensional bar code using the bar code reader 5110, and the executable code is immediately downloaded to the data terminal 510 for the data terminal 510 to use it as appropriate.

The invention allows the user to carry a conventional book - for example having five hundred pages of 2-D applet codes. Such a book would not be cumbersome and would indeed be attractive to many users. The system allows greatly accelerated downloading of applets in as little as fifteen seconds. Conventional downloading systems would still be waiting for connection to the host in that range of time scale.

It will be appreciated that any suitable executable code could be stored in a desired language in the two-dimensional bar codes 5116. A wide range of different applets could of course be stored according to this system and indexed appropriately. Indeed the system could be used for fixed or dedicated clients as well as the remote, mobile client data terminal shown in Fig. 7.

It will be seen that the data terminal can communicate with any suitable data network, for example an access point to the Internet, or to a closed dedicated system relating to the user or to which the user subscribes together with other users. Communication can be by way of RF communication or, if appropriate, infrared or microwave communication, or any other suitable wireless communication method.

It will be appreciated that any of the features discussed in relation to one embodiment can, as appropriate, be incorporated in any other embodiment without departing from the teaching of the present specification.

As used in this specification and in the appended claims, the term "indicia" broadly encompasses not only symbol patterns composed of altemating bars and spaces of various widths commonly referred to as bar code symbols, but also another one or two dimensional graphic pattems, as well as alphanumeric characters. In general, the term "indicia" may apply to any type of pattern or information which may be recognized or identified by scanning a light beam and detecting reflected or scattered light as a representation of variations in light reflectivity at various points of the pattern or information. A bar code symbol is one example of an "indicia" which the present invention can scan.

An embodiment of an optical reader to be used in conjunction with the present invention is shown in Fig. 22. Although a pen-type optical reader (often known as a "data wand") is shown it will be appreciated that any other hand-held configuration would be appropriate for use in conjunction with the present invention. Although specific constructional details are also discussed in more detail below, it will be appreciated that data storage/processing elements and optical reader elements of known type can replace the specific components discussed in a manner that would be well known to the skilled man. A discussion of pen-type readers is found in US 5,506,392, commonly assigned herewith and incorporated herein by reference.

The pen-type optical reader (henceforth referred to as a "wand reader") is generally referenced 690 in Fig. 22. It will be appreciated that the exact shape of the wand reader as illustrated 690 may be exaggerated, for example in width, in order to show more clearly each of the principal components and how they interact. In the embodiment shown, the wand reader 690 comprises a ball-point pen 691,692 together with the optical reader 693 itself. The wand reader need not actually have writing capability, or may be in the form of any suitable writing implement such as a pencil, a fountain pen, a marker pen and so forth. Indeed the optical reader sub-system discussed in more detail below can be in a modular form insertable into a suitably configured writing implement housing of any desired type.

The writing element of the wand reader 690 is shown schematically as a ball-point pen cartridge 691 together with a projection/retraction mechanism generally designated 692 and of any suitable known type. Evidently it is desirable to reduce the size of those elements 691,692 as far as possible to allow maximum space for the reader module.

The reader module is generally designated 693. The components and construction of the module 693 will be generally well known to the skilled man and are described only briefly hereafter for the purposes of completeness. The reader module 693 includes a light source 694, for example, a laser or LED and a reflector 695. A reading beam generated by the light source 694 is reflected by the reflector 695 out of a reading window 696. The reading beam is reflected by a bar code symbol generally designated as 697, passes once more through the reading window 696 and is received by a detector 698. Preferably the reader module 693 is a field of view reader in which case the mirror 695 is a fixed mirror and the detector 698 comprises a CCD (charge coupled device) array. Of course in certain implementations a scanning system may be used in which case reflector 695 is driven by a motor schematically shown at 699 for scanning motion. The light source 694, detector 695 and, if appropriate, motor 699 are connected to a processor, control and data storage element 6100 in conjunction with a power source 6101. The processor element 6100 controls operation of the various components and also acts as a data storage and processing device for bar code information read by the module 693. As discussed in more detail below, it is desired to down-load the information stored in processor element 6100 at a later stage to an external device. Accordingly a data output port 6103 is provided fed by line 6102, preferably adjacent to or in conjunction with the reading window 696. The wand reader 690 may also be used as a laser pointer in one embodiment, wherein the output reading beam is used to highlight desired elements during a presentation.

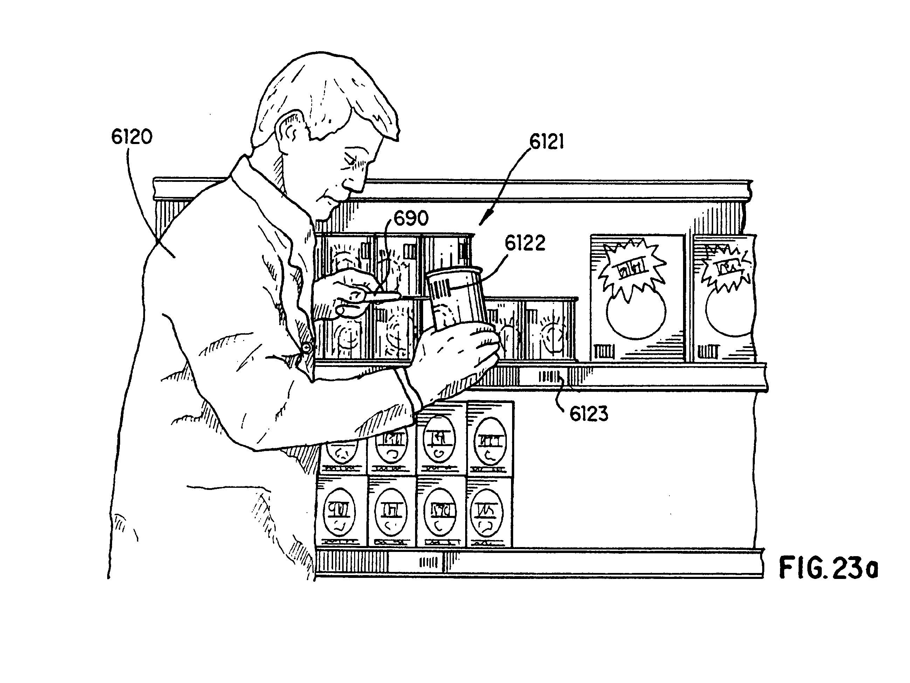

A particular implementation proposed according to the present invention for the wand reader 690 occurs in relation to consumer information access as shown in Fig. 23a. For example where a consumer 6120 carries a wand reader 690 and is in a retail outlet selling products 6121, each of those products may carry a bar code symbol 6122 for example in UPC format. The consumer 6120 may be interested in purchasing the product 6121 but may not be willing to commit until further information is available. There exists, therefore, a risk that the consumer will forget about the product or, as previously, it may be necessary to rely on a consumer 6120 chancing upon the product or additional information relating to the product, and his memory being jogged accordingly.

According to the present invention, however, the consumer 6120 can read the bar code symbol 6122 using wand reader 690. The bar code information is stored in the processing element 6100 and, to the extent desired, processed. In particular, information contained in the bar code symbol 6122 relating to the product 6121 is stored. As a result the consumer has an automatic reminder of the product he wishes to purchase as well as information relating to the product. Evidently, where the consumer 6120 sees more than one product of interest, the relevant information can also be stored, the storage capabilities of the wand reader 690 being limited only by the storage space in the processor element 6100.

A particular implementation of the present invention allows the consumer to subsequently down-load the information stored in the wand reader 690 in a manner described in more detail below. In particular the information can be down-loaded to a personal computer or other access point to a computer or data network. The down-loaded information can then be used in various different manners. For example the product can be ordered or additional information concerning the product can be accessed. A particular implementation proposed under the present invention is that the bar code symbol accompanying the product contains sufficient information for the personal computer or access point to the computer network to access a site on the ad (or comparable data storage system). This site can contain additional information concerning the product, information concerning related products, price information, cross-references to further related sites, and the capability of ordering and paying for the product. This greatly simplifies the purchasing process, allowing for example a price check and also ensures that the consumer does not forget a product which has caught his attention.

In addition, further information can be derived according to the present invention. For example the popularity of the product can be assessed for future marketing purposes. Preferably the reader wand 690 has a dedicated user and carries user identification information such as credit card number, or other identification carried under an approved system. As a result, during purchase of the product details of the transaction can be based on that information. In addition a customer profile can be built up based on the consumer's buying patterns.

The access point can be located within the retail outlet allowing the consumer 6120 to access the information on site and make a purchase decision before leaving the retail outlet. Suitable access points are discussed in more detail below. It will be seen that the bar code symbol can be carried on the product, or as shown at 6123 on the shelf adjacent the product. Alternatively the products could be displayed graphically on a chart and the bar code symbol shown on or adjacent the product on the chart.

It will be seen that the system can be extended to other applications. For example where an abstract of text is printed together with a bar code symbol, the bar code symbol can contain information which, when down-loaded, can provide access to additional or related text. Assuming high enough resolution, the bar code symbol can even be read off a VDU or other visual display system in a closed system in order to access additional information on the Internet. The bar code symbol can follow any appropriate protocol, for example UPC or EAN and is translatable into the Internet Universal Resource Locator (URL).

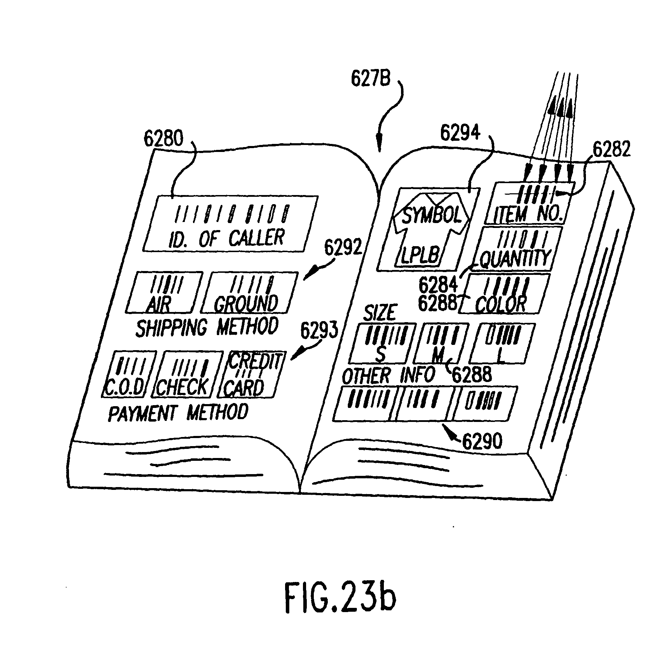

A further application for the system is described with reference to Fig. 23b. A catalog 6278 which shows a product 6294 and also includes various data relating to the item number 6282, the quantity 6284, the color 6286, the size 6288 and other information 6290. In addition bar coded shipping information is stored at 6292 and payment method at 6293. Such a catalog is of use, for example in home shopping applications. The catalog can also carry a bar code identifying the caller at 6280 which information can be used for consumer identification at the purchasing stage. The particular implementation according to the present invention requires suitable down-loadable product information to be stored in the bar code symbols. In particular, the item number 6282 can in fact be in the form of a suitable computer network site address. Alternatively the computer network site address can be stored at the other information field 6290. The remaining bar code symbols may not be required, as the information can be stored at the site address, but the embodiment shown allows alternative implementations dependent upon the hardware available to the user.

The user scans the wand reader across the site address field and, if necessary, across the user identity field 6280 and down-loads the stored information to an Internet (or other computer network) access point. The remaining product information is available at the Internet site and the options such as quantity, color, size, shipping method and payment method can be input at that stage. Accordingly a simple catalog-based home shopping system can be set up. It will be appreciated that such a system can be introduced in various environments, for example when a passenger is in an aeroplane a suitable catalog can be provided. Once again the system allows the consumer to consider carefully what products they should buy on the basis of all available information, and also provides a useful prompt or reminder concerning products which have caught the consumer's eye to which the consumer is not yet committed.

Where the bar code symbol is for use in conjunction with the a or parallel system, the information contained in the bar code symbol effectively comprises an a address. When that information is down-loaded to a personal computer the personal computer communicates with a dedicated server which captures the a address and user identification information and re-routes to the relevant product information site, for example a web site for information retrieval and delivery to the consumer's personal computer. Accordingly, the down-loaded information would enable the PC to go directly to a relevant home page or a relevant sub-page. A resolution server on the system could be used to collect information from all users, not only for information purposes but also for billing and routing purposes.

It will be recognised that alternative systems to the Intemet, and alternative access methods are envisaged. For example the Internet could be replaced by an Intranet or a local area network (LAN), accessible by a limited number of users restricted either geographically or by some form of access authorisation. Instead of being down-loadable to a PC which processes the site address information, pulls up the authorization site and displays the product information, alternative access points are envisaged. For example, following a system such as the Citrix (TM) system, the down-loading could be merely an access point or terminal with minimum processing capabilities itself. The terminal transfers the site address information to a host computer which carries out the principal conversion to a URL, accesses the web site and transfers the information back to the terminal for display In that case the terminal acts as little more than a display and input/output device. It is envisaged, therefore, that the system could embrace the new generation 'network computers' working on this principal. The effect of such a system is a considerable change in the architecture of the system allowing reduced costs to the consumer who need only buy the low level terminal for connection with a host computer linked into the main network. As a result the proposed invention is yet further desirable and accessible to the consumer.

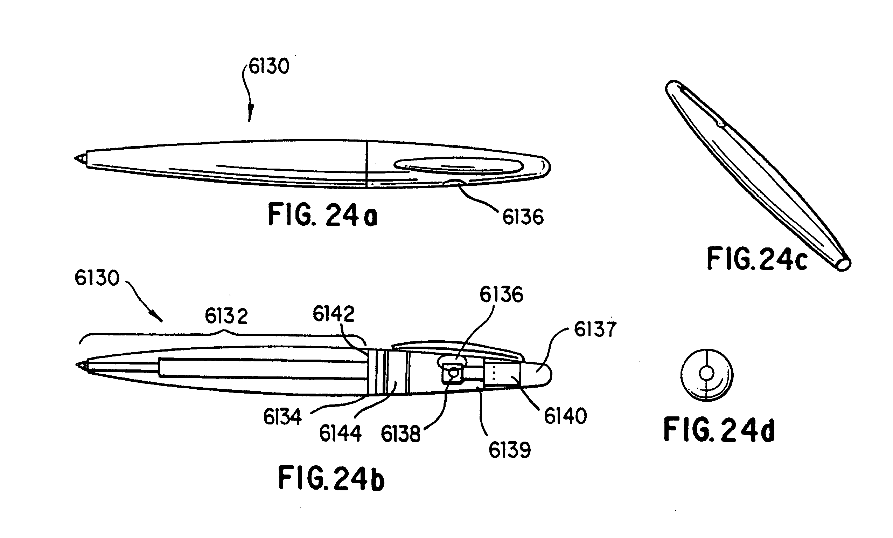

Various alternative wand reader configurations are shown in Figs. 24 to 26. Referring firstly to Figs. 24a and 24b a reader wand 6130 includes a pen assembly 6132 including a ball pen cartridge for example of the type sold under the trade mark Zebra F-refill and an actuating mechanism 6134 of a known type rotatable to extend and retract the ball pen cartridge. The wand reader 6130 further includes a trigger 6136 manually actuable to enable a scan together with a cooperating internal switch 6138 under, for example, code ITT KSC 421. The reader wand 6130 includes a wand tip 6140 for reading a bar code symbol. A data output point is also provided at 6137. The system is powered by a battery 6142 of any suitable compact type. Also included is a beeper 6144 or other audible device which can sound to indicate to the user that a bar code symbol has been successfully read, that the battery power is low, that there is little memory space left and so forth. Different audible tones or sequences of audible tones can represent different waming signals. In addition the wand reader 6130 can include a screen (not shown) carrying information as to the status of the wand reader and any instructions for use thereof.

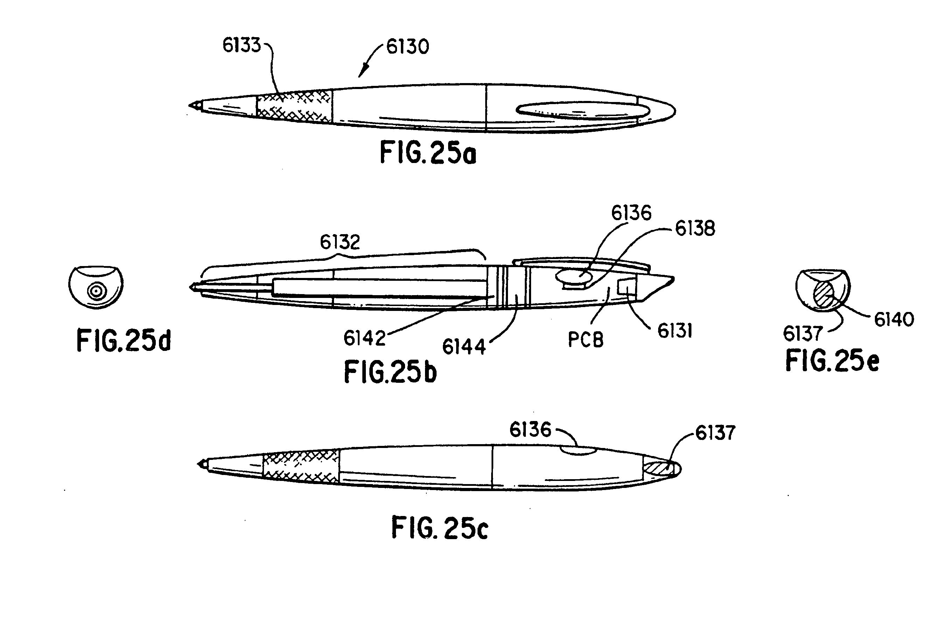

Figs. 25a to 25c show a slight variant in which, where appropriate, the same reference numerals have been used as for Fig. 24. It will be seen that the exit window for the reader (here shown as a laser scanner at 6131) is in an inclined face relative to the longitudinal axis of the reader wand 6130, allowing improved ergonomics in reading a bar code symbol. The reader further includes a grip 6133, for example made of leather, around a portion of its length allowing improved user grip and comfort.

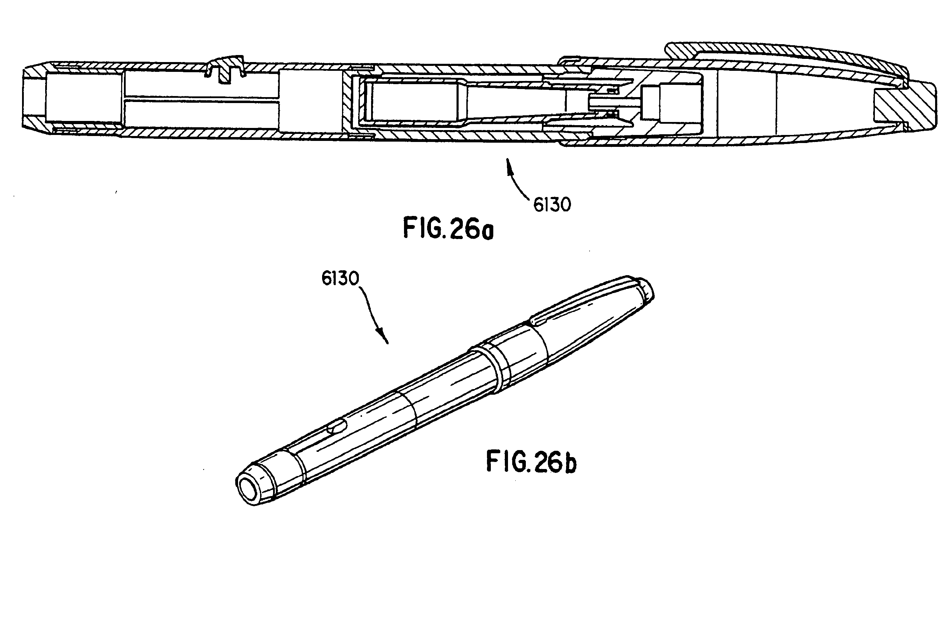

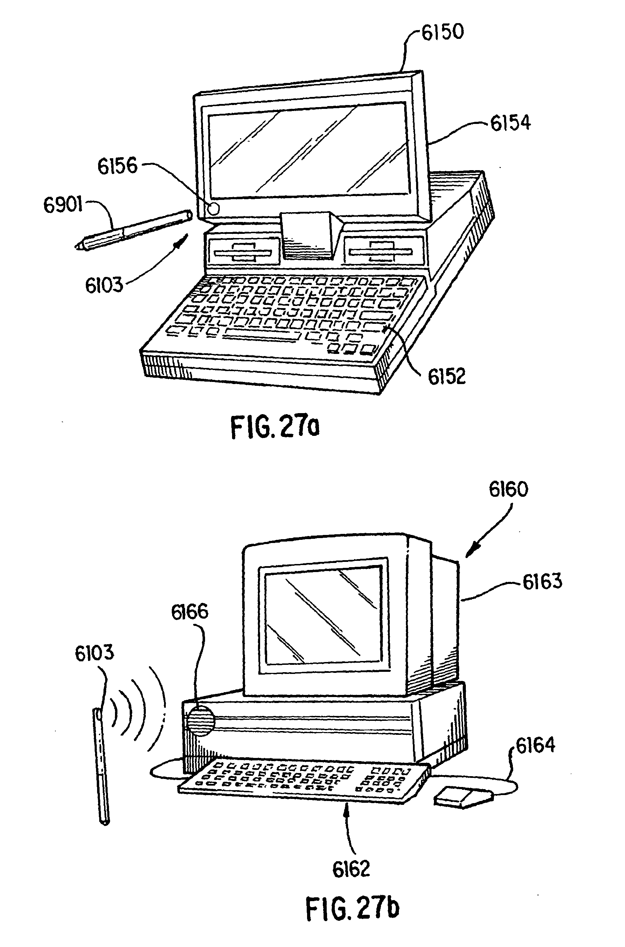

Fig. 26a and 26b show a further alternative configuration schematically once again using the same reference numerals where appropriate as in Figs. 24 and 25. Various methods of down-loading the information are contemplated. Two approaches are shown in Figs. 27a and 27b. In a preferred configuration shown in Fig. 27a a personal computer is shown at 6150 being of the portable type although a fixed type PC will also of course suffice. The personal computer 6150 includes a keyboard 6152 and a screen 6154 and can generally be of conventional type. The personal computer 6150 includes a data input port 6156 arranged to communicate with the wand reader data output port 6103. In the embodiment shown, the output port 6103 of the wand reader 690 is touched against the data input port 6158 on the personal computer 6150. Touching the input port 6156 firstly commences the down-loading sequence and secondly allows accurate and rapid communication between the wand reader 690 and the personal computer 6150. The interface between the wand reader 690 output point 6103 and the data input port 6156 can, for example, be of the "memory button" or "touch memory" type for example as sold by Dallas Semiconductors. The actual interface is of well known type and in effect the information stored in the wand reader 690 is communicated to a memory button 6103 provided at an appropriate point on the wand reader 690. The information is converted to a suitable form for transmission at the memory button 6103 and, on contact with the data input port 6156 of the personal computer 6150 the transmission is activated. The data input port 6156 is configured to receive and convert into a suitable form information transferred from the memory button 103. In particular the information can be transferred in the form of a series of electronic pulses representing bits. Such a system gives rise to a simple and substantially error-free interface allowing a user to down-load information stored in a reader wand 690 to a personal computer 6160 quickly and accurately.

As will be appreciated, various other down-loading methods are contemplated within the ambit of the present invention. For example as shown in Fig. 27b a fixed-type personal computer 6160 including a keyboard 6162, a display screen 6163 and a mouse 6164 includes a microphone 6166 which receives an audio signal from a corresponding speaker data output 6168 on a reader wand 690. A button (not shown) or other switch can be included on the reader wand 690 to activate transition by the speaker 6168. The information stored in the reader wand 690 is converted to a high frequency audio signal at the speaker 6168 which is received by the microphone 6166 and decoded. Of course the transmitter can transmit other forms of radiation, for example it can be an optical or microwave transmitter with a suitable receiver being provided on the personal computer.

Where the transmitter is optically based it can utilise IRDA (infrared) standard communications implementation as will be known to the skilled person and as currently available on many "laptop" computers. The optical transmission can be at the "blink" (repetition) frequency of the pen illumination source.

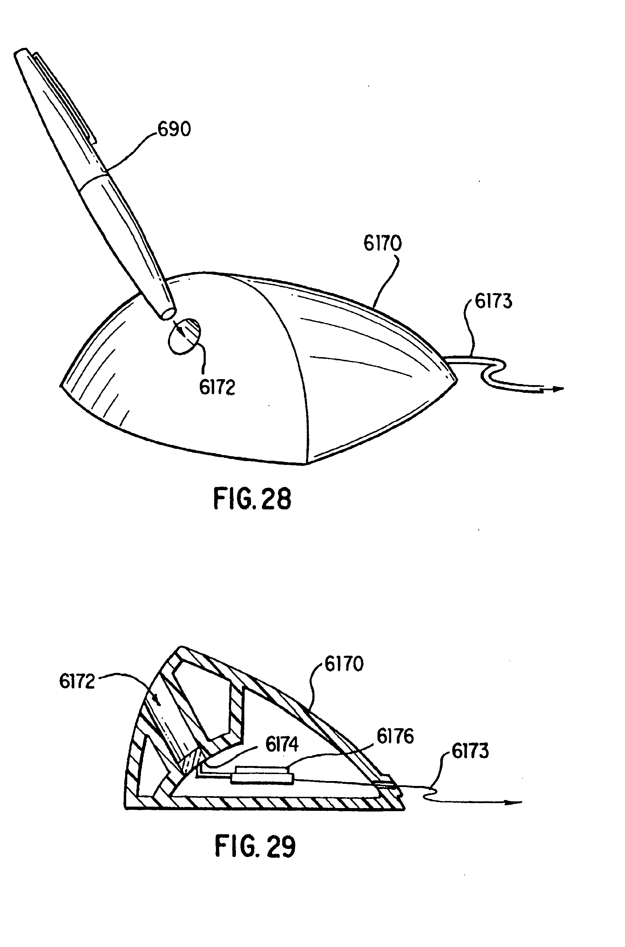

Yet a further down-loading system is shown in Fig. 28. A dedicated data down-loading port 6170 includes an orifice 6172 for receiving a reader wand 690. The port 6170 communicates information down-loaded from the wand reader 690 via a line 6174. Referring to the sectional view shown in Fig. 29, it will be seen that the port 6170 includes a data receiving interface 6174 of any of the types described above which communicates with the reader wand 690 for down-loading of information. Down-loading can be contact activated by contact between the wand reader 690 and the interface 6174 or activated by pushing a button or other switch (not shown) on the wand reader. The interface 6174 communicates with a processor 6176 for converting the down-loaded information if necessary into a format appropriate for a computer network, and the information is communicated to the computer network via line 6173.

It will be appreciated that line 6173 can comprise a wireless link or a telephone line,in which case an appropriate modem can form part of the port 6170.

It will be seen that all of these methods comprise a user-friendly system for down-loading scanned information from a wand reader. Use of a data well-type port of the type shown in Figs. 28 and 29 is particularly suitable where it is not desired to rely on the consumer having a PC or other home access to a suitable computer network. The port can for example be provided at a retail outlet or other point of sale. It should be noted that the wand reader can also be writable via the data port, personal computer or other means (even a bar code symbol Itself) to input user information of the type discussed above. This would facilitate short term usage of a wand reader allowing a given user to input information temporarily for the duration of his or her use of the wand reader.

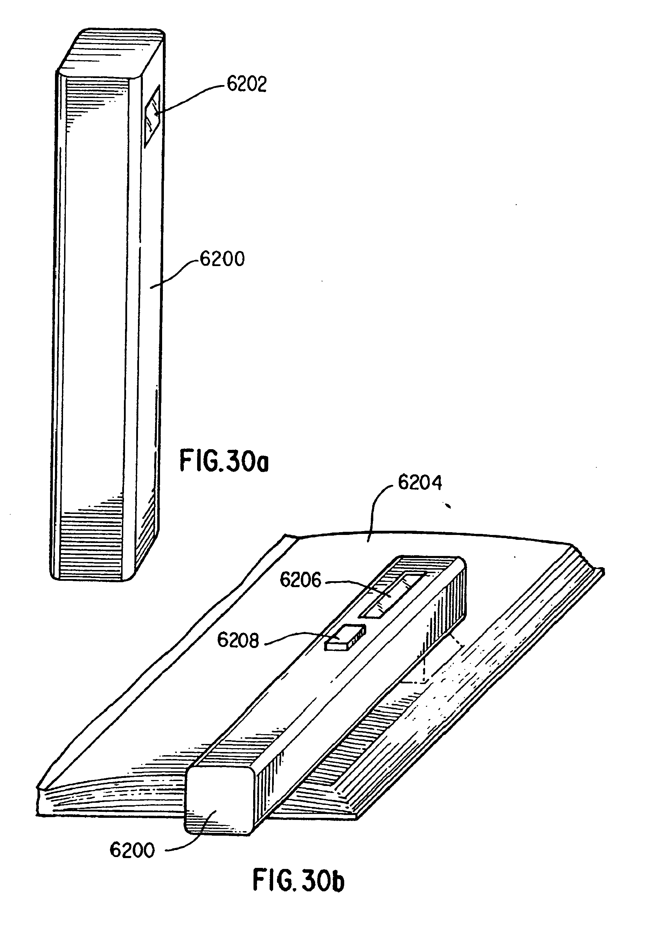

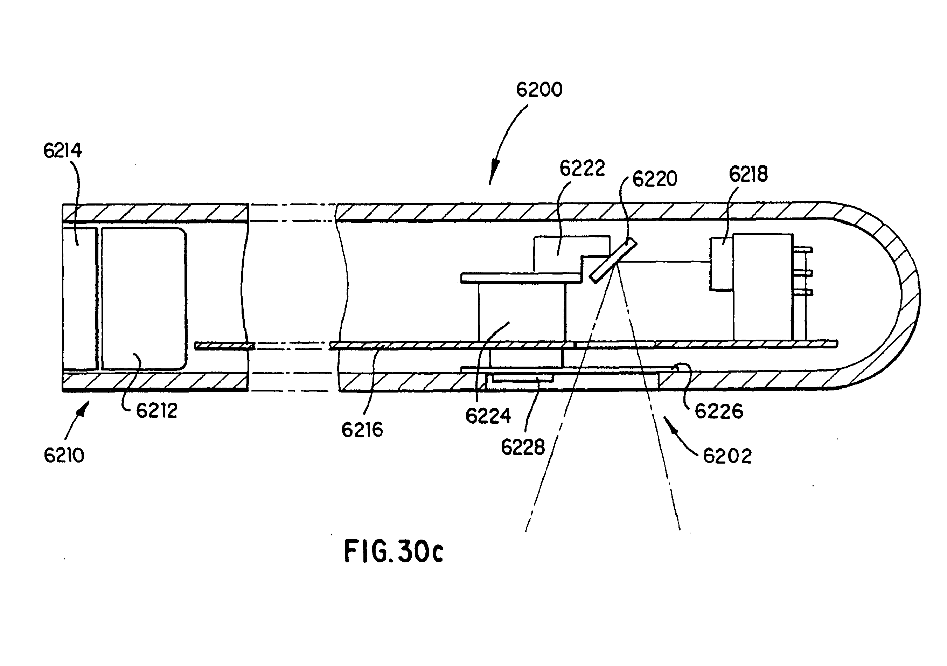

In an alternative ergonomic embodiment the reader includes the components discussed generally above but is in a slightly different configuration. Referring to Fig. 30a and 30b the reader 6200 is approximately the size of a conventional pen but, in cross-section to its longitudinal axis, is substantially square. Furthermore a scanning window 6202 is provided substantially at the top of one of the side faces rather than at the end itself. Referring to Fig. 30b it will be seen that an alternative reading configuration is thus achieved whereby the reader 6200 is held substantially parallel to, rather than substantially perpendicular to a page 6204 to be read. Preferably in its embodiment, a display window 6206 and on/off trigger 6208 are provided substantially at the top of the opposing side face. As a result the trigger 6208 can be controlled, for example by the user's thumb, with optimum ease for ergonomic reading. Similarly the display 6206 can be easily read by the user. Of course a more complex keyboard and/or display layout can be incorporated as appropriate.

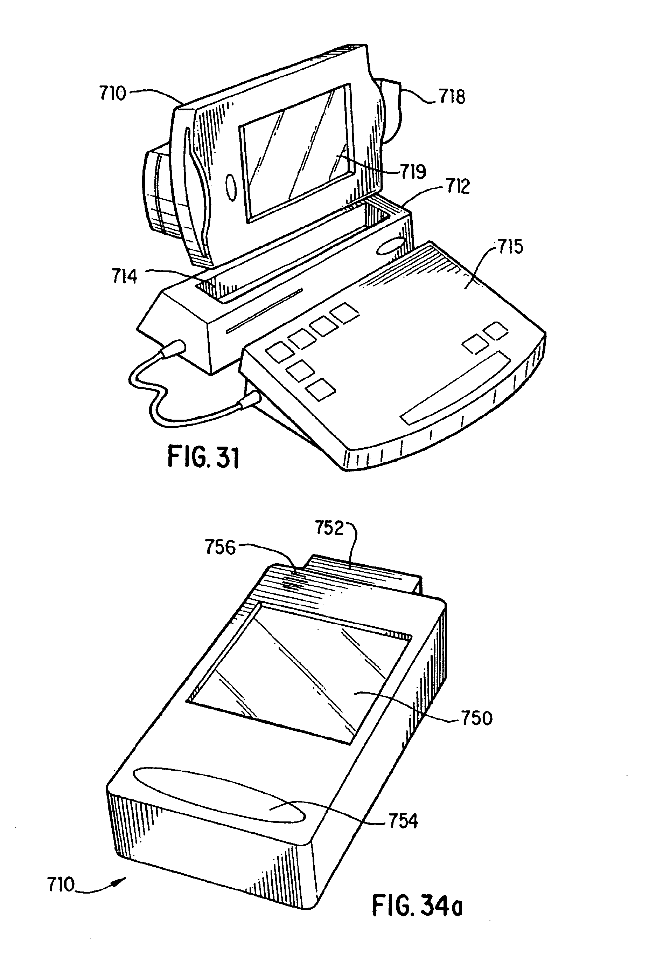

Fig. 30c shows impartial cross-section internal details of a reader such as the one shown in Fig. 30a and 30b. It will be seen that the arrangement shown in Fig. 31 includes a rounded front end. In practice this arrangement can in fact be circular in cross-section or square in cross-section as shown in Fig. 30a and 30b. It will be appreciated that the arrangement shown is not necessarily to scale. At the rear end 6210 of the reader 6200 one or more power cells 6212 are provided and retained in place by suitable means such as a threaded cap 6214. Mounted on a board 6216 for ease of assembly are the principal reader components including a laser diode 6218 and a reading mirror 6220. The reading mirror can be scanningly driven by a scanner driver 6222 controlled by appropriate circuitry 6224 also mounted on the board. Alternatively, of course, the system can be arranged as a static, field of view reading device. Mounted over the scanner window 6202 is preferably a sheet of transparent material 6226 of any suitable type. Also provided at the scanner window 6202 is a photodetector 6228 which receives the light beam reflected from the printed indicia. The reflector 6228 is connected to suitable processing circuitry at 6224 suitable to decode the information.

In yet a further embodiment, a wand or pen-type reader of the type discussed generally above can be used in the detecting of counterfeit money. Devices are known for detecting counterfeit money based on various parameters such as colour, print quality and so forth. It is proposed to incorporate such a device into the arrangements shown allowing yet a further option for operation. There are currently proposals to include bar codes on high denomination bills in which case the reader could be used for the purposes both of reading the bar code and detecting whether the bill scanned is counterfeit. In countries where there are currency restrictions, bills can be scanned upon distribution and information retained in the reader. Upon downloading of the reader using, for example, a data well, information concerning the notes in circulation can be maintained, yet further allowing prevention of counterfeiting.

The range of applications of the system as a whole is evidently very wide. For example a consumer could use the wand reader whilst on an aeroplane or in other areas where access to the Internet or appropriate computer network was not immediately available. In addition to the applications described above, the system could be used to store and access information concerning items in many other applications, for example in warehouse storage systems.

It will be seen that the above teachings relate to any scanner type suitable for hand-held scanning and being essentially portable, capable of reading a bar code symbol or similar information carrying symbol. The information can be down-loaded from memory in the hand-held scanner by means of any suitable interface to a personal computer or other access point or computer network, and corresponding information called up from an web site or corresponding main memory location.

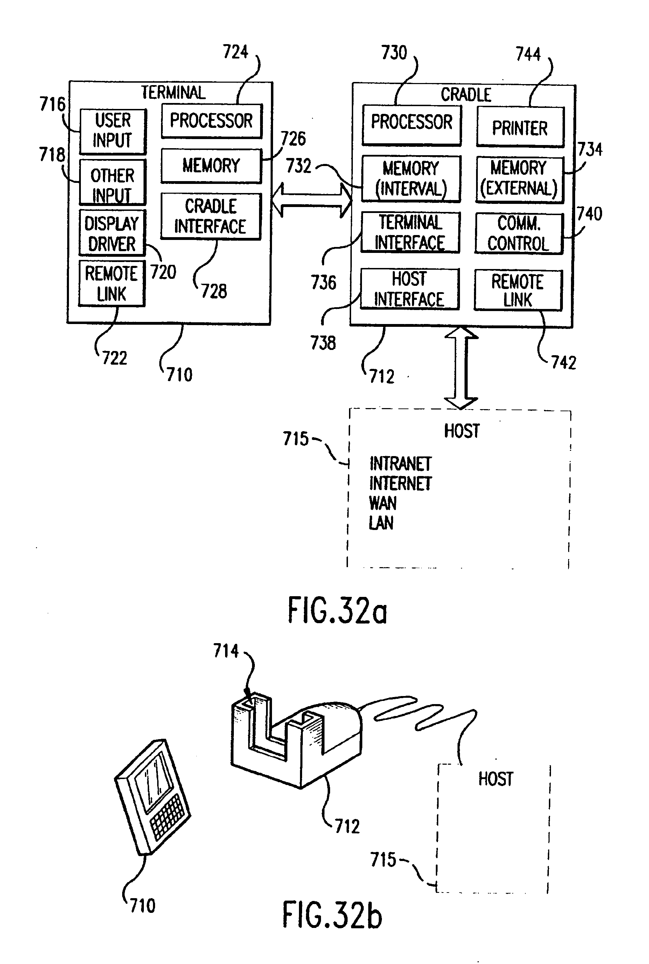

Figs. 31, 32a and 32b show the basic components of the system according to the present invention. A portable terminal 710, for example a hand-held computer of the personal digital assistant type which can optionally carry scan-ning/barcode reading capabilities is arranged to interface with a cradle 712 via a physical connection. For example the terminal 710 is inserted into a suitable recess 714 in the cradle 712. The cradle 712 is itself connected with a host system 715 which can be a stand-alone computer, or part of an Intranet/LAN or Internet/WAN.

The basic components of the terminal 710,712 cradle and host 715 are standard and interconnected in standard ways using known interfaces and communication protocols except where otherwise indicated below Accordingly full hardware details of the components are not discussed in detail here as they will be well known to the skilled reader. A brief discussion of the various components and their uses and interconnections is provided below, however.

As shown in Fig. 32a the terminal conventionally comprises a user input 716, an 'other input" 718, a display driver 720, a remote link 722, a processor 724, a memory 726, and a cradle interface 728.

The user input 716 can comprise, for example, a keyboard with which the user can input information to the terminal. The user input is transferred to the processor and further processed as discussed below.

The "other input" 718 can comprise, for example, a barcode scanner or other reader, video camera input, audio input or any other appropriate data input. Fig. 31 shows a terminal 710 including a swivel mounted barcode reader head 718. The input information is transferred to the processor 724 for further processing as discussed below

The terminal 710 preferably includes a display 719 for displaying information to the user. For example the display may represent input data for checking purposes, or carry instruction or error messages for the user, or even communication messages transmitted from remote points. The display driver drives the display and receives display instructions from the processor.

The terminal can be a CRT type television display, a flat panel LCD type display or any other suitable display. The advantage of flat panel displays is of course the low bulk complementary to the compactness of the terminal as a whole.

A remote link 722 is provided allowing communication between terminal 710 and the cradle 712 (or indeed any other access point as defined by the operational parameters of the system) by remote, wireless communication such as infrared IRDA, microwave, RF or any other suitable method. Data to and from the remote link is processed by the processor 724.

The processor 724 can comprise any standard processing system such as a CPU. The processor allows centralised control of the other components as discussed above and below, together with general operational conditions of the terminal, data and power checks, compatibility checks and so forth as appropriate.

Shown separate from the processor 724 is a memory 726, although this may be incorporated in the same unit as the processor 724. The memory 726 allows long or short term data storage for example of data received at the user or other input 716,718, via the remote link 722 or, as discussed in more detail below, via the cradle interface. Memory control, management and transfer can be controlled by the processor 724.

The cradle interface 728 allows downloading of data stored in the terminal 710 to the cradle 712 as well as transfer of control or other data from the cradle 712 to the terminal 710. Information to and from the cradle interface 728 is processed by the processor 724 as appropriate. As discussed in more detail below, the cradle/terminal interface is a physical interface which operates during, and can be enabled by, insertion of the terminal 710 into the recess 714 of the cradle 712.

The cradle 712 also includes various components shown in block form in Fig. 32a, both arranged to deal with control and communication with the terminal 710 as well as communication with the host and other peripheral functions.

The cradle 712 includes a processor 730 for controlling the remaining components as discussed below as well as operational conditions of the cradle 712 and general communication needs between the cradle 712 and the terminal 710, between the cradle 710 and the host 715 and, where the cradle acts transparently, between the terminal 710 and the host 715.

The cradle further comprises internal memory 732 and external memory 734. Both of these are for storage of information received from the host 715 and/or terminal 710 for transfer between the two, as controlled by the processor 730. The internal memory can, for example, comprise part of the processor unit 730. The external memory 734 preferably makes use of external storage devices such as disks etc.

The cradle 712 communicates with the terminal 710 by virtue of a terminal interface 736 communicating with the cradle interface 728. The terminal and cradle interfaces are preferably physical interfaces as discussed above. Information to and from the terminal 710 can be controlled via a processor 730. The cradle 712 further comprises a host interface 738 for communicating with the host 715. The interface can be a wired interface or a wireless interface of known type as appropriate. A communication controller 740 can also be provided additionally to control the various communication protocols between the terminal 710, the cradle 712 and the host 715.

A remote link 742 is provided in the cradle 712 for communication with the remote link 722 in the terminal 710. The communication can, as discussed above, be any wireless means of communication such as infrared IRDA, radio or microwave.

The cradle 712 can also include various peripherals of standard types found with computers generally such as a printer 744 or other component such as an enlarged display, a modem link to a remote host, additional storage or processing capacity and so forth.

The cradle 712 communicates via the host interface 738 with the host 715. The host 715 can be a stand-alone computer or part of a local area network such as the Intranet. The Intranet can itself be part of the Internet or another wide area network, and if appropriate suitable security measures such as a "fire wall" can be put in place.

Numerous applications and advantages are provided by the system shown in Figs. 31, 32a and 32b. In particular, all of the advantages of a hand-held terminal are available, such as portability, ease of use, and suitability for mobile uses. Particular applications include inventorying, monitoring of transported goods, point of sale use, stock exchange formulations, auctions and so forth. Because the cradle includes a data interface, information input to the terminal, for example as keyboard input or barcode input can be stored short-term in the terminal and transferred at regular intervals to the cradle when it is inserted in the cradle. Once the information is downloaded the memory in the terminal can be cleared. At the same time control or application data can be transferred from the cradle to the terminal such that the terminal application can be changed or updated as desired. The cradle further preferably includes a battery charging module which connects with the terminal when it is inserted into the cradle to allow simultaneous battery recharging. This option is discussed in more detail below.

The cradle then communicates the downloaded information to the host, and allows communication of update/application information from the host to the terminal.

Accordingly the system allows rapid updating of the host data base with information from the terminal whilst requiring reduced memory capacity in the terminal. At the same time the cradle allows significant time-efficiency benefits, both in reducing user involvement in data transfer to a minimum and in allowing the utilisation of user down-time to download information. The remote link further allows immediate update capability where necessary, at the same time allowing this capacity to be kept to a minimum (by virtue of the regular downloading sessions) giving rise to a corresponding reduction in power drain.

As discussed in more detail below, particular benefits of the invention lie in a system in which the basic system described with reference to Figs. 31, 32a and 32b is enhanced, and memory/computing tasks distributed so as to allow maximum flexibility and minimum demand on the terminal 710. Known hand-held computers are continually being updated and redesigned to allow maximum memory capacity, data storage and application availability. Generally this involves increasing the cost and complexity of the system, and will lead to increases in weight and bulk which is of course undesirable in a portable system. In addition the overheads on the system are very high - updating of the computer is costly and must be done on an individual basis, and based on added peripherals or software that will carry a considerable cost burden. This tendency to increased, internal capacity and capability leads to a greater risk of defect or error and the attendant disadvantages. Such systems are currently known by the term "fat clients".

The present invention, on the other hand, allows an "ultra-thin client". In principle, this is achieved by reducing the computing and memory burden in the terminal to the greatest possible extent and incorporating that burden instead within the cradle or, if possible, in the host itself. This also allows the cradle 712 to operate as a "thin client". As a result the terminal includes the minimum capacity for user interface, including the display capacity, user or other input capacity, minimal memory and processing capacity and the communications capacity discussed above. The cradle/host thus acts as the true computer, carrying a majority of the processing and memory capacity, including disk drives, communication interface and so forth. Because the cradle acts as a thin client, its simplicity and adaptability can be maintained by ensuring that as much processing as possible is carried out at the host.

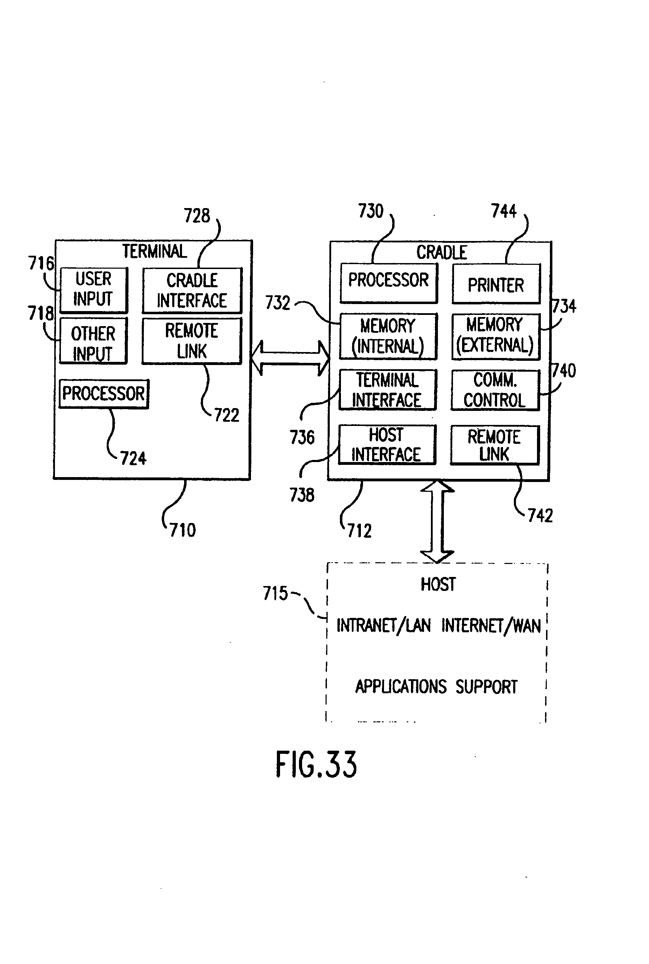

A basic architecture allowing an ultra-thin client is shown in Fig. 33. Similar reference numerals are used to depict similar features throughout the specification and explanation of the various features will not be repeated in detail except as appropriate.

It will be seen that the terminal 710 still supports various basic capabilities to the same extent as the version shown in Fig. 31, in particular the user and other inputs 716, 718 and the cradle interface and remote link 728, 722 must retain many of their features in order that the terminal 710 can perform its basic front-end functions adequately. However, the processor, memory and display driver are all consolidated into a single, lower specification unit, once again sufficient to drive the required front-end functions adequately. Management of the transferred functions is therefore handled by the cradle and/or host. For example, processing of the data input to the terminal can be carried out by the cradle after the information has been downloaded, such that the terminal needs to carry and store only raw data, requiring less memory space and processing power. The cradle also operates as the client in terms of external data storage and peripheral applications such as printing and display. The cradle 712 then communicates with the host 714. Significantly however, the host itself provides applications support as discussed in more detail below In addition the host can take on more of the cradle functions as appropriate if it is desired to reduce the cradle specifications, as long as the cradle retains it basic downloading and intermediary functions.

Returning once again to conventional 'fat clients", applications to be run by the terminal such as business applications for objects to be accessed, data base, file, mail, printing and directory services and other dedicated functions are provided internal to the terminal itself. This necessitates considerable memory and processing requirements, added complexity and bulk and the need for regular updating and quite possibly servicing.

The present invention, however, operates according to a different system, the applications discussed above such as data bases, mail delivery or further alternatives such as inventorying systems, pricing/coding systems, spread-sheeting and word-processing applications are stored neither on the terminal, nor on the cradle, but on the host to which the cradle has access. These applications are provided and maintained by a central server or distributed servers on the host network as appropriate, allowing central control updating and maintenance. In addition multiple copies of the application software are not required for permanent storage on a large number of independent terminals which would give rise to yet further software License cost burdens and maintenance and updating difficulties.

When it is desired to make use of a specific application, that application can be called up at the cradle and cached for dynamic use, and deleted when it is no longer needed. As a result the amount of memory required is considerably reduced. For example, where it is desired to process data input to the terminal following a specified application, the application can be called up from the host and processed at the cradle 712, and the results stored in the internal or external memory, printed out, displayed in a suitable display or downloaded to the host for further processing. In a further alternative the data from the terminal can be transferred from the cradle to the host as raw data with instructions to the means of processing and processing carried out at the host, reducing the memory and processing burden on the terminal and cradle yet further.

As discussed above, there are numerous applications for the system of the present invention, for example in transportation and logistics fields, warehouse facilities, public safety, retail and any other enterprise relying on fast and efficient data flow and requiring portable data collection and transmission. As will be discussed in more detail below, one possible cradle implementation comprises a vehicle based, wireless cradle communicating with access points via wireless communication. This allows vehicle based use, yet more suitable for transportation in courier companies, utilities, public safety organisations, field sales and service and any other mobile operations.

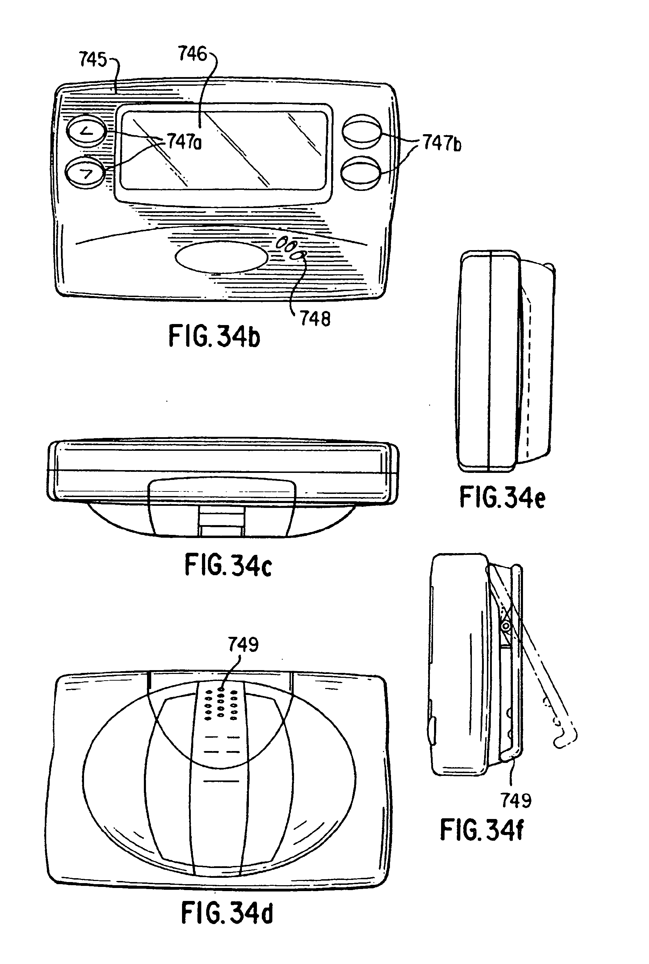

One possible embodiment of the terminal according to the present invention is shown in more detail in Fig. 34a. The terminal 710 is preferably shaped with ergonomic considerations in mind allowing easy use, carrying and storage by the user. A significant feature of the terminal is the display 750. This may be an LCD or video display, for example. It is preferably of high resolution, sufficient to show detailed icons and, preferably, detailed video images as discussed in more detail below. The terminal 710 carries functions suitable for laser scanning and/or pen-based data collection. For example the terminal 710 can include a reader component 752 which can be integral as shown or modular. The reader 752 is arranged for laser scanning of graphic indicia such as barcodes and includes the basic component features of a reader, namely a reading beam emitting means such as a laser diode, a reflected reading beam detecting means and means for scanning the beam if that is desired, for example an oscillating mirror (in the case of a 'flying spot" optical scanner). If the scanner is a "field of view" scanner, on the other hand, no scanning means is required, and the detector comprises a CCD (charge coupled device) array. Data collected by the reader 752 is treated as 'other input" shown in block 718 of Figs. 32a and 33 in relation to the terminal, and the data is processed accordingly.

In addition the terminal 710 can include a data pen 754. Such features are known in the art. In particular the data pen 754 can be used to write directly onto the display 750 of the terminal 710, either for data entry, for signature capture and verification or other appropriate data collection and verification purposes. The terminal 710 also includes an audio speaker 756 allowing alarm signals and/or other audio messages such as voice synthesised speech or human voice to be output by the terminal to the user, as well as an audio input such as a microphone for example for two-way voice communication.

Figs. 34b to 34f show an alternative terminal implementation 745. The terminal 745 includes a display 746, controls 747a,747b and a speaker 748. The terminal is arranged for wireless communication with, for example, a local Intranet network. Messages to the terminal 745 are displayed on the display 746. Simple messages can also be relayed from the terminal 745, alternatively the terminal 745 can relay basic information as to location or user identification. Preferably the display 746 is an ICON based display in which, for example, the user is able to select messages to be relayed to the network by scrolling between suitable icons using control buttons 747a,747b. The terminal 745 can also include audio capability either emitting a short 'beep' type signal when a message is received or, in more sophisticated versions, incorporating a voice synthesizer which can notify the user that a message has been received or indeed speak the message. The terminal 745 can also include a microphone (not shown) allowing audio messages to be relayed to the network via the terminal 745. For ease of use the terminal preferably also includes a clip 749 allowing it to be releasably attached to a user's clothing.

The system preferably incorporates power management/distributed power management to ensure that, for the portable components at least the power supply is as efficiently used as possible ensuring that the full life of a power supply is obtained. In particular where the terminal is capable of performing different tasks using different components, the power usage for each component is preferably distributed by individual adjustment in relation to each component to optimise power demand to meet the necessary power requirements.

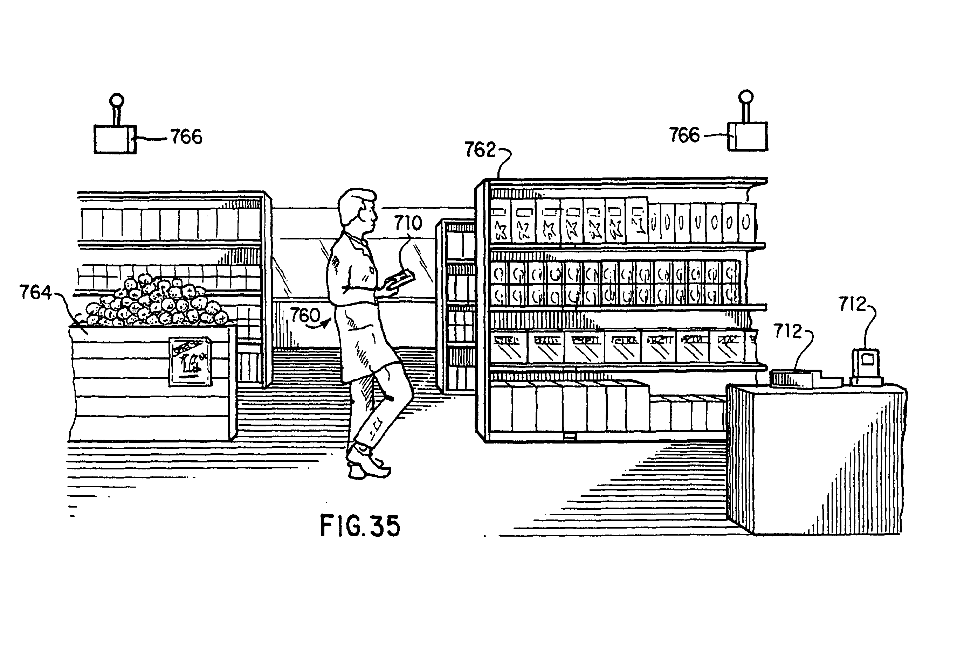

A retail application of the invention is shown in Fig. 35. A customer 760 enters a retail outlet such as a supermarket (as shown), or any other suitable store selling merchandise or products. The retail outlet automatically provides a plurality of portable terminals 710 stored at a convenient location in their respective cradles 712. The customer 760 selects a terminal 710 from a cradle 712. As shown the retail outlet sells a variety of products for example at shelves 762 or counters 764. Also provided in the retail outlet are a plurality of radio or other suitable wireless transmitters or access points 66, at appropriate locations.

As the customer 760 moves about the retail outlet the access points 766 broadcast to the terminal 710. The terminal 710 uses known prioritising systems and/or algorithms to accept signals only from the nearest access point 766. The access point 766 transmits information concerning products available in the locality of the terminal 710 for display on the display 750. The terminal 710 receives the signals via the remote link 722 shown in Fig. 32a.

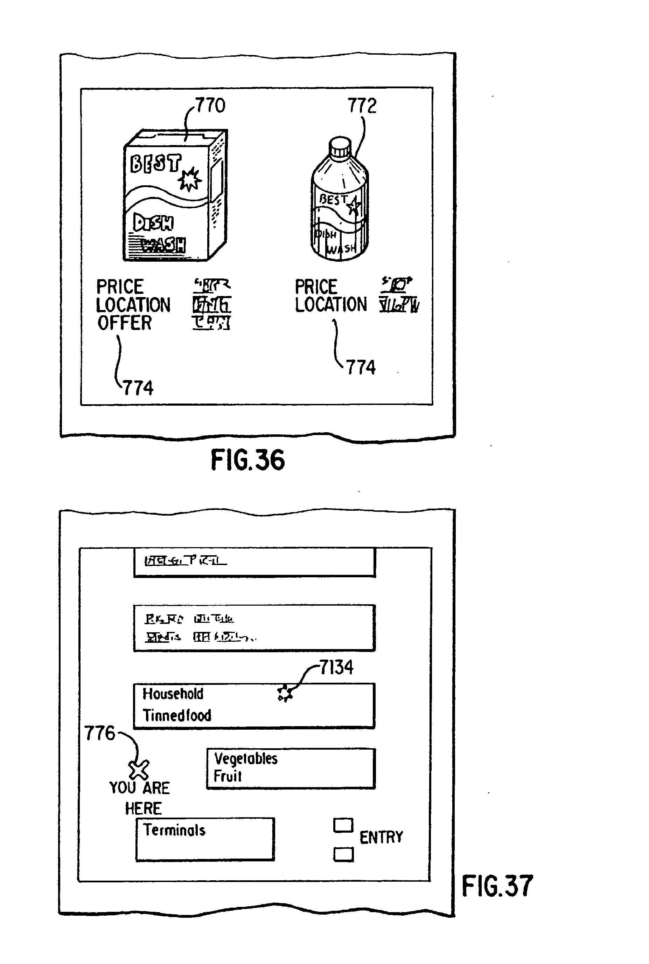

The information transmitted by the access point 766 to the terminal 710 can take various forms, and in one preferred embodiment the terminal displays graphic icons representing products available in the locality, as shown in Fig. 36. For example where the consumer is in the vicinity of the laundry section and the terminal 710 selects the broadcast signal from the nearest access point 766, products available in the laundry section can appear on the terminal display 750 such as dishwashing or normal washing up liquid, 770, 772 respectively Actual pictorial representations of the products can appear for the customers ease of reference. Accompanying information such as price, location and any special offers can also be provided at 774. Accordingly, the retail environment can be tailored for optimum efficiency.

Either a dedicated access point 766 or each of the plurality of access points 766 can also provide, for example, a map of the retail outlets and the products found as shown in Fig. 37. Optionally the map could include a marker 776 indicating the current location of the user - this could be approximated by establishing which access point was currently in communication with the terminal, or a simple geometric positioning system could be used. Indeed such a positioning system would further allow broadcasts to the terminal to be dependent upon the customer's position as established by the positioning system rather than as determined by the location of the closest access point.

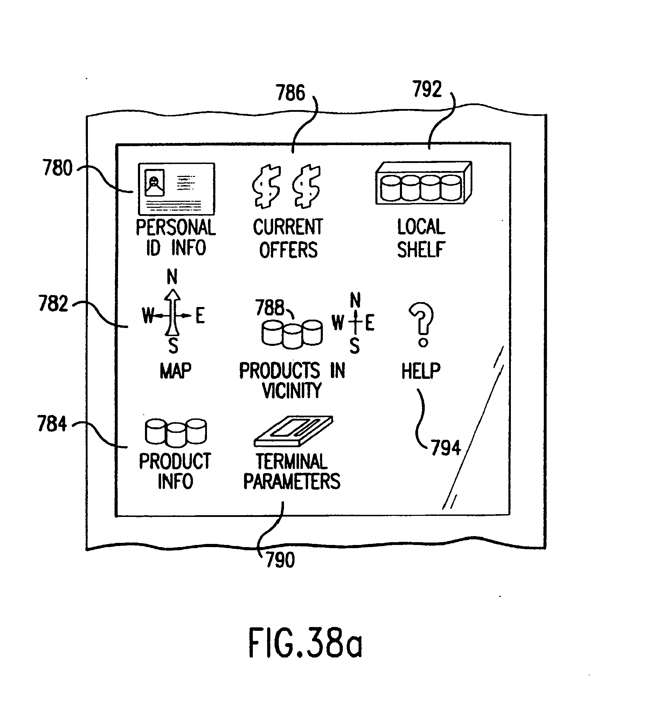

The terminal can include a preliminary option screen, as shown in Fig. 38a, which is displayed to the customer when the terminal is first accessed. Various icons are shown depending on what functions the customer wishes to utilise. The icons can be accessed and processed by the customer in various known ways, for example by using an integral "mouse" type roller on the scanner, by having a touch-sensitive screen, by having a "digital pen' arranged to interact with the screen or by using a keyboard on the terminal. The icons can include the following: personal identification information entry 780, map 782, product information 784, current offers 786, products in the user's vicinity 788, terminal parameters 790, depiction of a local shelf 792 and help 794. It will be appreciated that many other icons and functions can be incorporated as will become apparent from the following discussion.

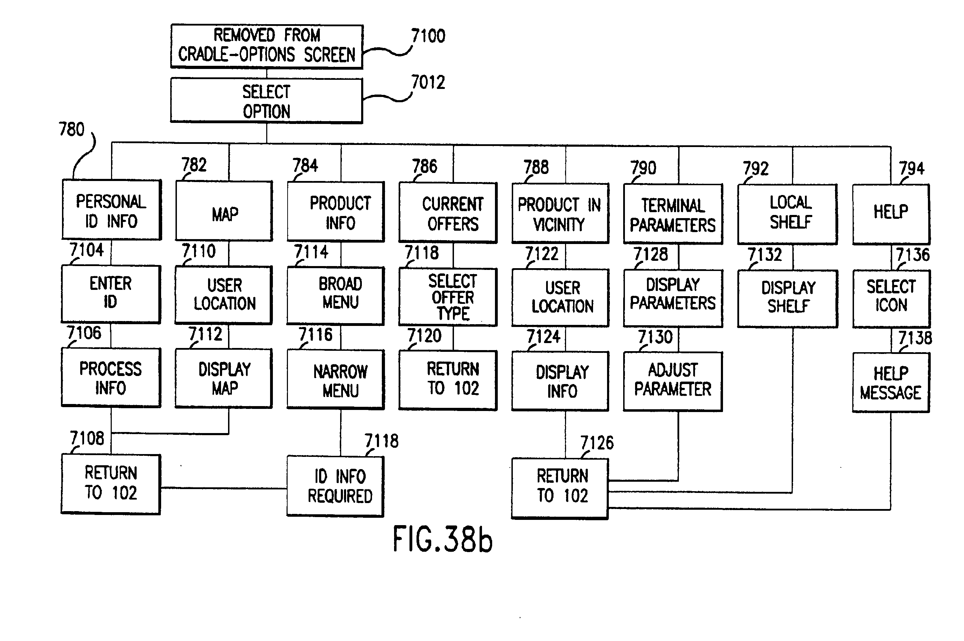

Operation of the initial screen and the subsequent screens is represented by the flow chart shown in Fig. 38b. At step 7100 the terminal is removed from the cradle which automatically initiates presentation of the option screen. The terminal then awaits selection of a given option at 7102. The system then moves to the submenu required by the icon 780 to 794.

If the personal identification information entry icon 780 is selected then the terminal awaits entry of the relevant information. This can be, for example, by entering a credit card or other identification number, by swiping a suitable magnetic swipe card through a slot in the terminal, or by using barcode capabilities on the terminal to read barcoded personal ID information. This is shown generally at 7104. Once the information is entered automatic crediting or debiting of items scanned and purchased by the customer can be initiated, or additional information concerning the customer's buying patterns and preferences can be utilised to target the customer with selected product advertisements. The information can be relayed from the terminal to the access points via wireless communication. Alternatively, the user identification information can be entered while the terminal is in the cradle, for example via a swipe slot on the cradle. Indeed this can be used to release and initiate the terminal as an additional security measure. Once the information has been entered and processed as appropriate at step 7106 the system returns to the menus screen at 7102.

If the map option is selected then, optionally, the user's current location is identified at 7110 and the map is displayed showing this information at 7112. The customer then has the option to return to the initial menu at step 7108.

Where product information is required at 784, the required product can either be typed in or can be selected using a series of menus descending in scope - 7114 to 7116. Once the product is identified then the customer can be presented with various options as to what information is required - price, brands available, offers available, location and so forth at 7118. The user can also return to the main screen 7102 at step 108.

If the customer wishes to view current offers, at 786, then the offer type of interest can be selected at 7118. For example all current offers can be scrolled past the user, offers linked into purchases that the user has already made can be shown, offers relating to a particular class of goods can be shown, or offers in the vicinity can be shown as selected by an appropriate icon or data entry. The user can then return to the main screen 7102 at step 7120.

If the user wishes to find out what products are available in the vicinity then the user location is established at 7122 and broadcast signals from the relevant access points 766 received and displayed at 7124. This option may be maintained in default to present suitable information to the customer as the customer proceeds around the retail outlet. Once again the customer has the option of returning to the main screen 7102 at step 7126.

If the customer wishes to select terminal parameters at step 790, the various parameters available are displayed at step 7128. Those parameters can be, for example, display brightness, display size, language, volume (where a voice synthesizer is incorporated) and so forth. The parameter is adjusted as appropriate at step 7130 and the user can then return to the main menu 7102 at step 7126.

Where the "local shelf" icon 792 is selected, the closest shelf can be selected depending on the customer's location, and the shelf displayed pictorially. For example where the customer is trying to find a specific product, the product can be highlighted. This option can be used in conjunction with the map system to identify a given shelf as shown by the flashing sign 7134 in Fig. 37. Alternatively, the shelf representation could highlight products with offers on or any other relevant information, at step 7132.

If the help icon 794 is selected then the customer is then invited to select which of the icons he requires further explanation on at step 7136. The appropriate help message 7138 is then displayed accordingly. For each of the options, the customer has the option to return to the main screen 7102.

It will be seen that the system offers a very user-friendly layout allowing the customer to identify products, find out where the products are in relation to the customer, become aware of special offers and so forth. Where customer identification information is stored then the customer can be targeted with marketing/advertising information tailored to his specific stored preferences. The system can be yet further improved by incorporating a voice synthesizer or other audio message means in the terminal such that the terminal can "speak" to the customer to pass on information concerning various products of interest and any other relevant information.

The system can also have application in inventorying and stocking of the outlet (or indeed for warehousing and so forth although the following discussion is limited to the retail outlet discussed above). For example, where it is desired to re-stack the shelves a shelf in its current form can be shown on the screen and rearrangement could be carried out virtually first by dragging and dropping the relevant graphics to show the movement of the actual goods on the shelves. The physical moves could follow. This would allow both a guide as to how the re-stacked shelves will look and also a very helpful check to ensure that shelf stackers were able to compare the steps they had taken with those that were required. Alternatively, for a given product or brand name or class of products, by highlighting the representation of that product on screen, relevant data such as inventory, delivery, sales history and so forth could be presented to the user. A similar system of icons and steps could be used to those discussed with reference to Figs. 38a and 38b. Dedicated terminals could be provided for these purposes in the retail outlet discussed above. Alternatively, the shelf stacker, inventory officer or other relevant personnel could enter their user identification information to the cradle prior to removing the terminal such that the terminal is initialised appropriately. It will be appreciated that the same system could be used for inventorying in warehouses or general product tracking, using graphic icons to represent the products and allow quick, user-friendly accessing of background, ordering or destination information.

It will be seen that a variety of other peripheral features can be envisaged for the system. For example the system can include a range alarm such that if a terminal is taken outside the store, or outside the designated area within the store, an alarm will sound. For example if the customer carrying the terminal strays into an area where no access points are available or where access is generally restricted to staff then the alarm can sound. The alarm is provided within the terminal and can operate, for example, on the basis of range signals from the closest access point to establish whether it has exceeded that range in which case the alarm will sound.

The terminal can be used in conjunction with a "self-scanning" system by the user whereby the user scans those products purchased personally, removing the need for check-out personnel and generally accelerating the shopping process. In that case the terminal can store the purchasing details against the user identification information - where appropriate - to update data bases on the particular customer's marketing profile. The scanner can also be used to read codes directly from products in order that additional information can be called up at the terminal.

The system described above is particularly useful for "ultra thin" clients in the form of portable terminals. The basic capabilities that must be carried on the terminal itself are the display driver, minimal memory and processing requirements and communications capabilities and protocols for communication both with the access points and the cradle. Information concerning products, maps and other relevant aspects can be accessed on demand via the access points from a host. Data stored concerning a given customer's buying patterns and, as appropriate, queries and other transactions can be downloaded to the cradle after each use, reducing the memory requirements considerably. Similarly, the exact functions required for the terminal e.g. customer use, inventory use, re-stacking use and so forth can be loaded from the cradle once the use has been identified whilst the terminal is still stored in the cradle. As a result the memory and processing burden on the terminal itself can be kept to a minimum, allowing simplicity and reduction in costs, as well as ease of updating applications and so forth.

In an alternative arrangement each terminal can communicate with its respective cradle if the store is of suitable size. Accordingly the ultra-thin client-thin cradle implementation can be achieved.

The system can be yet further enhanced in various manners. For example the terminal could incorporate a detachable scanner portion, such that the scanner and/or terminal are each autonomous and independently accessible. In some circumstances the capabilities of the terminal itself or the scanner itself will only be required and the additional burden of the other components would not be desired. This would be the case for example where a portable digital assistant was required.

A further possibility would be that of adapting the display format of the terminal. This would preferably be incorporated as a software facility in the cradle, rather than burdening the terminal with the capability The display format - i. e. the number of characters in the horizontal direction - could be adapted to the horizontal length of the screen of the terminal. To make the system as user-friendly as possible it would preferably be the case that the terminal communicates the display dimensions to the cradle such that the server/cradle could automatically format the display page to fit the screen without the requirement for "wrap-around", that is, an intended single line of text being split into two or more lines. As an alternative to automatic formatting, a predetermined selection of available predefined format options could be accessed, and the suitable option adopted. An aftemative method of avoiding wrap-around for text lines would be to scale the text down to create a smaller typeface size allowing a single line accommodated without wrap-around.

In addition to its downloading/uploading/ initialising, security and storage capabilities, another important function fulfilled by the cradle is a battery recharging function. Whenever the cradle receives a terminal, a battery level check is carried out and if the batteries are below full power, or a predetermined threshold power level then recharging will automatically take place during the down time of the terminal. The terminal carries suitable contacts arranged to mate with charging contacts on the cradle itself in a known manner. Battery recharging technology will be well known to the skilled person and is not described in any detail here.

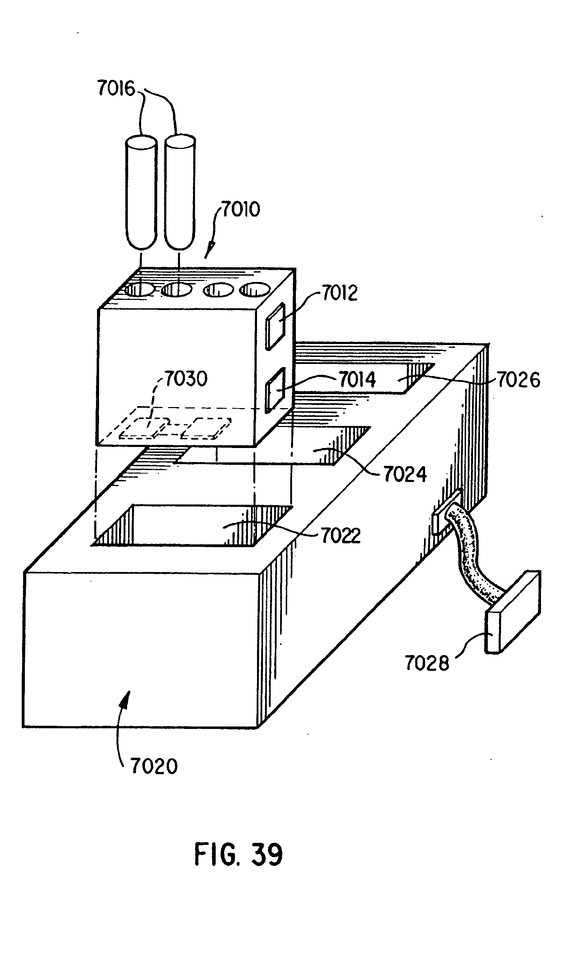

A charging configuration is shown in Fig. 39. According to this configuration the terminal 710 includes a rechargeable battery pack 7010 which is removably insertable into the terminal and includes suitable powering contacts 7012,7014 to cooperate with corresponding contacts in the terminal 710. The battery pack 7010 includes a plurality of power cells 7016 which are either permanently retained in the battery pack 7010 or replaceable to prolong the life of the battery pack as a whole. The battery pack 7010 is received in a charger 7020 which has one or preferably a plurality of battery pack receiving slots 7022,7024,7026. The charger 7020 is powered from a suitable power source shown schematically at 7028. This system allows multiple battery packs to be recharged at the same time, such that a plurality of terminals can operate on a fully charged battery pack whilst a replacement battery pack is being charged. This decreases the down time of the portable terminals to an extent limited only by the availability of battery packs and chargers.

The charger 7020 can be incorporated in a cradle or provided separately as appropriate.

It is necessary in any such arrangement to introduce adapter circuitry which determines the charging rate and other parameters dependent on the nature both of the battery pack and the charger. Conventionally such adapter circuitry is provided in the charger itself, reducing the weight and complexity of the portable battery packs accordingly. According to an aspect of the present invention, however, the adapter circuitry is provided on the battery pack itself for example on a bottom face as shown schematically at 7030. According to this system charging operation and charger 7020 design are greatly simplified. In particular the battery pack 7010 can be inserted into in the appropriately configured charger and the adapter circuitry 7030 provided on the battery pack 7010 adapts operation accordingly. The user therefore does not have to spend time ensuring that the correct charger 7020 has been selected. Yet further enhancements of the terminal are discussed in the following paragraphs.

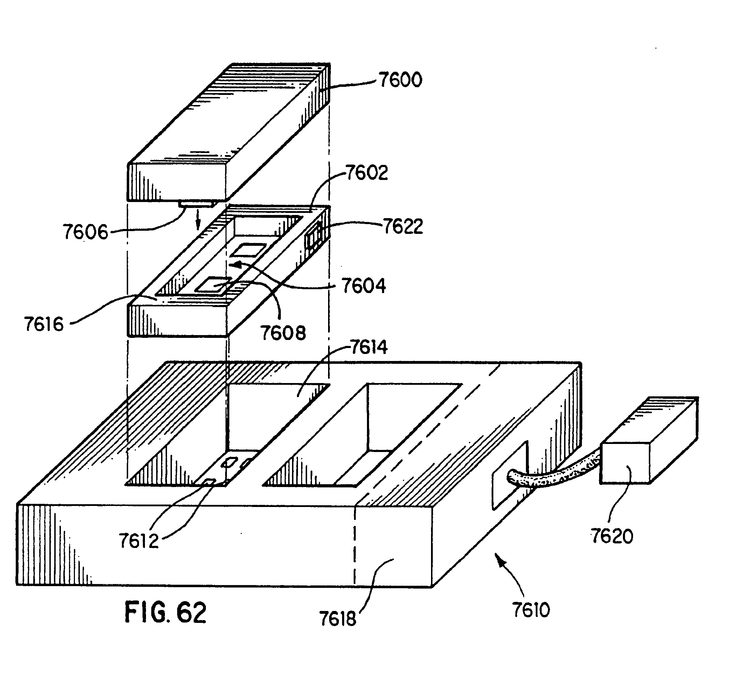

In a further revised variant shown in Fig. 62 each battery pack 7600 is provided with an adapter 7602 which receives in a suitable recess such as that shown at 7604 all or a portion of the battery pack 7600. In the embodiment shown the battery pack 7600 includes a projecting connecting portion 7606 which is received in the recess 7604 of the adapter 7602. The connecting portion 7606 and recess 7604 have complementary contacts shown generally at 7608 for power supply and so forth.

The adapter 7602 is received in a base unit 7610 and provides a suitable interface between the battery pack 7600 and the base unit 7610. Complementary contacts shown generally at 7612 are provided on the adapter 7602 and an adapter receiving recess 7614 on the base unit 7610 for power transmission and so forth.

The adapter 7602 carries all charging electronics except the power lines themselves. Accordingly control of the charging process is achieved as discussed in more detail above. The adapter 7602 can carry indicators such as LED's shown generally at 7616 to indicate charging completed, error, charging in progress and so forth.

It will be seen that the base unit 7610 is a multi-slot unit allowing the charging of a plurality of battery packs via respective adapters simultaneously. The base unit 7610 can work off an internal power supply 618 or an external power supply 7620 as appropriate.

If it is desired to charge only a single battery pack then the adapter can further carry a power supply connector for connection directly to a power supply. As a result, in those circumstances, the base unit 7610 is not required at all.

According to yet a further variant, it is known to provide "smart" batteries including complex electronics such as EEPROMS, input/output and so forth. These smart batteries communicate with the charger or other host to provide various parameters including gas gaging, status of charge, cycle number and so forth. The smart batteries, however, add considerably to the cost of a pack and at the end of the limited life cycle of the cells (usually a few hundred cycles) the whole "smart" battery pack must be disposed of.

This can be overcome by using a battery pack 7010 of the type shown in Fig. 39. In this case the cells 7016 are replaceable, the smart electronics being kept in the battery pack 7010. For example the cells can be accessed through a door or cover as appropriate. As a result the expensive electronics and costly battery pack housing can be saved and used repeatedly.

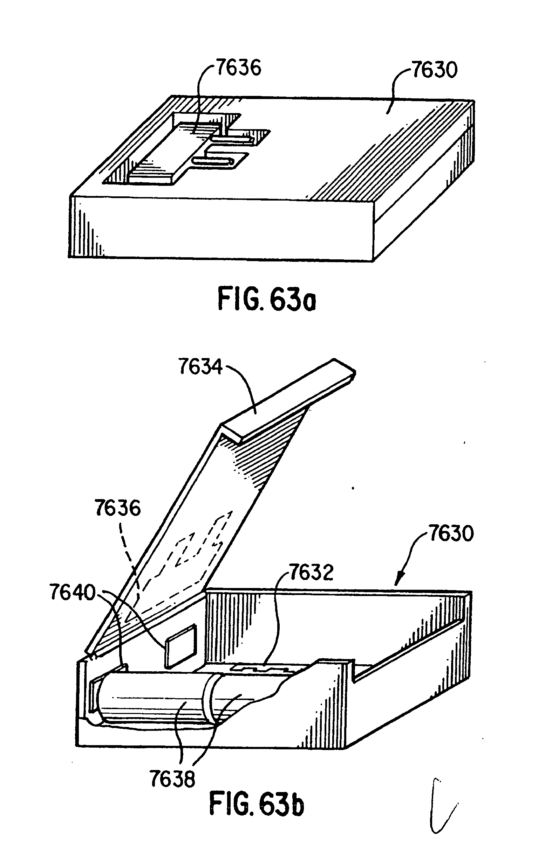

Figs. 63a and 63b illustrate yet further variants to battery pack/charger arrangements. In known systems, battery packs are charged by miniature chargers which are either incorporated into the large outlet plug-type of a housing or in a plastic module which is externally attached to the battery pack. Both solutions require, external to the battery pack, either cord or module parts. In the arrangements shown in Figs. 63a, 63b, any such external charging device to charge the batteries is eliminated by providing a battery pack 7630 including, as shown generally at 7632 in Fig. 63b, a charger component such as an AC/DC convertor, charge electronics, gas gage, all incorporated as permanent components. Two aftemative types of battery package 7630 are proposed. In Fig. 63a the pack is disposable after the individual cells (not shown) reach their lifetime limit. In Fig. 63b it will be seen that the battery pack 7630 includes, for example, a hinged cover 7634 (on which the retractable plug 7636 is optionally mounted) allowing the cells 7638 to be replaced after they reach their life limit. It will be seen that the battery pack 7630 as shown in Fig. 63b includes suitable contacts 7640 against which the cells 7638 can be mounted for operation of the battery pack 7630.

In one embodiment it may be desired to allow "renting" of the terminals - for example where use of the terminals is at a premium and optional. The cradle carries a physical lock on the terminal and/or some form of power/access lock such that, without authorisation, the user cannot release the terminal from the cradle, or cannot use the terminal. Authorisation can be obtained by suitable user identification, for example swiping a credit card or other user identifying means through the cradle. If authorisation is given the lock is released and the user can remove and use the terminal. At the same time the release time is clocked so that the user will be billed for the rental time until the terminal is returned to the cradle at which time the timing clock will cease to increment. Billing can be carried out automatically, where appropriate, to the user's credit card. One capability that the terminal could incorporate would be as a portable telephone or "cellphone" in which case the terminal/cradle would be a marketing tool for renting cellphones for a period of time. Whatever the desired use, operational checks can be carried out by the cradle when the terminal is returned to it to ensure that it is operative and has not been damaged during the rental period. If damage has occurred then the user will be identified by the identification information and can be billed appropriately. In addition information can be stored such that, in future, the user is not authorised to use the terminal or only at a premium rate.

In cases where the terminal is, or incorporates a cellular telephone an automatic facility can be provided in which the terminal/telephone operates over a wireless LAN as a preferred default option, but if the terminal is out of range of the access point (as defined by a predetermined level of communications reliability) the system uses the cellular telephone capability. Accordingly, the user can connect to the desired destination even if he moves outside the wireless LAN area, making the calling network transparent to the user whose only concern is that guaranteed communications are provided.

It is further desired to allow individual portable terminals to network with one another. This networking can be carried out using any suitable protocol, for example the system set out in the article "Routing in Ad-hoc Networks of Mobile Hosts", David B. Johnson, 1995 IEEE Pages 158-163. In particular a protocol specific to the network of mobile hosts is required taking into account the mobility of the hosts and the limited transmission range. A source host finds a route to a target host via intermediate hosts by broadcasting a query packet which records its route to the target host. The request pack carries a request identifier so that intermediate hosts ignore all but the first copy of the request packet. The total number of steps is limited. As a result the shortest path can generally be found with a minimum of communication overhead. Although the routes are discovered this way, the route may also be maintained and problems can arise where one of the intermediate hosts in the selected route moves out of transmission range. To overcome this route maintenance is carried out using a hop-by-hop acknowledgement system such that if there is a transmission problem this is reported back to the original sender and the route discovery system recommenced.

It is also desirable, in a mobile computer network, to ensure that the current location of the mobile terminal is known, not least for the reasons discussed above in relation to message routing. One method of doing this is to ensure that the current location of each mobile terminal is periodically communicated to a network centre. As a result a dynamically updated map of the location of all of the mobile terminals can be maintained which can be further used to determine routing of messages. Similar systems are known, for example, in relation to cellular telephone networks and systems. A suitable system is disclosed, for example, in US 5,612,703 which relates to a cellular communication system in which the position of a selected user unit can be determined by issuing a timing signal from a node, analysing a timing response signal from the user unit and determining the position of the user unit based on the round trip transmission and receipt time.

US Patent Application Serial No. 08/614,068 commonly assigned herewith and incorporated herein by reference relates to a portable terminal including a data input and data display and a motion detector. When movement is detected a controller activates relevant circuitry. For example where the terminal is sensed to be in a first positional orientation a first function can be performed whereas when it is sensed to be in a second positional orientation a second function is performed. It will be seen that this capability can be incorporated in the terminals of the present invention. For example it can be used to activate the terminal and deactivate it when it is removed and reinserted into the cradle.

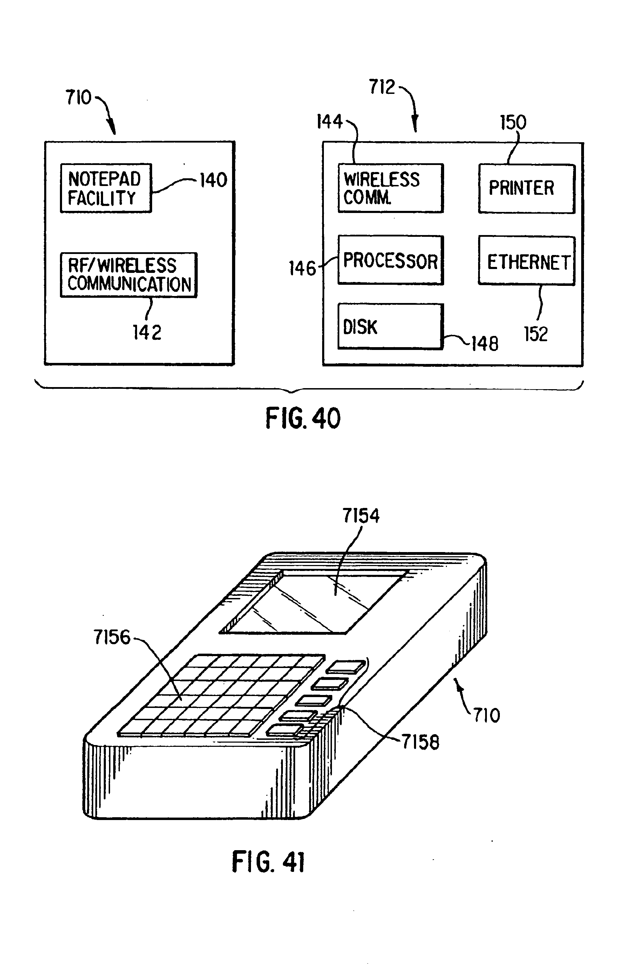

Yet another preferred variant of the invention is shown in Fig. 40. In this case the terminal 710 is an ultra thin client relying on the cradle for the majority of the computing and processing burden. In fact the terminal 710 can be represented by two basic components, a notepad facility 7140 and a wireless communications component 7142. The exact details of these components are not shown in detail as they will be well known to the skilled man. Effectively the notepad facility allows the input of data to the terminal and display of relevant information at the terminal. The processing burden at the terminal is largely restricted to this basic input/output capability together with control of the wireless communications component 7142. The wireless communications component communicates with a corresponding component 7144 in the cradle 712. As a result raw data input to the terminal 710 is transmitted straight to the cradle 712 without the need for processing (other than for communications reasons) in the terminal, leading to a concomitant reduction in the processing and memory capabilities and thus power consumption of the terminal 710. Instead the bulk of the computing capability is held at the cradle, including a data processor 7146 incorporating memory space as appropriate, additional memory space in the form of for example disks, a printer peripheral 7150, and ethernet communications capabilities 7152 allowing the cradle to form part of a larger wireless network connected, for example, to a host itself part of an Intranet or having access to the Internet. In effect, therefore, the portable terminal 710 is no more than a display for a computer held in the cradle, communications being carried out via the wireless communications link using for example RF or infrared protocols or any other suitable link. Rather than communicating directly with the cradle the terminal can communicate with one or more nearest access points, each themselves communicating with the cradle, allowing a greater range for the terminal.

Such a system is particularly useful, for example, for dealers at a stock exchange or comparable implementations. The dealers can carry out their transactions using the hand-held displays, for example buying/selling stocks, keeping up to date with their current holdings and all other suitable transactions without the need for major processing, memory or power requirements in the terminal. When the terminal is not required it can be returned to the cradle for downloading of any further information that is required, for updating of its internal applications by the cradle and for battery recharging. As a result a useful, lightweight and highly mobile terminal is provided with the background applications expected from a full scale personal computer or equivalent.

Yet further implementations envisaged for the terminal include the provision of an AM/FM radio and/or broadcast television receiver incorporated into the terminal. As a result the user may use the unit for entertainment as well as computer-related tasks. Such a terminal is shown in Fig. 41. The terminal includes a display 7154 which is adapted not only for presentation of text and icons, but also video images. The terminal then further incorporates a keyboard, for example a full alphanumeric keyboard 7156 allowing operation of the terminal either as a personal digital assistant or, in conjunction with a wireless link, as a low level personal computer. The terminal 710 further includes additional controls 7158 allowing the selection and/or control of a T.V. or radio facility - for example volume/brightness/channel and so forth. As a result a portable computer is provided which makes additional use of its display functions by allowing a T.V. receiver to be incorporated, as well as optionally a radio facility.

In an alternative configuration which can be used as an enhancement or adaptation of the above embodiments, or as a stand-alone product, the portable terminal can comprise an Internet "browser". This allows operation in conjunction with the "ultra thin" client facility. In effect, the client, apart from basic processing displaying communication facilities, carries browser software allowing the user, via the wireless link to the cradle, to browse the Internet for relevant applications and information. Using this basic facility, applications and/or data can be called up on demand and stored in a lower level short term memory for as long as they are required. As dedicated software and applications are not required on the terminal itself the storage and processing requirements are correspondingly reduced. An icon-based display can be incorporated on the terminal allowing user-friendly access to the Internet or Internet access as one of various possible options on a selection menu. Such a system can, for example, be implemented using as a basis the computer language Java (a trade mark) and supporting software available from Sun Microsystems (a trade mark).

These points are of particular relevance now that Internet Web "pagers" have moved on from being static entities viewable using a browser to true applications or "applets". Systems have been developed on existing local networks in which browser capability is introduced to existing hardware, forming a "web top'. In many applications this comprises the first step to a move towards a true "thin client' - it is envisaged that conventional "fat clients' are generally truly required only for dedicated use high volume processing applications. Introduction of such browsers allows the user to access the Internet via the Intranet for downloading of applications and information together with corresponding broadcasting of information. In addition to browsing services the system can support mail services, administration services and so forth as is well known.

As discussed to a certain extent elsewhere, the advantages of this system include security update at run time and virus/tampering monitoring. Applications are developed more quickly because of the level of use to which they are subjected and hence testing. Because applications are stored at the server, administration can be centralised and users can obtain the most recent update consistently across the system. The system can support multimedia applications largely irrespective of the client platform - for example a telephone-type system including a display, personal digital assistants, set-top boxes, point of sale devices/kiosks, entertainment facilities and so forth.

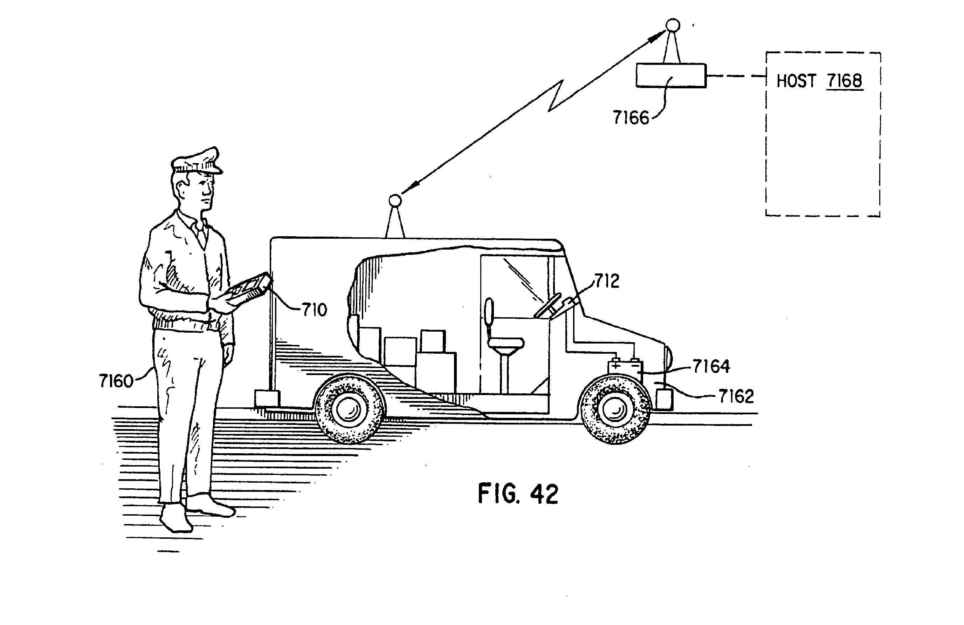

Systems incorporating the terminal/cradle facility discussed above are of benefit, for example in mobile operations such as packaging, tracking systems and courier systems. Such a system is shown schematically in Fig. 42. The user 7160 carries a portable terminal 710, preferably having laser scanning and pen-based data capabilities as discussed above. The terminal is rechargeable at a cradle 712 mounted in the users vehicle 7162 and can also download information.

In the embodiment shown the cradle is installed on the dashboard although it can also be installed on the seat or floor. The cradle 712 is connected to the vehicle battery 7164 or if required an auxiliary power supply This connection provides the basic power from the vehicle to the terminal for battery charging and communications functions. Battery charging begins automatically when the terminal is inserted into the cradle. The cradle preferably carries a display indicating when the battery is being charged, and when the battery is fully charged, and a cutoft facility is included such that power is no longer drawn from the vehicle once the battery is fully charged. The terminal can of course use modular battery packs allowing a first battery pack to be in use while a second battery pack is being charged.

The cradle incorporates or cooperates with a vehicle mounted wireless wide area network modem allowing transmission to and from an access point 7166, itself communicating with a host 7168. As a result, via the host, two-way wireless data transmission is achieved between remote operation sensors and mobile field personnel. For example, pick up and delivery times, work orders, activity reports, transaction records and all other relevant information can be communicated between the user 7160 and the host 7168 quickly and efficiently. In particular the user 7160 can input information to the terminal 710 via the keyboard or via a scanner or pen reader or other suitable input interface and await downloading information each time the terminal 710 is placed in the cradle 712. Alternatively the terminal 710 can communicate via a wireless link with the cradle 712 for instantaneous data transmission at an appropriate level.

Preferably the system incorporates an automatic "retum receipt requested" facility, where the terminal 710 is an Intranet server terminal. A server terminal of this type is described in more detail in co-pending U.S. Application Serial No filed 28th March 1997 commonly assigned herewith, which is incorporated herein by reference. In essence the server terminal includes the server software within the terminal itself allowing direct creation of Internet files/"websites" without the need for complex communications with a remote server. In such an implementation, the cradle 712 is provided in the vehicle 7162 as shown in Fig. 42 and the user 7160 takes the terminal 710 to the package recipient to sign for the package, noting the time of delivery. As the terminal/cradle is a server (in an alternative implementation the server software can be incorporated in the cradle with no loss in efficiency and a reduction in the processing burden on the terminal), and the server can communicate over a wide area network to the host or depot, an interface can be provided to the Internet allowing the sender of the package to determine at any time if the package has been delivered yet, or whether a delivery has been attempted but the package has not been received. Accordingly, the delivery company can set up an additional facility to attract and satisfy customers, giving instantaneous information, via the Intemet, on the status of any delivery.

The detailed implementation of this can be carried out in various ways. For example the sender of the package can access the delivery company's website and then trace the progress of the particular package of interest using, for example, a code number assigned at the time of ordering the delivery. At the same time the progress of the package can be logged by the user, or delivery agent by entering the delivery or attempted delivery times against the code. The code can, for example, be read by a scanner provided in the terminal from the barcode provided on the package, if appropriate.

Logging of the progress of the package can be improved yet further by logging transfer of the package at intermediate stages between the sender and recipient, for example, at each stage of the depot chain. The development of a routing table is of particular importance in the general case where the exact route to be taken by the package via the depot chain is not decided at the time that delivery is ordered. This can facilitate double checking of the progress of the package. It is preferred that the routing table features details of the ultimate delivery truck as this will be easier to trace than individual packages. Preferably the sender pays a premium for this system of 'instantaneous return receipt" so that the burden of transmitting the status of every package is reduced and need not be accessible on a real time basis except where paid for.

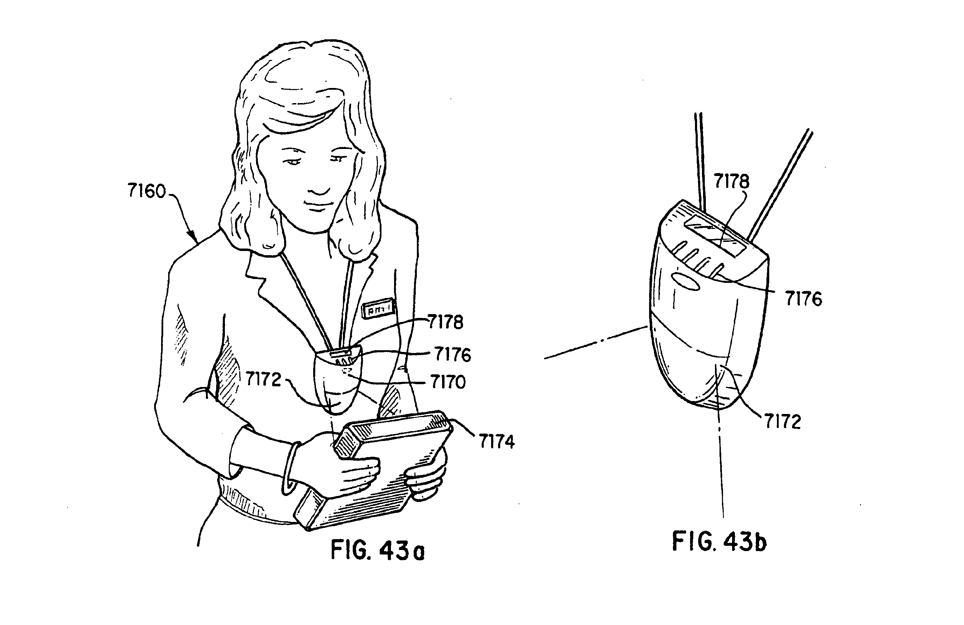

Referring to Figs. 43a and 43b a particularly useful implementation of a portable terminal is shown for use with the delivery implementation discussed above. In such implementations it is desirable for the user to have both hands free for delivery of packages. Accordingly a "pendant" type scanner 7170 is used, hanging around the user's neck. The terminal includes a scanner window 7172 angled so as to point in the direction of a package held at waist height by the user. Such a package is shown as 7174. The terminal 7172 is thus able to scan the package and any barcodes held on it with optimum ease. For simplified manipulation the terminal further includes controls 7176 and a display 7178 on an upwardly facing surface such that the user can manipulate the controls and read the display without having to remove the pendant scanner. The terminal 7170 can in addition communicate with, or interface with, the cradle 712 in the manner discussed above.

As discussed above any uses can be envisaged for the terminals of the type discussed above, including warehousing and generally logistics-type arrangements. The "thin client" system as described above is particularly suitable for incorporation with existing infrastructures including the hardware - PC's systems, networks and data tools, and software - databases and so forth which are already in place. This applies throughout the relevant areas of the market for example retail, distribution or manufacturing. Such a system will preferably incorporate a central server carrying a suitable database together with appropriate clients - for example wireless terminals of the type described above incorporating a graphical user interface to the user. The system introduces the benefits of real time operation which shortens the lead time on instructions and provides optimum implementation of both staff and hardware, at the same time allowing checking to take place on an immediate, continuing basis. Inventory information can be dated and processed in real time. Levels can be tailored accordingly and optimized/minimized. The user will automatically know where items are stored and be able to locate them promptly. At the same time the administrative burden is decreased. All of this is achieved without costly across the board changes to the existing hardware infrastructure.

The use of an icon based user terminal means that the system can be introduced quickly and with simple training only, but the system can also be extended to more complex systems including wave planning, resource scheduling, productivity measurement and real time assessment and ordering of jobs. As the inventory is continually updated there is no down time for physical inventorying. Management, data, inventory, stock and other relevant reports can be obtained at any time again decreasing the administrative burden.

A central server can run both client-types instantaneously. In addition to wireless terminals run via some form of radio network controller, PC's or other fixed terminals can also be wired to the system either at the base station or remote. Standard interfacing communications protocols can be incorporated together with standard network architectures to achieve a reliable, interchangeable and adaptable system preferably linked into other business systems as required.

Terminal/cradle arrangements of the type discussed above provide compact base stations allowing high speed data networking at the same time as battery charging for the terminals. The systems are appropriate for transportation and logistics companies, warehouse facilities, public safety, retail and other appropriate organisations. Preferably upon initiation, the cradle powers on and performs self-diagnosis to ensure proper system operation. Battery charging preferably begins automatically when the terminal is seated in the cradle and indicators such as LED's can be provided on the cradle to indicate when power is on and when charging is taking place. Data transmission can be quickly and efficiently achieved with a host for example by modem using standard communications protocols. Master cradles can be linked to, for example, a host PC or another cradle chain. Preferably standard interfaces such as RS232 and RS485 are provided for use with a variety of portable printers and peripherals.

The system can also be mounted in a vehicle where appropriate, for transportation and courier companies, utilities, public safety organisations, field sales and service and other appropriate operations. The cradle includes the capability for in-vehicle battery charging in two-way wireless communication. It can be installed for example on the dashboard, seat or floor of the vehicle and can take power from the vehicle battery. The system can allow two-way wireless data transmission between remote operation centres and mobile field personnel, allowing rapid transmission of pick-ups and deliveries, work orders, activity reports and transaction records.

In either case it will be seen that the provision of an ultra-thin client reduces the weight and power requirements of the hand-held terminal making it yet more suitable for the portable uses envisaged.

Many of the components forming the detailed embodiments discussed above, are individually known to the skilled person and do not require detailed discussion here.

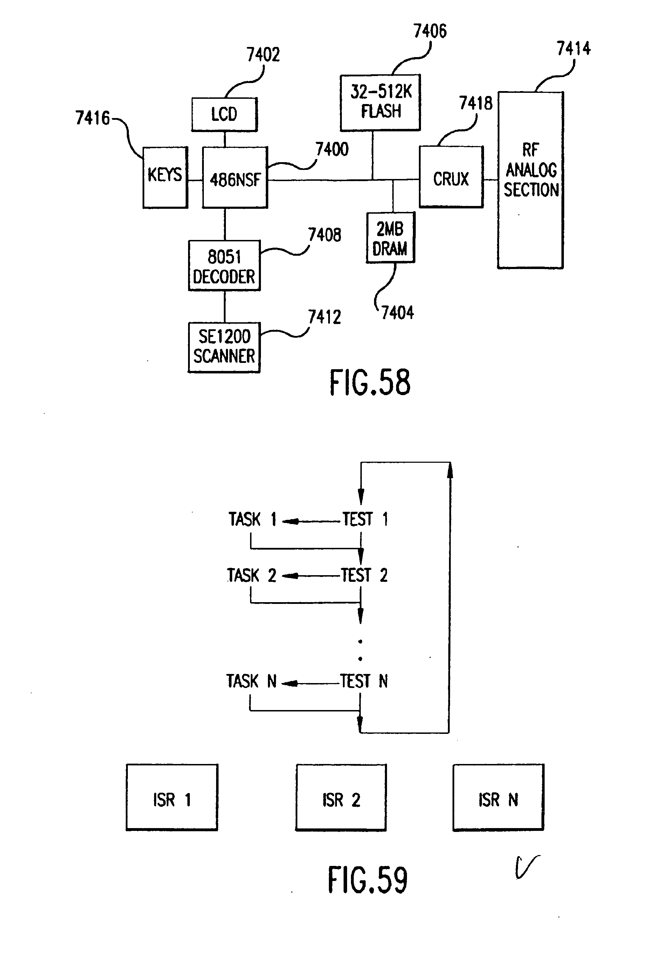

It will be seen that it is highly desirable to create clients that are "web enabled", that is, configured for connectivity to the Internet. In many cases it is desirable to remove previous operating system based terminals using, for example, DOS and move instead to, for example, HTML (hypertext mark-up language). Referring to Fig. 58 the hardware and software design for a web optimised terminal is shown. The hardware model presents the major subsystems. The software model describes how the radio and HTML software coexist.

The digital portion of the design is fairly simple. The primary CPU 7400 can be, for example, a National 486 SXF or SXL (Trade Mark). It is a highly integrated CPU that includes a variety of peripherals including LCD 7402 controller, DRAM 7404 controller, timers, serial ports, etc. It also has an onchip code cache and extensive facilities for low power operation. It executes 32 bit protected mode 386 instructions however it cannot run DOS or Windows (Trade Marks).

There is a single 128KB flash memory chip 7406 containing compressed object code. When the unit starts up the code is decompressed into the DRAM 7404 and executed from there. The 128KB should contain about 256KB of 86 object code. This code contains the radio firmware, setup routines, and sufficient Web Client code to download the actual runtime code from a server.

There will be a single 1 M x 16 DRAM 7404 on the unit, providing 2MB of DRAM. This will be capable of low power and self refresh.

The scanner interface 7408 will be, for example, the pre-programmed 8052 used on the currently available SE 1222 decoder board. The decoder board itself will not be used, just the components from it. The 486 will communicate with it via its integrated serial port. A scanner 7412, for example the SE1200, is also incorporated.

The interface to the radio 7414 will be preferably a simple 8 bit parallel port, although a PCMCIA can be used. The radio module will be a pure radio capability only or "dumb "kappa" unit that does not have its own CPU, flash, RAM, etc.

There are two options for LCD support. The 486SXF processor 7400 supports up to 320x200 display. Use of the 486SXF allows a "dumb" LCD unit without buitt-in controller. If the SXL version is used, the LCD controller must have its own controller.

The keyboard 7416 is just basic switches. Debouncing is done by the 486 processor 7400.

The entire system runs off a single 5 volt supply. The radio 7414 requires 5 volts and so does the 486 processor 7400. This costs some power but eliminates the need for a separate 3.3v supply thereby reducing the associated costs.

The most cost effective model is a two board setup, the motherboard and the "Kappa" radio module. On one side of the motherboard are the "keys" 7416, LCD 7402, and whatever parts can be assembled thereon. On the other side is the radio module 7414 (attached directly to the motherboard) and the rest of the parts. The whole thing can be ½" to ¾" high, - 2¼" wide, and 4-6" long. The scanner 7402 also mounts on it. The goal is to eliminate all the flex cables, further reducing costs.

The software on the design shown in Fig. 58 is built around a small, non-preemptive multftasking kernel that currently runs on known radio cards such as the Spectrum 24 card (Trade Mark) (available from the assignees' radio card). There are tasks for handling the user interface, Crux or Cetus 418, sending and receiving, and roaming. They communicate via shared variables and message passing. There is an idle task that is the lowest priority task and it may be preempted. This task forms the basis for a single, polled loop structure in which the protocol stack and HTML runtime exists.

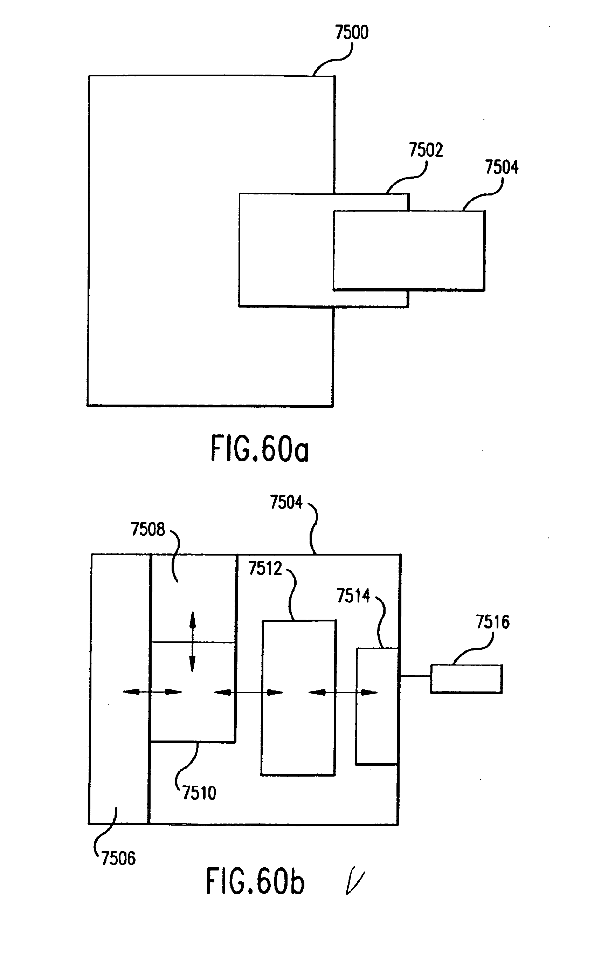

In this model there is one task that operates at "task" level. It performs a series of tests which may result in some processing taking place. Interrupts are generally enabled at all times. The structure is shown in Fig. 59.

It should be noted that the tasks may be quite complex. For example the test may be whether a packet has been received on the RF interface. If one has been, the packet is passed to a network protocol stack that processes it.

This software model has been used successfully on known systems for pagers and modems, for example the Symbol Technologies Spectrum 24 pager and Modem. Accordingly further detail is not required here. The pager version includes the radio firmware, UDP/IP protocol stack, pager protocol interpreter, and pager user interface all running on a single 80188 CPU. the HTML runtime code has been designed to fit into this single task, polling model.

Known cradles have various basic requirements:
- Full hardware signal compatibility at the connect between the cradle and the host such that the host does not require modification, and full hardware signal compatibility with a serial port present on the terminal.
- Low insertion force connection between the terminal and cradle allowing frequent and preferably unlimited removal and re-insertion.
- Full hardware register compatibility within the terminal with existing communication software, for example IBM PC compatible communications software.
- Support for "chaining" of multiple cradles to a single host serial port. In one embodiment a "master" cradle is provided for connection to the host, and supports a large number of "slave" cradles. Two access modes must be supported, single access mode and multiple access mode. In single access mode, one terminal at a time receives exclusive control and the host serial port and all of the terminals experience results equivalent to "no cable attached'. In multiple access mode, all terminals are granted receive access to the host serial port but the right to transmit is granted to only one terminal at a time. Both modes should support standard application software without modification despite the occurrence of multiplexing.
- The terminal/cradle should be implementable in a vehicle configuration as discussed above.
- It is proposed to use IrDA (Infrared Data Association) compatible optics for the zero insertion force interface to allow use of the terminal with readily available (non-dedicated) IrDA compliant peripherals and host computers.

Solutions to the various points are discussed below.

### Solution 1

Each terminal comprises two pairs of optics (two transmitters and two receivers) as does each cradle. Accordingly two full duplex datapaths are provided. Each cradle contains a microprocessor plus two pairs of optics per slot (for receiving a terminal). In this four slots design, a single microprocessor handles all four slots. The primary optical channel between the cradle and a terminal carries the data part of a full IBM-PC compatible 9 wire series interface, for example TXD, RXD and SG. The auxiliary optical channel between the cradle and a terminal carries control information (DTR and RTS), status information, (DSR, DCD, CTS, RI) of a full IBM PC compatible 9 wire serial interface and bus information (BREQ and BACK).

The data interface is gated between the optics and the RS-232 by the cradle. The control and status information is communicated over the auxiliary optical channel. Within the terminal itself, control, status, and bus information are used to produce the effects of single or multiple access mode as required.

Multiple 4 slot cradles could be chained together (up to 4 physical cradles, for 16 slots). The bus signals (BREQ and BACK) are passed as "tokens" from one cradle to the next to provide inter-cradle multiplexing.

The BIOS of the hand-held computer implements the cradle protocol and provides both IBM PC-compatible serial BIOS services and a proprietary extended serial BIOS service set. Since few, if any, IBM PC-compatible serial communications program use either set of BIOS services (instead of going directly to the hardware), communications via the cradle cannot support standard communications applications. Since this is also true of the physical serial port this is not a particular hardship. A single slot version of these cradles has all the same functionality of the 4 slot versions except it does not support chaining. Since only one slot is present and the chaining logic is not required, the hardware design is somewhat simpler. The two optical channels are handled identically, however, and the terminal BIOS code is the same.

An alternative single slot configuration is simplified and does not include chainability or an optical interface. A modular (phone jack) style of connector can be used to provide either cabled serial communications (via an adapter cable) or can be used as the cradle "docking" connector, which provides a wired path for both of the data channels that are normally optical.

To improve IBM PC-compatibility an alternative approach can be used to emulate the IBM PC serial communications interface. This involves "bridging" the control and status information (conditioned as appropriate based on bus information) between the auxiliary optical channel and the "emulated" UART registers. This bridging is done using a special "Super-State" mode of the Chips and Technologies F8680 microprocessor in the terminal. Since all software in this device runs in real-mode, most "well-behaved" IBM PC-compatible serial communications programs could be used.

One solution to reduce the cost of multiple cradle installations is eliminating the microprocessor in all but one (the "master") of the cradles in each "chain" of up to for example 60 cradles.

In order to meet all of the common requirements for cradles (especially chaining), a method for synchronising access to the cradle bus from multiple hand-held computers, without a processor in each cradle, is required. The mechanism can be a variant of CSMA/CD (Carrier Sense Multiple Access / Collision Detection). In this matter, the processors in the hand-held computer themselves, with the co-operation of the single processor in the "master" cradle, manage all required bus control.

Unlike the above variants a single data channel is used, thus freeing up a UART on the terminal and reducing the number of optic pairs in a terminal + cradle combination from 4 pairs to 3 pairs (2 transmitters and a receiver in the cradle and 1 transmitter and a receiver in the terminal). The third pair (a transmitter in the cradle and a receiver in the terminal) is required to allow the Carrier Sense and Collision Detection.

To allow for interchaining with different cradles, a switch on the "master" cradle is used to select which type of emulation to support. This feature allows a chain of cradles to be placed at the end (farthest from the host) of a different free cradle chain.

To provide I BM PC-compatibility, an approach similar to that discussed above is used to emulate the IBM PC serial communications interface. Since no direct data channel is available (since there is only a single data channel), data, control, and status information must travel on the same channel. This requires that the "emulation" be more complete.

The emulation is done using support hardware in the terminal ASIC interface and control. This involves using I/O register traps to generate NMI (non-maskable interrupts) to allow the cradle support software to emulate the results of application accesses to the UART registers. Using an open system based on the 486 processor, intended to run protected mode software such as DOS extenders and Windows (trade mark), the potential number of interactions with the cradle support software is effectively infinite.

In a further cradle approach a modular (phone jack) style of connector is used to attach a serial adapter cable to attach to the cradle. The cradle, however, simply passes the signals through to the cradle serial port connector. Since the serial port is IBM PC-compatible, the cradle is as well.

Where the device and its cradles do not support internal battery charging, the cradle is effectively reduced to a "port replicator" or "cable extended" and a stand.

As a further development is it proposed to make full use of IrDA capability, in particular using [rDA for wireless communication and using the same IrDA optics as the cradle interface to avoid to unnecessary duplication of hardware.

Using IrDA 9 wire emulation mode (called IrCOMM) to the standard protocol stacks designed for this type of application allows the cradle to be an IrDA+IrCOMM to RS-232 converter with multiplexing. The multiplexing could be relatively simple (i.e. the "token" passing scheme discussed above), hence it can be implemented in hardware as an ASIC. Alternately, the multiplexing could be performed by the processor needed to run the IrDA protocol stack and IrCOMM layer.

Adding a processor to each cradle may still be more efficient than putting different sets of optics on each hand-held computer. Since the IrDA optics are half duplex, they cannot easily be used in central constant cradle schemes. Use of the IrDA+IrCOMM standard protocol stack layers is the logical method of using these optics. In the cradle, since these protocol layers must be converted into RS-232, a processor is mandatory.

Within the terminal, emulation of an IBM PC-compatible serial port is still required. An approach similar to that discussed above could be used to "wrap" the IrDA and IrCOMM interfaces and make them look like a standard COM port. Alternately, to avoid the software interactions that the emulation approach experienced, it is possible to add another microprocessor (such as an 8031) to the hand-held computer itself. This processor would then emulate the "hardware" interface of the UART and run the IrDA+IrCOMM layers. This approach would eliminate any possible software incom-patibilfties.

It is further desired to develop a subsystem for use in a terminal that complies both with external standard such as IrDA and any dedicated internally determined standards. The subsystem must be capable of communicating with other internal standard or IrDA equipped computing devices, with internal standard and/or IrDA, and must be suitable for use in the implementation of non-physical connection cradles. These cradles must be capable of providing emulation of a full RS 232 serial port (with and without cradle chain) A suitable system covers the functionality of the subsystem, the hardware and software needed to implement the subsystem (both at terminal and cradle portions) and the design, implementation, interface and the characteristics of the subsystem and identifies the functional hardware and software requirements for the complete internal standard/IrDA subsystem (both the terminal and cradle portions).

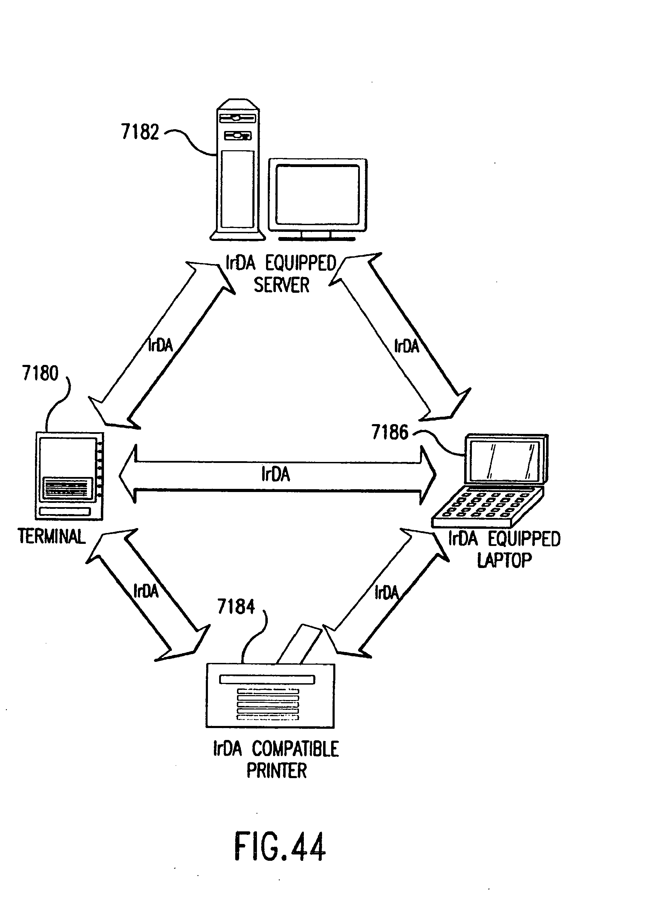

Referring to Figs. 44 to 51 the wireless communications strategy for the system is based on two fundamental physical communications technologies: IrDA (Infra-red Data Association) and a dedicated proprietary internal standard arranged to eliminate peripheral cables. IrDA is open systems standard. For both the same communications protocols (IrLAP, IrLMP, TinyTP and IrCOMM) will be used to allow transparent inter-operation amongst the two interfaces in a system equipped with both.

Both technologies can be used in any or all of the following three operational modes: Point-to-multipoint "Air Network" mode, Point-to-point "Serial Port Emulation" mode, and mufti-point to point "Chainable Cradle" mode. The system provides for one or more of the following configurations as shown in Table 1:

**TABLE 1**

| **Configuration Name** | **Technology Used** | **Mode Used** |
|---|---|---|
| Vehicle Cradle | Internal Standard and/or IrDA | Serial Port Emulation |
| Depot Cradle | Internal Standard | Chainable Cradle |
| IrDA Peripheral | IrDA | Air Network |

Supporting the combination technologies provides optimal connectivity and flexibility. IrDA provides fairly high bandwidth (115.2 K Baud), line-of-sight, short range (sub-meter), low power communications, plus compatibility with industry-standard IrDA peripherals. The internal standard provides a lower bandwidth (19.2 K Baud), omnidirectional, medium range (3-6 meters), higher power communications. By providing a single integrated solution that supports the two technologies and allows them to be used interchangeably, the system should maximize the potential for wireless connectivity.

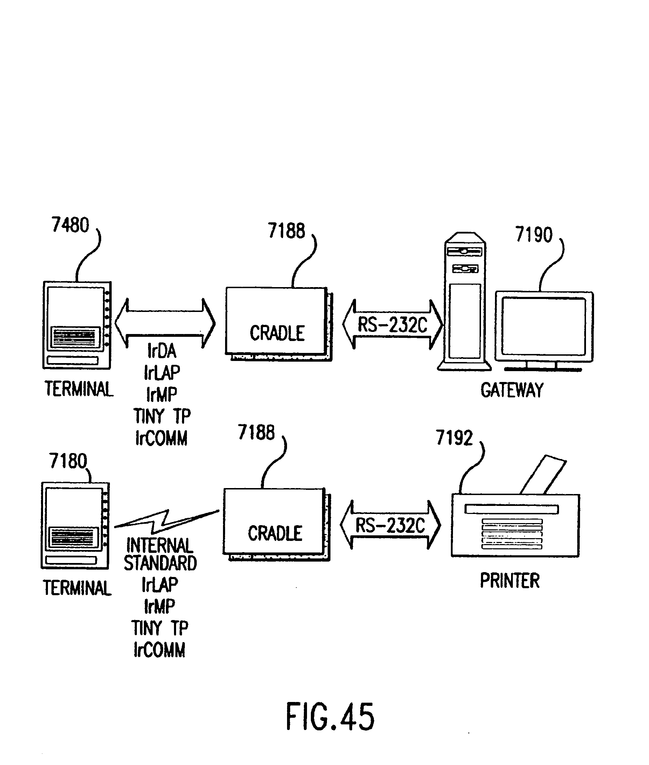

Fig. 44 shows an IrDA "air" network allowing IrDA wireless communication between a terminal 7180 and each of an IrDA equipped server 7182 and an IrDA compatible printer 7184, IrDA communication between IrDA equipped lap-top or other portable computer 7186 and each of the server 7182 and printer 7184, as well as IrDA communication between the terminal 7180 and the lap-top 7186. In Fig. 45 serial port emulation is shown for IrDA and/or internal standard technology. A terminal 180 communicates with a cradle 7188 by IrLAP, IrLMP, TinyTP and I rCOMM and either of IrDA or the internal standard technology. Where IrDA technology is used the cradle 7188 communicates with a host/server gate way 190 via a RS-232 C interface. Where the system uses the internal standard technology the cradle 7188 communicates with a printer 7192 via a RS 232C interface.

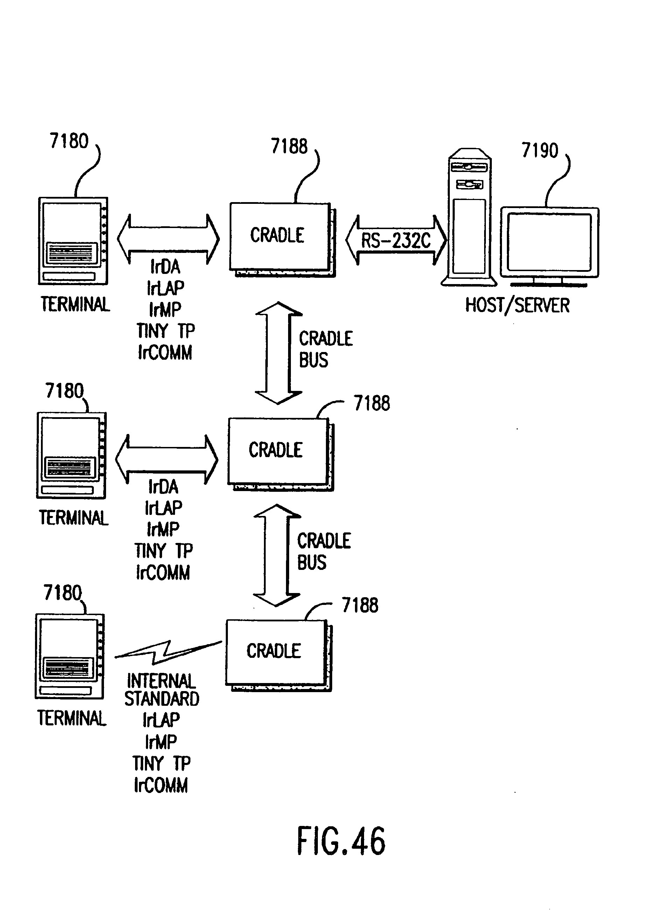

The IrDA and/or internal standard technology chained cradle shown in Fig. 46 includes communication between a plurality of terminals 7180 and respective cradles 7188 communicating by either of IrDA or internal standard technologies together with IrLAP, IrLMP, TinyTP and IrCOMM. The cradles communicate with each other via a cradle bus and a master cradle communicates with a host/server 7190 via an RS 232C interface.

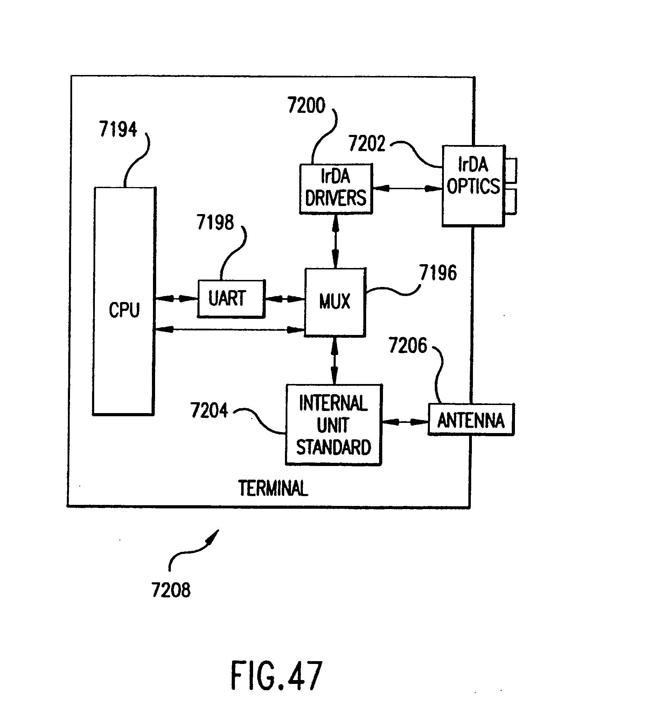

In the in-terminal hardware design with IrDA and internal standard shown in Fig. 47 a CPU 7194 communicates with a multiplexer 7196 directly and via a UART 7198. The multiplexer 7196 communicates via IrDA drivers 7200 with the IrDA optics 7202 and via an internal standard specific unit 7204 with an antenna 7206. The terminal as a whole is designated 208.

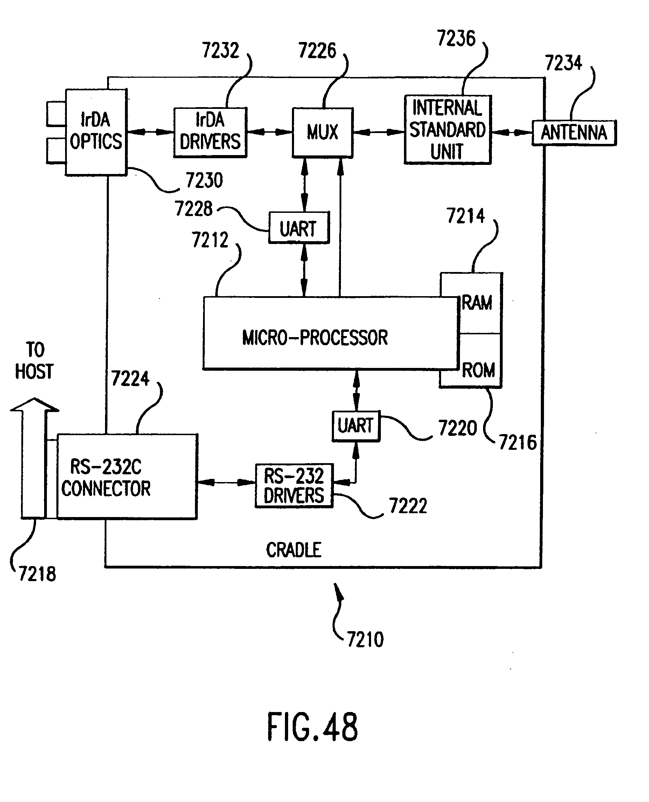

Referring to Fig. 48, a cradle 7210 incorporates the serial port emulation hardware design with IrDA and the internal standard cooperates with a microprocessor 7212 having RAM memory storage 7214 and ROM memory storage 7216 at its core. The microprocessor 7212 communicates to the host (shown schematically at 7218) via a UART 7220, an RS 232 driver 7222 and an RS 232 connector 7224. The microprocessor 7212 communicates with a multiplexer 7226 directly and via a UART 7228. The multiplexer 7226 communicates with IrDA optics 7230 via IrDA drivers 7232. The multiplexer also communicates with an antenna 7234 via an internal standard unit 7236.

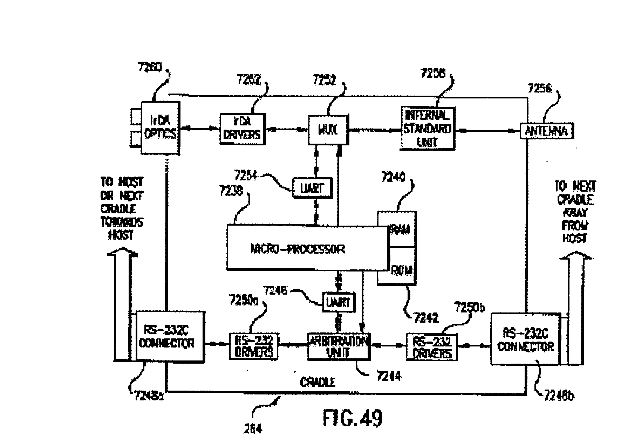

Referring now to Fig. 49 a chainable cradle design with IrDA and internal standard technologies comprises a microprocessor carrying RAM memory storage 7240 and ROM memory storage 7242. The microprocessor 7238 communicates with an arbitration unit 7244 directly and via a UART 7246. The arbitration unit arbitrates between the communication to the next cradle away from the host and communication to the host or the next cradle towards the host. The arbitration unit 7244 in either case communicates with a dedicated RS 232C connector 7248a,7248b via a dedicated RS 232 driver 7250a,7250b. The microprocessor also communicates with a multiplexer 7252 directly or via a UART 7254. The multiplexer allows communication with an antenna 7256 via an internal standard unit 7258. The multiplexer 7252 also communicates with IrDA optics 7260 via an IrDA driver 7262. The cradle is shown generally at 7264.

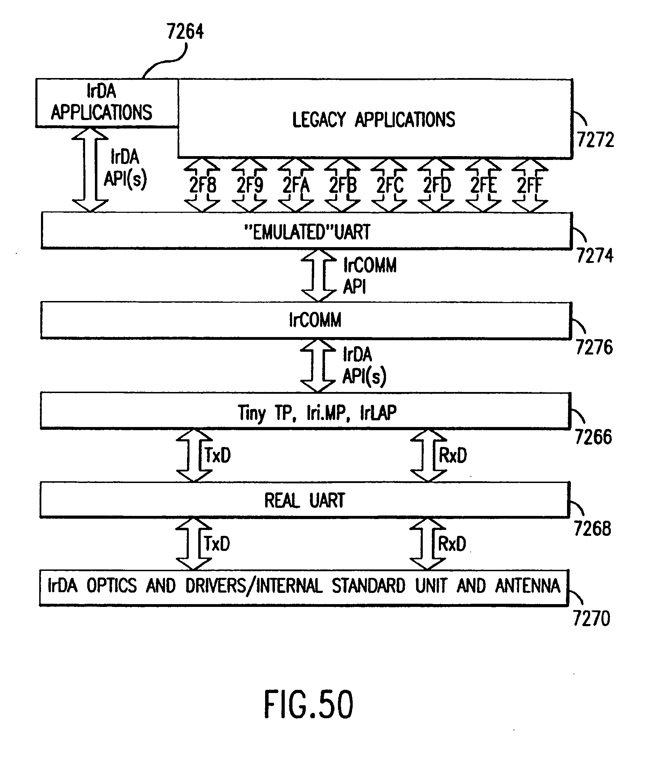

The software data/control flow within the terminal is shown schematically in Fig. 50. The IrD applications 7264 flow via TinyTP, IrLMP, IrLAP 7266; Real UART 7268 and the IrDA optics and drivers or internal standard units in antenna 7270. Legacy applications 7272 flow via emulated UART 7274; IrCOMM 7276 and then follow the same path as the I rDA applications.

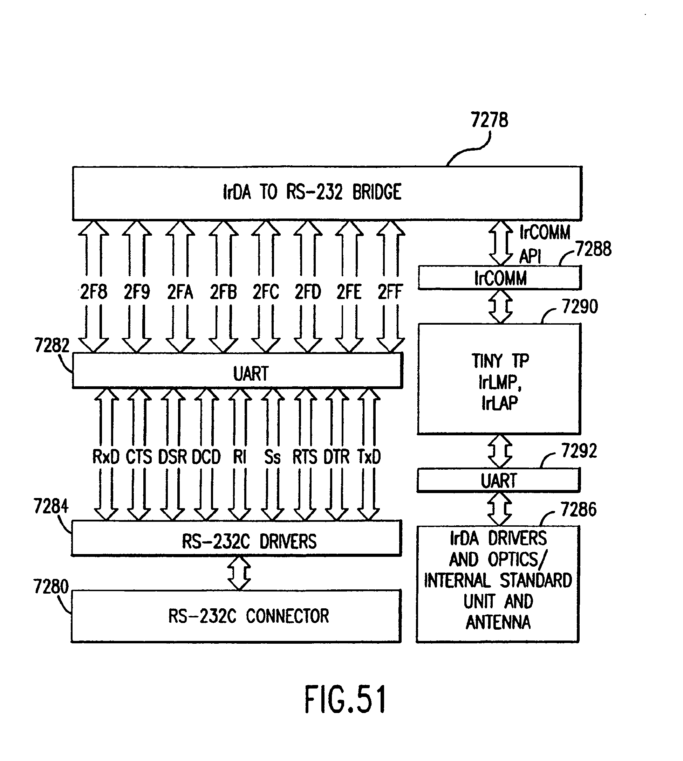

Fig. 51 shows software data in control flow within the cradle. Flow from IrDA to RS 232 bridge 7278 - RS 232C connector 7280 is via UART 7282 and RS 232C drivers 7284. Data flow IrDA to RS 232 bridge 7278 - IrDA drivers and optics/internal standard unit and antenna 7286 is via IrCOMM 7288; TinyTP, IrLMP, IrLAP 7290 and UART 7292.

Many client devices are configured to receive an adapter card allowing them to perform network access. The components of such devices and adapter cards are well known to the skilled person and will not be described in detail here. One example of a network adapter is the system sold under the trade mark SPECTRUM 24 by the assignees of the present application.

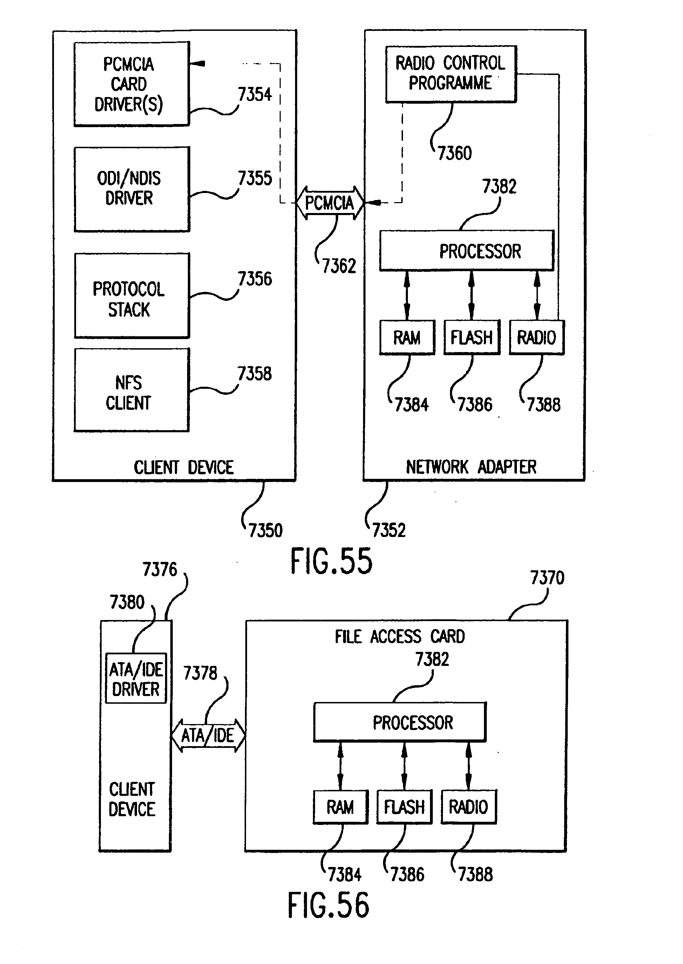

In known systems such as that shown in Fig. 55 it is often desirable for a Client Device to perform Network File Access using Network Files System Clients (NFS) via Network Protocol Stacks on Network Adapters. To accomplish this, the Client Device 7350 must generally utilize a PCMCIA slot to hold the Adapter Card 7352. Additionally, various Software Components, such as a PCMCIA Card Driver 7354, Protocol Stack 7356, and Network File System Client 7358, must all be present and executing on the Client Device.

For small, low cost Client Devices, the secondary storage needed to hold these Software Components may be large compared to the total secondary storage capacity of the device. Additionally, the RAM required to execute these Software Components may be large compared to the total RAM capacity of the device. Finally, the processing power required to execute these Software Components may be large compared to the total processing power of the device.

Since many of these Software Components may need to be Client Device-specific, configuration and deployment of Network File Access on various Client Devices may be difficult. Additionally, the secondary storage required to hold the required Software Components may require the use of a second PCMCIA slot, which may not be practical or desirable depending on the capabilities of the Client Device. Finally, the configuration and maintenance of a network can be very difficult and time consuming.

The client device and network adapter card interface via a PCMCIA interface 7362. In the case of the existing Adapter Card 7352, the software consists of an autonomous radio control program 7360 with an interface 7352 to the ODI or NDIS driver 7355 in the Client Device.

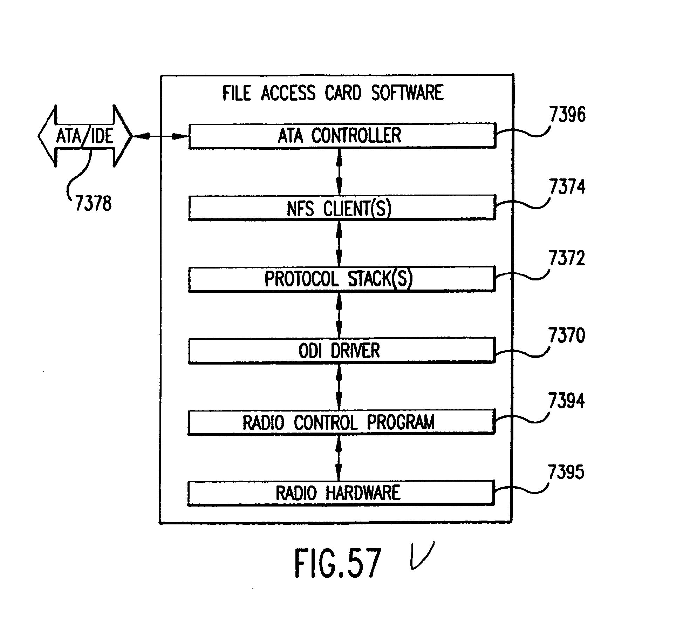

The invention as shown in Fig. 56 and 57 incorporates the functionality of the Network Adapter Card 7370 into a System which also includes Network Protocol Stack(s) 7372 and the NFS Client(s) 7374. The entire System is then packaged into a PCMCIA card that emulates a standard PCMCIA ATA card. This allows any Client Device 7376 which is capable of accessing a PCMCIA ATA card to transparently access files from a File Server. Since the only interface between the Client Device and the System is the ATA/IDE interface 7378, the Client Device need have only an ATA/IDE driver 7380 NOT a network adapter driver, Network Protocol Stack(s), and NFS Client(s).

The File Access Card 7370 consists of a Processor, RAM, Flash and a conventional radio 7388 for example of the type sold number the trade mark SPECTRUM 24 by the assignees of the present invention. This is basically the same design as the existing Adapter Card.

The fundamental difference in the proposed solution is the software running on Processor 7382. The interface to the Client Device ODI or NDIS driver is replaced by a direct interface to an ODI driver 7390, one or more Protocol Stacks 7372, and one or more NFS Clients 7374, all within the File Access Card 7370 itself. All of these Software Components then run on the Processor 7382 in the File Access Card 7370. The software necessary to emulate an IDE disk drive is present to provide the interface to the Client Device.

The software further includes a Radio Control Program 7394 unchanged from standard Radio Control Programs except that instead of interfacing to an ODI driver in the Client System via the PCMCIA interface 7378, it interfaces directly to the ODI driver 7390 running in the same processor within the File Access Card 7370. The Protocol Stack (s) 7372 and NFS Client(s) 7374 load on top of the ODI driver 7390 in a similar manner to the way they would on a Client Device. The ATA/IDE controller software 7396 must emulate the ATA/IDE interface 7378 and use the services of the NFS Client(s) 7374 to access the files on the NFS server in response to Client requests via the ATA/IDE interface 7378 to access the emulated disk.

In order to support multiple Protocol Stacks 7372 and NFS Clients 7374, the File Access Card 7370 must either have multiple Protocol Stacks and NFS Clients, with a mechanism to select which one to use, or must provide a means for loading the desired Protocol Stack and NFS Client.

The File Access Card 7370 further includes suitable Radio Hardware 7395.

The Conventional Adapter Card Drivers require certain parameters (such as Net ID) to be specified. A mechanism must be provided for specifying these parameters. Additionally, Protocol Stacks 7372 and NFS Clients 7374 typically require setup parameters (such as IP address, log on name, password, etc.). A mechanism is provided to specify this information.

Numerous solutions to the problems of loading/updating Protocol Stacks 7372 and NFS Clients 7374, and setting parameter information can be devised. Since the hardware implementation contains Flash Memory 7386, this is the obvious place to store these varying types of data. One method is to use a portion of the Flash memory 7386 to emulate a disk (in the same manner used by a normal ATA Flash Card). This disk contains the standard Protocol Stack 7372 and N FS Client Files 7374, as well as the configuration files (NET,CFG, PCTCP. INI, etc.) used to configure the Protocol Stacks and NFS Clients. All of these files are located in the root directory or in subdirectories of the ATA drive, and all are physically stored in the Flash memory 7386 of the File Access Card 7370. To reconfigure or reload the Protocol Stacks 7372 and/or NFS Clients 7374, the Client Device need only edit or copy files within the Flash memory via the ATA driver.

In order to allow access to both the local Flash memory 7386 of the File Access Card 7370 and the files on the File Server using the same interface, the File Access Card ATA Controller 7396 must merge the files from the File Server into the disk it is emulating. The simplest way to do this is to treat each File System mounted via the NFS Client 7374 as a subdirectory in the emulated drive. By limiting the File System names to 8 characters, the name of the File System can also be the name of the subdirectory (off the root of the emulated ATA drive) that is used to access that File System.

When accesses are made to the sectors containing the directory information for a File System, the ATA 7396 controller must obtain the current directory information from the File System via the corresponding NFS Client 7374, construct the directory sectors accordingly, and make them available to the Client Device (via the ATA interface 7378). When accesses are made to the data sectors referenced by the directory sectors, the ATA Controller 7396 must obtain the data for the accessed files via the NFS Client 7374, create the data sectors, and make them available to the Client Device.

If the File Access Card 7370 has sufficient Flash memory 7386, it may make sense to cache sectors of directory or data so that frequent accesses by the Client Device execute faster. This must be balanced carefully to trade off quick access with accurate data. Since the files on the mounted File system may be accessible by other Clients, they are not guaranteed to remain valid once they have been cached in the File Access Card 7370. Adjustments to allow the Client Device to control the behaviour of the caching logic would be necessary. This information can be stored in a configuration file along with the other parameterization information.

Security issues may arise due to the need to store log on names, passwords, etc. within the Flash memory 7386 of the File Access Card 7370. As this information now travels with the card and, being portable, may represent a security breach, it is possible to use various encryption techniques to secure the configuration files from unauthorized browsing. The File Access Card 7370 needs to make a temporary, unencrypted copy of this file for the use of the Protocol Stack (s) 7372 and NFS Client(s) 7374 whilst it is starting up. Once it is running, this temporary copy can be removed. So long as this temporary copy is not accessible to the Client Device it does not represent a security breach.

Data integrity issues may arise due to the need to power cycle the File Access Card 7370 when used in portable Client Devices. Additionally, any time the card is removed from the Client Device, it loses power. The design of the ATA controller 7396 must ensure that a write is completed fully or not at all. This is a standard design constraint of Flash memory-based ATA controllers. The File Access Card 7370 must take this precaution one step further. A write cannot be considered complete until it has been successfully propagated to the File Server. Any local caching performed within the File Access Card 7370 must synchronize with this all-or-nothing write behaviour.

The File Access Card 7370 must establish/reestablish connections and mount/remount File Systems automatically whenever power is applied to the card. This may take a significant length of time and access to the card may need to be delayed until this processing is complete. This is already possible with ATA cards, where the time needed to 'spin up' a hard disk may be significant. The ATA/IDE 7378 interface provides the mechanism necessary to delay access to the card until it is ready. Furthermore, when accesses to card data require NFS activity to get the data, individual accesses may be quite slow The same mechanisms described previously can be applied to hold off the Client Device until data is available.

Since the File Access Card 7370 must contain essentially the same hardware and firmware as a standard Adapter Card, it could also be designed to operate as such an Adapter Card. This would, of course, require the Adapter Card Driver and Protocol Stacks to be present in the Client Device. This would allow the card to be used as either a File Access Card or a standard Adapter Card interchangeably (although not at the same time).

It is also possible to create a custom communication layer between the Client Device and the File Access Card 7370 that replaces the standard network layers that would normally be present on the Client Device. Since the File Access Card 7370 contains the ODI driver 7390 and Protocol Stack(s) 7372, there is no need to duplicate these components in the Client Device. The application interface to the network can be reimplemented to use this custom communication layer, instead of talking directly to the Protocol Stack(s) 7372. The end result is that Client Device applications can utilize network services without actual Protocol Stacks 7372 executing on the Client Device. Suitable application interfaces will be well known to the skilled person and are not described further here. For example the interfaces available under the trade marks BERKELEY SOCKETS or WINSOCK would be appropriate.

Using the above approach it is then possible to permit direct access to network services (e.g. via application interfaces) concurrently with access to File Server files. This would require, of course, that the File Access Card 7370 possessed sufficient computing capabilities to support emulation of the ATA/IDE interface 7378 and support the custom communications layer at the same time.

The above described arrangement gives rise to a number of advantages in applications. For example the invention provides support for wireless access to files on file servers from any Client Device such as a PCMCIA slot and supports access to ATA cards. Client Device specific protocol stacks or NFS Clients are not required. At the same time simplified configuration for access to NFS File System is allowed. Once a card has been configured for use with a given set of protocol stacks, NFS Clients and File systems it can be freely moved from Client Device to Client Device with no change in configuration required. Because no protocol stacks or NFS Clients need to be present on the Client Device reduced memory and secondary storage requirements for Client Devices are achieved, allowing yet thinner clients. The protocol stacks and NFS Clients run in the File Access Card processor rather than in the Client Device providing consistent performance across multiple Client Devices. There is also potential reduction in the number of PCMCIA slots required to support a given application. Since all software components required to support file server access are present on the same card, many client devices may avoid the use of additional PCMCIA storage cards. This may allow Client Devices with only a single available slot to access file server files successfully.

According to another aspect there is provided an embedded storage device for use in an embedded PC-based system allowing a single standard storage solution supporting directly executable storage (e.g. BIOS) and secondary storage (e.g. disk) with field upgrade ability, suitable for use in all PC-based embedded computing systems. Hereafter the embedded storage device is simply called the Device and the embedded PC-based computing system is simply called the System.

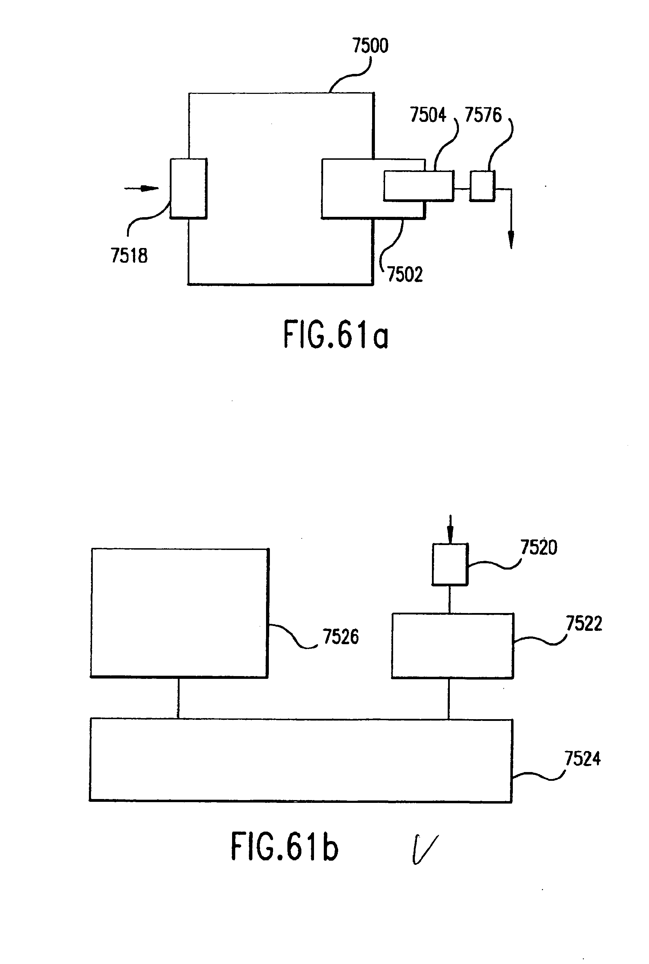

One implementation of the invention is in relation to a "portable server", that is, a mobile terminal carrying server capability as described in more detail in copending US Application Serial No. filed 28th March 1997 commonly assigned herewith, which is incorporated herein by reference. As shown in Figs. 60a, 60b, 61a and 61 b, web server capability can be implemented in a plug-in card, for example a PCMCIA card. A mobile device 7500 which can be any suitable mobile device such as a terminal of the type discussed above, personal digital assistant, digital camera and so forth including a card interface port 7502, for example a PCMCIA or compact flash slot receives a card 7504 at the interface. The card 7504 carries server capabilities for example for the internet or worldwide web and the system thus acts as a transparent web server. Referring in more detail to Fig. 60b, the card 7504 includes a PCMCIA or other suitable interface for communication with the mobile device 7500, flash memory 7508 and an ATA (AT attachment) controller 7510 used to implement the hard drive. The memory 7508 is for storing data produced by the mobile device and the card 7504 further includes a CPU 7512 which accesses the data and operates a web server software routine. The CPU 7512 is configured to run a suitable radio communications module 7514, for example of the type available from the assignees under the trade mark "SPECTRUM 24 RADIO". CPU 7512 is also configured to handle the TCP/IP protocols. The mobile device 7500 carrying the card 7504 is thus able to communicate with a suitable nearby access point and then to a client PC via aerial or antenna 7516.

As a result the client PC can display a web page representative of data stored in the memory of the mobile device as desired. The card 7504 can thus convert any device, as discussed above, into a server for the web. This is shown in more detail in Figs. 61 a and 61 b. The mobile device 7500 collects data at a data collection point 7518 which can be, for example, a still, video or digital camera, a bar code reader, a microphone or a data input point such as a keyboard. The data is stored, for example in the card 7504 making use of the ATA controller 7510. The card 7504 cooperates with the device 5700 to act as a transparent web server and transmits the data from the card 7504 via the antenna 7516. The transmission is received by an antenna 7520 to an access point 7522 connected to the Ethernet backbone 7524. Connected to the backbone 7524 is a client PC 7526. Accordingly when, for example, a worldwide web browser of any suitable type is run on the client PC 7526 and calls up the "web page' at the mobile device sending an HTTP request for the desired Universal Resource Locator (URL) the request is routed via the backbone 7524 and acts as point 7522 to the transparent web server formed by the device 7500 and card 7504. The data collected at the mobile device is transmitted back to the access point in response to the request and the web page is routed to the client PC 7526.

Turning to the physical requirements of the Device:

The Device is implemented in one of two physical embodiments: Modular and Component.

The Modular embodiment of the Device consists of a single, self-contained circuit board (or equivalent) which can be mounted on a circuit board (or equivalent) within the System. The subsystem implemented by the Component embodiment shall interface to the remainder of the system via the set of interface signals described below.

Modular embodiments of the Device interface to the System via a standard connector of suitable type. This connector provides the set of interface signals described below. Additionally, this connector is low cost, low profile, and highly immune to shock and vibration. This connector is not intended to be used for frequent insertion and removal, since this aspect is concerned with embedded, non-removable applications.

All embodiments of the Device interface to the System via the same set of interface signals. These signals represent a subset of the ISA bus signals, the additional signal(s) required to interface to a standard BIOS EPROM, plus signals used to control Device options. The set of required signals is listed below.
- Power signals, for example
   +3.3 Vdc,
      +5Vdc,
      +12Vdc,
      Ground for various applications.
- Control signals, for example clock, data transfers, valid address, valid data, zero wait state for current bus cycle, oscillar clock signal, reset-return to default state and prepare for normal XIP and Disk operations. If necessary, the Device can drive this line to keep the system in reset state until its own reset is complete, I/O device read strobe command,
   I/O device write strobe command,
   memory read strobe command,
   memory write strobe command signal to the system that the current I/O or EPROM memory cycle must be extended.
   This signal must be used in accordance with the performance requirements described below, signal to the System that a 16 bit EPROM memory cycle is required. This signal must not be used by the Device unless the USEMEM 16 signal is present indicating that the System is capable of and willing to participate in 16 bit EPROM memory cycles.
   Indicate to the System that a 16 bit I/O cycle is required. This signal must not be used by the Device unless the USE1016 signal is present indicating that the System is capable of and willing to participate in 16 bit I/O cycles.
- EPROM Control Signals for example:
   Indicate that the System is accessing the XIP section of the Device. This signal is generated by address decoding logic in the System and is presented after the appropriate address lines are valid. Indicate to the System that the XIP section access is complete and that the XIP section data is available on the data lines. If this does not occur within a single cycle, the Device must use the IOCHRDY signal to initiate extended wait cycles.
   Indicate to the System that the XIP section is ready for access by the System. This signal shall be activated after the initialization process instituted by the RESET signal is completed. The System shall not access the XIP section following RESET until this signal is activated by the Device.
   Indicate that the System grants permission to the Device to update the contents of the IPL subsection of the XIP section. When this signal is not present, the IPL subsection contents must not be modified (even if the appropriate commands are sent to the Device by the System).
- Device Option Control Signals including:
   Indicate that the system wishes the Device to enter its lowest power state as soon as possible. Power consumption and timing requirements are described below Once in suspend state, the Device need not support XIP or Disk accesses until this signal is deactivated and the Device has resumed operation (indicated by deactivating the SUSPSTATE signal).
   Indicate to the System the current suspend state of the Device. If the Device is currently in suspend state, this signal will be active, otherwise it will be inactive.
   Indicate that the System grants permission to the Device to use full power at will. Full power operations performed at the discretion of the Device (e.g. background operations), are only allowed when this signal is active. Full power is always permitted to be used by the Device during an explicitly requested XIP update or Disk write operation, regardless of the state of this signal.
   Indicate to the System that the Device is currently using full power. This signal need only be set when the previous signal indicates that the Device is permitted to use full power in the background and when the Device is actually doing so. This signal may also, but is not required to, be used to signal use of full power during an explicitly requested XIP update or Disk write operation.
   Chip select signal for IDE to addressee.
   Drive Active/Salve Present signal used by a Slave IDE device to acknowledge the Master IDE device during initialization.
   Signal used by the System or the external configuration fixture to indicate that the Device may be reconfigured and that the 5 and 12 volt supplies are available. The configuration of the Device shall not be changed (even if the appropriate commands are sent to the Device by the System) unless this signal is present.
   Indicate that the System is capable of executing 16 bit I/O cycles and is willing to interact with the Device using such cycles. The Device decides whether to use 8 and 16 bit cycles and indicates the choice to the System via the appropriate signal.
   Indicate that the System is capable of executing 16 bit EPROM memory cycles and is willing to interact with the Device using such cycles. The Device decides whether to use 8 and 16 bit cycles and indicates the choice to the System via the MEMCS16 signal.
- Address Signals, for example
   To address the [up to 256K of the] XIP section of the Device, the System.
   If an implementation of the Device chooses to expand the size of the XIP section beyond 256 KB, additional address bits may be used to address the extra memory. The Device can assume that ALL address bits are valid when the appropriate signal is present. The design of a System using the Device must therefore ensure that the appropriate signal generation takes into account the upper address bits. If a System were to generate that signal any time the lower address bits contained the right values, without regard to the upper address bits, then the Device might access memory other than the intended XIP section.
- Data Signals, for example
   When the appropriate signal indicates the need for an 8 bit memory cycle, then only a first range is used. If the signals indicate the need for a 16 bit memory cycle, then the first range is used, but the latter range may only be used after signals indicates the readiness of the upper data lines.
- Interrupt Signals, for example
   IRQ signal supported by the Device. It is used only for IDE interface emulation. This signal may be connected to any available System IRQ line, but for compatibility, it is suggested that it be tied to the standard hard disk interrupt.

All programming voltage(s) required to access the storage within the Device are generated within the Device from either a single 3.3V or a single 5V supply voltage. A System need only provide one of these supply voltages, but may optionally provide both. The Device must be capable of obtaining its normal operating power from either supply. These supply voltages are provided via the standard Device interface described above.

The Device shall constrain its operation to conform to one of three power states as determined by the two Device option control signals discussed above. For example the signal may indicate that the Device should enter its lowest power mode and not respond to XIP or Disk section accesses or that the Device is free to use full power at its own discretion.

In the absence of either signal, the Device shall support all access operations, but must perform higher power operations (such as erase) only within the duration of an operation explicitly requested by the System (e.g. XIP update or disk write).

If the Device supports background operation (moving blocks, erasing, etc.) it may only use full power during background operations when the appropriate signal is present and must terminate such background operations if that signal is deactivated.

The Device must be capable of changing states within milliseconds from the time the signal changes. The Device must report whether or not it is in suspend state via the appropriate signal. The Device must report any background use of full power via the appropriate signal.

Table 2 describes the relationships between the power control and status signals and the power limitations for each state:

**TABLE 2**

| State Name | Enter Lowest Power State Signal | Current Suspend State Signal | Full Power at Nil Signal | Device using Full Power Signal | Maximum Permitted Current Load |
|---|---|---|---|---|---|
| Suspend | active | active (within Ims) | don't care | inactive | < 1mA |
| Busy | inactive | inactive | active An explicitly requested XIP update or Disk write operation is in progress | don't care | 50 mA |
| Background Idle | inactive | inactive | active No high power background operation is in progress | inactive | 20 ma |
| Background Busy | inactive | inactive | active A high power background operation is in progress. | active | 50mA |
| Normal Idle | inactive | inactive | inactive No explicitly requested XIP update or Disk write operation is in progress. | inactive (within 1ms) | 20 mA |
| Normal Busy | inactive | inactive | inactive No explicitly requested XIP update or Disk write operation is in progress. | inactive (within 1ms) | 50 mA |

If the Device supports an IDE formatted section, then is shall support the standard Idle and Sleep commands of the ATA specification for controlling the power states of the IDE Disk controller.

Since the Device is intended for embedded applications and especially mobile embedded applications, size is of significant concem. A system design incorporating the Device must balance capacity vs. available space. For example several discrete sizes will be standardized in each of the two embodiments (Modular and Component).

The functional requirements of the Device are as follows:

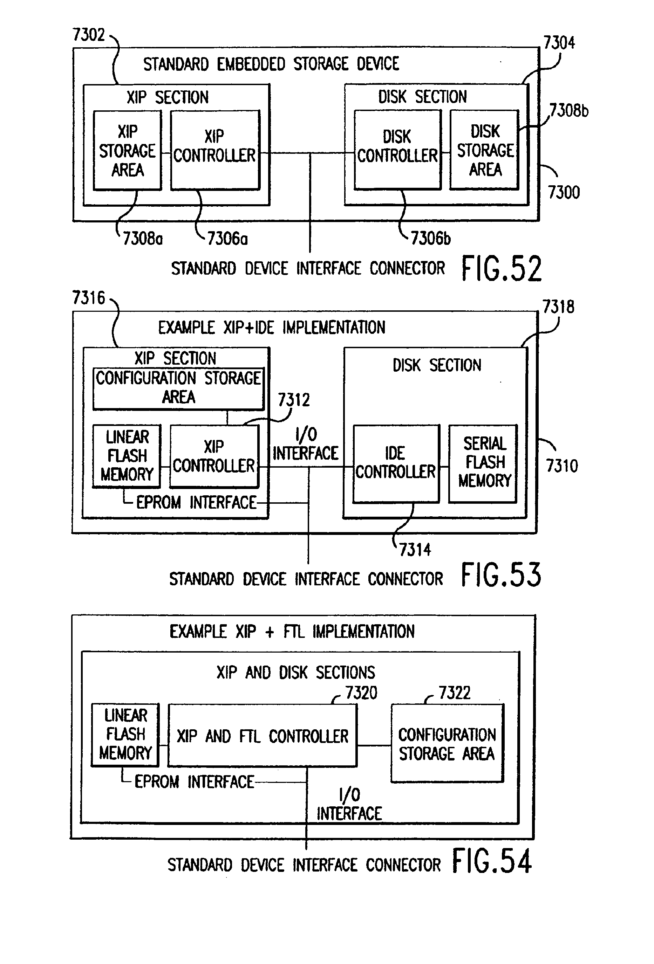

Referring to Fig. 52, a block diagram showing the logical structure of a typical implementation of the Device, the Device 7300 provides support for two storage sections: An XIP (eXecute In Place) section 7302 and a Disksection 7304.

The XIP section of the Device 7304 supports adjustment in size ranging from OKB up to 256KB in 64KB increments.

Larger XIP sections (greater than 256KB) and/or smaller adjustment granularities (less than 64KB) may optionally be supported, but must not prevent compatibility with the above requirements.

The Device contains two logical controllers 7306a,7306b and two logical storage areas 7308a,7308b. Although specific implementations of the Device might combine the functions of the two controllers or storage areas, these terms are used herein to describe the required functionality.

The XIP section 7302 of the Device 7300 is subdividable into 2 subsections: the IPL (Initial Program Loader) subsection and the BIOS (Basic Input/Output System) subsection. For use in a specific System each Device is configured for the use of the required subsection(s).

The IPL subsection of the XIP section of the Device, if configured for use by the System, is 64KB in size and is addressed as the first 64KB of the linear addressable area of the XIP section. If the design of a System requires the IPL subsection to be interchanged with the BIOS subsection, then the System must provide the logic to adjust the address lines supplied to the Device. No XI P section remapping logic is required to be implemented within the Device.

IPL subsection sizes larger or smaller than 64KB may optionally be supported, but must not prevent compatibility with the above requirements.

The BIOS subsection of the XIP section of the Device, if configured for use by the System is adjustable in size ranging from 64KB to 256KB in increments of 64KB. A BIOS size of 256KB is allowed by a Device with a 256KB XIP section only if the IPL subsection is not configured for use. If the design of a system requires remapping of areas of the BIOS, then the System must provide the logic to adjust the address lines supplied to the Device. No XIP section remapping logic is required to be implemented with the Device.

Larger BIOS subsection sizes and/or smaller granularities may optionally be supported, but must not prevent compatibility with the above requirements.

For Modular embodiments of the Device, the partitioning of the Device into the XIP section and the Disk section is possible via a separate external configuration fixture to which the Device is connected via the standard connector described above.

For Component embodiments of the Device the partitioning of the Device into the XIP section and the Disk section is possible either in-circuit or via an external configuration fixture (if the System board itself is equipped with the standard Device connector).

The actual configuration of the XIP section of the Device is accomplished via the standard configuration interface described above.

It is permissible to require 5V (for radio) or 12V supply voltages (in addition to the standard 3.3V or 5V operating voltages) for confiquration purposes only. These supply voltages must not be used except when the appropriate signal is present. This signal identifies that the configuration supply voltages are valid and that Device configuration is permitted. At a minimum, the configuration supply voltages and the signal would be provided by the external configuration fixture via the standard Device connector. The configuration supply voltages and the signal are described above.

The configuration of the Device, once performed, must be stored within the Device in a nonvolatile manner. This may require the use of a separate configuration storage area. Although it is possible to reconfigure the Device in the event of an erroneous configuration, this is considered an infrequent event. It is therefore permissible to limit the number of reconfigurations (to allow use of a limited re-write configuration storage area). In any event, a minimum of for example 100 reconfigurations are supported.

It is possible to detect the capabilities and configuration of the Device. The XIP section capabilities and configuration are determined via the interface described below.

The Disk section of the Device conforms to one of two formats: IDE or FTL. A standard mechanism exists for determining which of the two formats is supported by an implementation of the Device. It is permissible to have an implementation of the Device that supports both formats. In such a case, an additional configuration option must be provided to select the format that will be used as the "primary" or "boot" device. The selection and detection of the disk section configuration is not required to permit read accesses to the XIP section interleaved with accesses to the I/O interfaceof the XIP controller. As a result, the System may not execute from the XIP section while updating or configuring the XIP section via the XIP controller.

A Disk section supporting the IDE format provides a complete emulation of an IDE disk drive and is configurable to operate in any of the following modes: Primary IDE master, Primary IDE slave, Secondary IDE master, Secondary IDE slave. The selection of the mode is determined by the settings of the appropriate signals described above.

The management of the logical disk drive within the disk storage area is performed by the Disk controller within the Device. Access to the logical disk drive is via IDE commands sent to the Disk controller by the IDE driver within the BIOS.

A Disk section supporting the IDE format is configurable to operate in either 8 or 16 bit wide modes. The data width is selected by the System, via the appropriate signal. Although this signal may be dynamically controlled by the System, it would normally be tied high or low depending on the capabilities of the System. When the signal is present, the corresponding signal is used by the Device to indicate to the System that 16-bit accesses are required.

A block diagram showing one possible implementation of the Device with an IDE format Disk section is shown in Fig. 53.

The Device implementation 7310 shown contains separate XIP 7312 and Disk 7314 controllers and separate XIP 7316 and Disk 7318 storage areas. The XIP controller 7312 handles the configuration and updating of the XIP storage area and the Disk controller handles the emulation of the IDE drive using the Disk storage area.

A Disk section supporting FTL format is shown in Fig. 54 in block diagram and provides a standard mechanism for accessing blocks for storage within the XIP storage area. This standard mechanism must be the same regardless of the technology used to implement the disk storage area within the Device and is described below

The Device implementation shown contains a single controller 7320 serving as both the XIP and Disk (FTL) controllers and a single storage area 7322 serving as both the XIP and Disk storage areas. No IDE support is provided, and the XIP and Disk controller functions share common logic.

The BIOS of every System that utilizes the Device must include both IDE and FTL drivers to ensure that all implementation of the Device may be used on all Systems.

The XIP section of the Device emulates 8-bit, byte-addressable read-only linear memory (e.g. equivalent to a similarly-sized EPROM). Address bits sufficient to address up to 256KB are provided by the System to the Device and they are decoded as necessary within the Device. The appropriate signal is provided by the System to the Device to identify that the XIP area is being addressed. Address decoding required to produce the signal from a wider range of address bits is the responsibility of the System.

16-bit EPROM emulation may optionally be supported, but must not prevent compatibility with the above requirements. If supported, the 16-bit EPROM emulation mode shall be enabled by the System via the appropriate signal. Although the signal may be dynamically controlled by the System, it would normally be tied high or low depending on the capabilities of the System. When the signal is present and the Device supports 16-bit mode, then the corresponding signal is used to indicate to the System that 16-bit accesses are required.

The contents of the XIP section of the Device, if configured for use by the System, are updatable, in circuit, via a standardized programming interface. The Device supports the standard XIP section programming interface described below, regardless of the specific technologies used in the implementation the XIP storage area of the Device.

The IPL subsection of the XI P section of the Device, if configured for use by the System is independently protectable from update via a signal hat "protects" or "unprotects" the IPL subsection.

The Disk section shall be updatable, in circuit, via the standard DOS disk driver and the standard BIOS IDE or FTL drivers, regardless of the specific technologies used in the implementation of the Disk storage area of the Device.

The rated storage capacity of the Device is defined to be the size of the Disk section supported by the Device when an XIP section of 256KB has been configured. This should provide a worst case measurement for all implementations.

Although it is permissible for an implementation to extend the size of the XIP area beyond the requirements of this specification, this extra space shall not be considered to increase the rated storage capacity of the Device unless incorporated into the Disk section when the XIP section is configured to a size to 256KB.

The XIP section of the Device provides performance sufficient to allow direct execution of code from the emulated linear memory. Since the Device is interfaced through the ISA bus, the maximum speed of access may be limited where appropriate by the 8MHz ISA bus speed. Use of ISA bus extended wait states (through the use of the appropriate signal) is permitted in the event of delayed access to XIP data, but the maximum number of wait states shall be no more than 10 and the average number of wait states shall be no more than 2.

Although the System may optionally support the ability to "Shadow" the BIOS or other system code from the XIP area into system RAM for improved performance, this must not be required to meet the performance requirements above.

The programming requirements of the Device are as follows.

A special I/O interface is provided by the XIP controller within the Device for determining the capabilities of the Device. This includes, but is not limited to, the following information:
- Granularity of adjustment of XIP section (granule size)
   Specified as an integral number of KB
- Maximum size of XIP section
   Specified as an integral number of granules Must be greater than or equal to 256KB
- IDE format disk section presence flag
- FTL format disk section presence flag
- Size of FTL erase blocks (if FLT format is used) Specified as an integral number of granules

The Device is not required to permit read accesses to the XIP section interleaved with accessed to the I/O interface of the XIP controller. As a result, the System may not execute from the XIP section while updating or configuring the XIP section via the XIP controller.

A special interface is provided by the XIP controller within the Device for determining the current configuration of the Device. This includes, but is not limited to, the following information:
- Current IPL subsection size
   Specified as an integral number of granules
- Current BIOS subsection size
   Specified as an integral number of granules
- Choice of I DE or FTL formatted drive as the "boot" device
   When both are present

The Device is not required to permit read accesses to the XIP section interleaved with access to the I/O interface of the XIP controller. As a result, the System may not execute from the XIP section while updating or configuring the XIP section via the XIP controller.

A special I/O interface is provided by the XIP controller within the Device for selecting the desired configuration of the Device. This includes, but is not limited to, the following information:
- Current IPL subsection size
   Specified as an integral number of granules
- Current BIOS subsection size
   Specified as an integral number of granules
- Choice of IDE or FTL formatted drive as the "boot" device
   When both are present The Device is not required to permit read accesses to the XIP section interleaved with accessed to the I/O interface of the XIP controller. As a result, the System may not execute from the XIP section while updating or configuring the XIP section via the XIP controller.

A special I/O interface is provided by the XIP controller within the Device for updating the contents of the XIP section. This includes, but is not limited to, the following functions:
· Erase IP1
· Write IPL
· Erase BIOS
· Write BIOS
   The Device is not required to permit read accesses to the XIP section interleaved with accesses to the I/O interface of the XIP controller. As a result, the System may not execute from the XIP section while updating or configuring the XIP section via the XIP controller.

When the Disk section supports the IDE format, then the standard I DE command set is supported. The System BIOS IDE driver is used to update the IDE format of the disk section.

When the Disk section supports the FTL format, then a special interface is provided by the Disk controller within the Device for updating the contents of the Disk Section. This includes, but is not limited to, the following functions:
· Erase Block
· Map Block
· Write Block
   The Device permits read accesses to the XIP section interleaved with accesses to the I/O interface of the FTL controller. As a result, the BIOS FTL driver may execute from the XIP section while updating the Disk storage area via the FTL controller.

Without further analysis, the foregoing will so fully reveal the gist of the present invention that others can readily adapt to various applications without omitting features that, from the stand point of prior art, fairly constitute essential characteristics of the generic or specific aspects of the invention and, therefore, such adaptions should and are intended to be compounded within the meaning and range of equivalents of the following claims.

### REFERENCE NUMERALS

- 21 -: mobile unit (from Fig. (9))
- 160 -: enabler development system
- 162 -: host computer
- 164 -: enabler server
- 166 -: enabler application program interface
- 168 -: timer
- 170 -: access point
- 172 -: terminal for 162
- 174 -: host applications
- 200 -: registration
- 202 -: decapsulate
- 204 -: source MAC
- 206 -: destination MAC
- 208 -: broadcast
- 210 -: destination MAC

- 212 -: forward
- 212 -: home AP
- 216 -: create entry
- 218 -: encapsulate
- 220 -: encapsulate
- 222 -: forward
- 224 -: forward
- 226 -: send

## Claims

1. A method of accessing a computer network file having a file address, comprising the steps of:
representing data identifying the file address in a bar code symbol (697);
reading the bar code symbol with an optical reader (690) to produce said identifying data, the optical reader having a display;
downloading the identifying data in real time to a user computer connected to the computer network;
deriving the file address from the identifying data;
accessing the corresponding computer network file and transferring the file by a real time wireless communication to the optical reader; and
displaying a representation of the file on the optical reader display.

2. A method as claimed in claim 1 in which the computer network comprises one of the Internet or an Intranet.

3. A method as claimed in claim 1 or 2 wherein the optical reader (690) is a portable, hand-held reader.

4. A method as claimed in any preceding claim wherein the optical reader comprises a portable Internet browser.

5. An optical reader (1,690) comprising reading means (693) for reading a bar code symbol representing information identifying the file address of a computer network file, wireless communication means for real time wireless communication with a user computer connected to the computer network and a display, in which the reader is arranged to communicate the identifying data to the user computer by real time wireless communication for derivation of the file address, and receive the computer network file from the user computer via real time wireless communication for display of the computer network file.

6. A reader as claimed in claim 5 comprising a pen-type optical reader (690).

7. A reader as claimed in daim 5 comprising a personal digital assistant (710).

8. A reader as claimed in any of claims 5 to 7 comprising a portable Internet browser.

9. A computer network file access system, wherein one or more computer network files each have a dedicated file address, wherein a bar code symbol (697) is provided representing information identifying the file address and a portable terminal (690) comprising a display and wireless communication means is provided to read the bar code symbol for access of the corresponding computer network file in which the portable terminal reads the bar code symbol and downloads the identifying information via real time wireless communication to a user computer connected to the computer network for derivation of the file address from the identifying information and the user computer is arranged to transfer the computer network file to the portable terminal for display

10. A computer network file access system as claimed in claim 9 in which the computer network comprises one of the Internet or an Intranet.

11. A computer network file access system as claimed in claims 9 or 10 in which the optical reader (690) carries user identification information which is downloadable to the user computer (6150) for capture of said user identification information.

12. A computer network file access system as claimed in any of claims 9 to 11 in which the computer network file comprises a website or the Internet.

13. A computer network file access system as claimed in any of claims 9 to 12 on which the bar code symbol (697) represents data that mapped to a URL on the Internet.

14. A computer network file access system as claimed in any one of claims 9 to 13 in which the optical reader comprises one of a pen-type optical reader (690) or a personal digital assistant (710).

15. A computer network file access system as claimed in any of claims 9 to 14 in which the portable terminal (690) comprises a portable Internet browser.
